(19) Europäisches Patentamt
European Patent Office
Office européen des brevets

(11) EP 4 353 759 A1

(12) EUROPEAN PATENT APPLICATION
published in accordance with Art. 153(4) EPC

(43) Date of publication:
17.04.2024 Bulletin 2024/16

(21) Application number: 22820318.8

(22) Date of filing: 09.06.2022

(51) International Patent Classification (IPC):
*C08F 259/08* (2006.01) *C08F 2/44* (2006.01)

(52) Cooperative Patent Classification (CPC):
C08F 2/44; C08F 259/08

(86) International application number:
PCT/JP2022/023337

(87) International publication number:
WO 2022/260139 (15.12.2022 Gazette 2022/50)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 11.06.2021 JP 2021097840

(71) Applicant: Daikin Industries, Ltd.
Osaka-shi, Osaka 530-0001 (JP)

(72) Inventors:
- TAMAI, Rina
Osaka-shi, Osaka 530-0001 (JP)
- MORIKAWA, Tatsuya
Osaka-shi, Osaka 530-0001 (JP)
- YUASA, Sota
Osaka-shi, Osaka 530-0001 (JP)
- TAKEMURA, Kouhei
Osaka-shi, Osaka 530-0001 (JP)
- IRIE, Masaki
Osaka-shi, Osaka 530-0001 (JP)

(74) Representative: Hoffmann Eitle
Patent- und Rechtsanwälte PartmbB
Arabellastraße 30
81925 München (DE)

# (54) PRODUCTION METHOD FOR AQUEOUS FLUORINE-CONTAINING ELASTOMER DISPERSION, COMPOSITION, AND AQUEOUS DISPERSION

(57) Provided is a method for producing an aqueous dispersion of a fluorine-containing elastomer, comprising polymerizing a fluorine-containing monomer in the presence of a compound (A) containing a functional group capable of reaction by radical polymerization and a hydrophilic group, a polymer (I) containing a polymerization unit (I) derived from a monomer (I) represented by general formula (I) : $CX^1X^3=CX^2R(-CZ^1Z^2-A^0)_m$, and an aqueous medium, thereby producing an aqueous dispersion of a fluorine-containing elastomer containing methylene group in the main chain.

EP 4 353 759 A1

**Description**

TECHNICAL FIELD

The present disclosure relates to a method for producing a fluorine-containing elastomer aqueous dispersion, a composition, and an aqueous dispersion.

BACKGROUND ART

Patent Document 1 describes a method for producing a fluoropolymer, comprising a step of carrying out polymerization of a fluoromonomer in an aqueous medium in the presence of a polymer (1), thereby obtaining a fluoropolymer, the polymer (1) containing a polymerization unit (1) derived from a monomer represented by the following general formula (1) :

$$CX_2=CY(-CZ_2-O-Rf-A) \quad (1)$$

wherein X is the same or different and is -H or -F; Y is -H, - F, an alkyl group, or a fluorine-containing alkyl group; Z is the same or different and is -H, -F, an alkyl group, or a fluoroalkyl group; Rf is a fluorine-containing alkylene group having 1 to 40 carbon atoms or a fluorine-containing alkylene group having 2 to 100 carbon atoms and having an ether bond; and A is -COOM, $-SO_3M$, or $-OSO_3M$, where M is -H, a metal atom,$-NR^7{}_4$, imidazolium optionally having a substituent, pyridinium optionally having a substituent, or phosphonium optionally having a substituent, and $R^7$ is H or an organic group, provided that at least one of X, Y, and Z contains a fluorine atom.

Patent Document 2 describes a method for producing a fluoropolymer, comprising emulsion-polymerizing one or more fluorinated monomers in an aqueous medium, wherein the aqueous emulsion polymerization is carried out in the aqueous medium in the presence of at least one radical initiator and at least one multifunctional dispersant [dispersant (D)], and the dispersant (D):

- contains a skeleton chain containing a repeating unit derived from one or more ethylenically unsaturated monomers;
- has a molecular weight and distribution thereof such that the dispersant (D) is substantially free from fractions with a molecular weight of less than 3,000; and
- contains multiple ionizable groups selected from the group consisting of $-SO_3X_a$, $-PO_3X_a$, and $-COOX_a$, where $X_a$ is H, an ammonium group, or a monovalent metal, in an amount of at least 1.75 meq/g based on the weight of the dispersant (D), and

the dispersant (D) is used in an amount of 0.01% by weight and 5.00% by weight based on the total weight of the aqueous medium.

Patent Document 3 describes a method for producing a fluoropolymer, comprising emulsion-polymerizing one or more fluorinated monomers in an aqueous medium, wherein the aqueous emulsion polymerization is carried out in the aqueous medium in the presence of at least one radical initiator and at least one reactive oligomer dispersant [dispersant (D)], and the dispersant (D):

- contains a skeleton chain containing a repeating unit derived from one or more ethylenically unsaturated monomers;
- has a number average molecular weight of at least 3,000 and up to 30,000;
- contains at least one iodine atom or bromine atom; and
- contains multiple ionizable groups selected from the group consisting of $-SO_3X_a$, $-PO_3X_a$, and $-COOX_a$, where $X_a$ is H, an ammonium group, or a monovalent metal, and

the dispersant (D) is used in an amount of 0.01% by weight and 3.50% by weight based on the total weight of the aqueous medium.

RELATED ART

PATENT DOCUMENTS

Patent Document 1: International Publication No. WO 2019/168183
Patent Document 2: Japanese Translation of PCT International Application Publication No. 2020-510737

Patent Document 3: Japanese Translation of PCT International Application Publication No. 2020-512447

## SUMMARY OF THE INVENTION

## PROBLEM TO BE SOLVED BY THE INVENTION

An object of the present disclosure is to provide a method for producing a fluorine-containing elastomer aqueous dispersion, the method being capable of generating a sufficient number of fluorine-containing elastomer particles while greatly suppressing adhesion of the fluorine-containing elastomer to a polymerization tank.

## MEANS FOR SOLVING THE PROBLEM

The present disclosure provides a method for producing a fluorine-containing elastomer aqueous dispersion, comprising polymerizing a fluorine-containing monomer in the presence of a compound (A) containing a functional group capable of reaction by radical polymerization and a hydrophilic group, a polymer (I) containing a polymerization unit (I) derived from a monomer (I) represented by general formula (I), and an aqueous medium, thereby producing an aqueous dispersion of a fluorine-containing elastomer containing methylene group in the main chain:

General formula (I) : $CX^1X^3=CX^2R(-CZ^2Z^2-A^0)_m$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

The hydrophilic group of the compound (A) is preferably $-NH_2$, -P(O) $(OM)_2$, -OP(O) $(OM)_2$, $-SO_3M$, $-OSO_3M$, -COOM, $-B(OM)_2$, or $-OB(OM)_2$, where M is H, a metal atom, $NR^7{}_4$, imidazolium optionally having a substituent, pyridinium optionally having a substituent, or phosphonium optionally having a substituent; and $R^7$ is H or an organic group and optionally the same or different, and any two are optionally bonded to each other to form a ring.

The compound (A) is preferably at least one compound selected from the group consisting of (A0) a fluorine-containing compound containing a functional group capable of reaction by radical polymerization and a hydrophilic group, (A1) a compound having a triple bond and a hydrophilic group, (A2) a fluorine-containing compound represented by general formula (A2), (A3) a fluorine-free compound represented by general formula (A3), (A4) a compound having an aromatic ring, a hydrophilic group, and an unsaturated double bond, and (A5) a fluorine-free compound represented by general formula (A5):

General formula (A2) : $CX^1X^2=CX^3-Z$

wherein $X^1$ to $X^3$ are each independently H, F, or a fluorine-containing alkyl group; when $X^1$ and $X^2$ are both H, $X^3$ is F or a fluorine-containing alkyl group; Z is a group represented by - COOM, $-SO_3M$, $-OSO_3M$, $-PO(OM)_2$, $-OPO(OM)_2$, $-BO(OM)_2$, or - $OBO(OM)_2$; M is H, a metal atom, $NR^1{}_4$, imidazolium optionally having a substituent, pyridinium optionally having a substituent, or phosphonium optionally having a substituent; and $R^1$ is independently H or an organic group, and any two $R^1$ are optionally bonded to each other to form a ring;

General formula (A3) : $CR^1X^1=CX^2-R^2-COOM$

wherein $R^1$ is H or an alkyl group that optionally contains an ether bond, an ester bond, or an amide bond; $R^2$ is a single bond or an alkylene group in which at least one hydrogen atom bonded to a carbon atom is optionally replaced with a group represented by $-R^3$-COOM ($R^3$ is a single bond or an alkylene group) and which optionally contains an ether bond, an ester bond, an amide bond, an unsaturated bond, or a cyclic structure; $X^1$ and $X^2$ are each independently a group represented by $-R^1$ ($R^1$ is as described above) or $-R^2$-COOM ($R^2$ is as described above); M is H, a metal atom, $NR^4{}_4$, imidazolium optionally having a substituent, pyridinium optionally having a substituent, or phosphonium optionally having a substituent; and $R^4$ is independently H or an organic group, and any two $R^4$ are optionally bonded to each other to form a ring;

General formula (A5): $CX^1X^2=CX^3-R-Z$

wherein $X^1$, $X^2$, and $X^3$ are each independently H or an alkyl group; R is a single bond or an alkylene group; the total number of carbon atoms in $X^1$, $X^2$, $X^3$, and R is 0 to 5; Z is - $SO_3M$, $-OSO_3M$, -P (=O) (OM) $_2$, -OP (O) (OM) $_2$, or -B (OM) $_2$; M is H, a metal atom, $NR^1{}_4$, imidazolium optionally having a substituent, pyridinium optionally having a substituent,

or phosphonium optionally having a substituent; and $R^1$ is independently H or an organic group, and any two $R^1$ are optionally bonded to each other to form a ring.

The compound (A) is preferably (A0) a fluorine-containing compound represented by general formula (A0):

General formula (A0): $CX^iX^k=CX^jR^a-(CZ^1Z^2)_k-Y^3$

wherein $X^i$, $X^j$, and $X^k$ are each independently F, Cl, H, or $CF_3$; $Y^3$ is a hydrophilic group; $R^a$ is a linking group; $Z^1$ and $Z^2$ are each independently H, F, or $CF_3$; and k is 0 or 1, provided that at least one of $X^i$, $X^k$, $X^j$, $R^a$, $Z^1$, and $Z^2$ contains F, and provided that when k is 0, $R^a$ is a linking group other than a single bond.

The amount of the compound (A) is preferably 3 to 5,000 ppm by mass based on the aqueous medium.

The polymer (I) is preferably a polymer (2) containing a polymerization unit (2) derived from a monomer (2) represented by general formula (2):

$CX_2=CY(-O-Rf-A)$ (2)

wherein X is the same or different and is -H or F; Y is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond or a keto group; and A is -COOM, $-SO_3M$, $-OSO_3M$, or $-C(CF_3)_2OM$, where M is -H, a metal atom, $-NR^7_4$, imidazolium optionally having a substituent, pyridinium optionally having a substituent, or phosphonium optionally having a substituent, and $R^7$ is H or an organic group.

The polymer (I) preferably further contains a polymerization unit derived from a further monomer copolymerizable with the monomer (I).

The amount of the polymer (I) is preferably 0.0001 to 2% by mass based on 100% by mass of the aqueous medium.

The fluorine-containing monomer is preferably polymerized also in the presence of a chain transfer agent.

The fluorine-containing monomer is preferably polymerized at 10 to 120°C.

The fluorine-containing monomer is preferably polymerized at 0.5 to 10 MPaG.

The fluorine-containing monomer is preferably polymerized substantially in the absence of a fluorine-containing surfactant not having a functional group capable of reaction by radical polymerization.

The fluorine-containing elastomer preferably contains vinylidene fluoride unit.

The fluorine-containing elastomer preferably contains 50 mol% or more of vinylidene fluoride unit based on all monomer units.

The fluorine-containing elastomer preferably has a Mooney viscosity (ML1 + 10 (100°C)) of 10 to 130.

Also, the present disclosure provides a composition comprising: a fluorine-containing elastomer containing methylene group in the main chain and further containing a monomer unit (A) derived from a compound (A) containing a functional group capable of reaction by radical polymerization and a hydrophilic group; and a polymer (I) containing a polymerization unit (I) derived from a monomer (I) represented by general formula (I):

General formula (I) : $CX^1X^3=CX^2R(-CZ^2Z^2-A^0)_m$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

The fluorine-containing elastomer preferably contains vinylidene fluoride unit.

Further, the present disclosure provides an aqueous dispersion comprising the composition and an aqueous medium.

## EFFECT OF INVENTION

The present disclosure can provide a method for producing a fluorine-containing elastomer aqueous dispersion, the method being capable of generating a sufficient number of fluorine-containing elastomer particles while greatly suppressing adhesion of the fluorine-containing elastomer to a polymerization tank.

## DESCRIPTION OF EMBODIMENTS

Before describing specific embodiments of the present disclosure, some terms used herein are defined or explained.

Herein, the fluorine-containing elastomer is an amorphous fluoropolymer. Being "amorphous" means that the

size of a melting peak (ΔH) appearing in differential scanning calorimetry (DSC) (temperature-increasing rate 10°C/min) or differential thermal analysis (DTA) (temperature-increasing rate 10°C/min) of the fluoropolymer is 4.5 J/g or less. The fluorine-containing elastomer exhibits elastomeric characteristics by being crosslinked. Elastomeric characteristics mean such characteristics that the polymer can be stretched, and retain its original length when the force required to stretch the polymer is no longer applied.

Herein, the perfluoromonomer is a monomer that does not contain a carbon atom-hydrogen atom bond within the molecule. In addition to carbon atoms and fluorine atoms, the perfluoromonomer may be a monomer in which some fluorine atoms bonded to carbon atoms are replaced with chlorine atoms, or may be a monomer having a nitrogen atom, an oxygen atom, a sulfur atom, a phosphorus atom, a boron atom, or a silicon atom in addition to carbon atoms. The perfluoromonomer is preferably a monomer in which all hydrogen atoms are replaced with fluorine atoms. The perfluoromonomer does not include a monomer that provides a crosslinkable group.

The monomer that provides a crosslinking site is a monomer (a cure site monomer) that provides a fluoropolymer with a crosslinking site for forming a crosslink by a curing agent. The monomer that provides a crosslinking site includes a monomer that provides a crosslinkable group.

Herein, the contents of the respective monomer units constituting the fluorine-containing elastomer can be calculated by a suitable combination of NMR, FT-IR, elemental analysis, and X-ray fluorescence analysis in accordance with the types of the monomers.

Herein, the term "organic group" means a group containing one or more carbon atoms or a group formed by removing one hydrogen atom from an organic compound.

Examples of the "organic group" include:

an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents,
a heteroaryl group optionally having one or more substituents, a cyano group,
a formyl group,
RaO-,
RaCO-,
$RaSO_2$-,
RaCOO-,
RaNRaCO-,
RaCONRa-,
RaOCO-,
$RaOSO_2$-, and
$RaNRbSO_2$-
wherein each Ra is independently
an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents, or
a heteroaryl group optionally having one or more substituents, and
Rb is independently H or an alkyl group optionally having one or more substituents.

The organic group is preferably an alkyl group optionally having one or more substituents.

The term "substituent" as used herein means a group capable of replacing another atom or group. Examples of the "substituent" include an aliphatic group, an aromatic group, a heterocyclic group, an acyl group, an acyloxy group, an acylamino group, an aliphatic oxy group, an aromatic oxy group, a heterocyclic oxy group, an aliphatic oxycarbonyl

group, an aromatic oxycarbonyl group, a heterocyclic oxycarbonyl group, a carbamoyl group, an aliphatic sulfonyl group, an aromatic sulfonyl group, a heterocyclic sulfonyl group, an aliphatic sulfonyloxy group, an aromatic sulfonyloxy group, a heterocyclic sulfonyloxy group, a sulfamoyl group, an aliphatic sulfonamide group, an aromatic sulfonamide group, a heterocyclic sulfonamide group, an amino group, an aliphatic amino group, an aromatic amino group, a heterocyclic amino group, an aliphatic oxycarbonylamino group, an aromatic oxycarbonylamino group, a heterocyclic oxycarbonylamino group, an aliphatic sulfinyl group, an aromatic sulfinyl group, an aliphatic thio group, an aromatic thio group, a hydroxy group, a cyano group, a sulfo group, a carboxy group, an aliphatic oxyamino group, an aromatic oxy amino group, a carbamoylamino group, a sulfamoylamino group, a halogen atom, a sulfamoylcarbamoyl group, a carbamoyl sulfamoyl group, a dialiphatic oxyphosphinyl group, and a diaromatic oxyphosphinyl group.

The aliphatic group may be saturated or unsaturated, and may have a hydroxyl group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic group include alkyl groups having 1 to 8 and preferably 1 to 4 carbon atoms in total, such as a methyl group, an ethyl group, a vinyl group, a cyclohexyl group, and a carbamoylmethyl group.

The aromatic group may have, for example, a nitro group, a halogen atom, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic group include aryl groups having 6 to 12 carbon atoms and preferably 6 to 10 carbon atoms in total, such as a phenyl group, a 4-nitrophenyl group, a 4-acetylaminophenyl group, and a 4-methanesulfonylphenyl group.

The heterocyclic group may have a halogen atom, a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the heterocyclic group include 5- or 6-membered heterocyclic groups having 2 to 12 and preferably 2 to 10 carbon atoms in total, such as a 2-tetrahydrofuryl group and a 2-pyrimidyl group.

The acyl group may have an aliphatic carbonyl group, an arylcarbonyl group, a heterocyclic carbonyl group, a hydroxy group, a halogen atom, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the acyl group include acyl groups having 2 to 8 and preferably 2 to 4 carbon atoms in total, such as an acetyl group, a propanoyl group, a benzoyl group, and a 3-pyridine-carbonyl group.

The acylamino group may have an aliphatic group, an aromatic group, a heterocyclic group, or the like, and may have, for example, an acetylamino group, a benzoylamino group, a 2-pyridinecarbonylamino group, a propanoylamino group, or the like. Examples of the acylamino group include acylamino groups having 2 to 12 and preferably 2 to 8 carbon atoms in total and alkylcarbonylamino groups having 2 to 8 carbon atoms in total, such as an acetylamino group, a benzoylamino group, a 2-pyridinecarbonylamino group, and a propanoylamino group.

The aliphatic oxycarbonyl group may be saturated or unsaturated, and may have a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic oxycarbonyl group include alkoxycarbonyl groups having 2 to 8 and preferably 2 to 4 carbon atoms in total, such as a methoxycarbonyl group, an ethoxycarbonyl group, and a (t)-butoxycarbonyl group.

The carbamoyl group may have an aliphatic group, an aromatic group, a heterocyclic group, or the like. Examples of the carbamoyl group include an unsubstituted carbamoyl group and alkylcarbamoyl groups having 2 to 9 carbon atoms in total, and preferably an unsubstituted carbamoyl group and alkylcarbamoyl groups having 2 to 5 carbon atoms in total, such as a N-methylcarbamoyl group, a N,N-dimethylcarbamoyl group, and a N-phenylcarbamoyl group.

The aliphatic sulfonyl group may be saturated or unsaturated, and may have a hydroxy group, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic sulfonyl group include alkylsulfonyl groups having 1 to 6 carbon atoms in total and preferably 1 to 4 carbon atoms in total, such as a methanesulfonyl group.

The aromatic sulfonyl group may have a hydroxy group, an aliphatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic sulfonyl group include arylsulfonyl groups having 6 to 10 carbon atoms in total, such as a benzenesulfonyl group.

The amino group may have an aliphatic group, an aromatic group, a heterocyclic group, or the like.

The acylamino group may have, for example, an acetylamino group, a benzoylamino group, a 2-pyridinecarbonylamino group, a propanoylamino group, or the like. Examples of the acylamino group include acylamino groups having 2 to 12 carbon atoms in total and preferably 2 to 8 carbon atoms in total, and more preferably alkylcarbonylamino groups having 2 to 8 carbon atoms in total, such as an acetylamino group, a benzoylamino group, a 2-pyridinecarbonylamino group, and a propanoylamino group.

The aliphatic sulfonamide group, the aromatic sulfonamide group, and the heterocyclic sulfonamide group may

be, for example, a methanesulfonamide group, a benzenesulfonamide group, and a 2-pyridinesulfonamide group, respectively.

The sulfamoyl group may have an aliphatic group, an aromatic group, a heterocyclic group, or the like. Examples of the sulfamoyl group include a sulfamoyl group, alkylsulfamoyl groups having 1 to 9 carbon atoms in total, dialkylsulfamoyl groups having 2 to 10 carbon atoms in total, arylsulfamoyl groups having 7 to 13 carbon atoms in total, and heterocyclic sulfamoyl groups having 2 to 12 carbon atoms in total, more preferably a sulfamoyl group, alkylsulfamoyl groups having 1 to 7 carbon atoms in total, dialkylsulfamoyl groups having 3 to 6 carbon atoms in total, arylsulfamoyl groups having 6 to 11 carbon atoms in total, and heterocyclic sulfamoyl groups having 2 to 10 carbon atoms in total, such as a sulfamoyl group, a methylsulfamoyl group, a N,N-dimethylsulfamoyl group, a phenylsulfamoyl group, and a 4-pyridinesulfamoyl group.

The aliphatic oxy group may be saturated or unsaturated, and may have a methoxy group, an ethoxy group, an i-propyloxy group, a cyclohexyloxy group, a methoxyethoxy group, or the like. Examples of the aliphatic oxy group include alkoxy groups having 1 to 8 and preferably 1 to 6 carbon atoms in total, such as a methoxy group, an ethoxy group, an i-propyloxy group, a cyclohexyloxy group, and a methoxyethoxy group.

The aromatic amino group and the heterocyclic amino group may have an aliphatic group, an aliphatic oxy group, a halogen atom, a carbamoyl group, a heterocyclic group having a ring condensed with the aryl group, or an aliphatic oxycarbonyl group, and preferably an aliphatic group having 1 to 4 carbon atoms in total, an aliphatic oxy group having 1 to 4 carbon atoms in total, a halogen atom, a carbamoyl group having 1 to 4 carbon atoms in total, a nitro group, or an aliphatic oxycarbonyl group having 2 to 4 carbon atoms in total.

The aliphatic thio group may be saturated or unsaturated, and examples include alkylthio groups having 1 to 8 carbon atoms in total and more preferably 1 to 6 carbon atoms in total, such as a methylthio group, an ethylthio group, a carbamoylmethylthio group, and a t-butylthio group.

The carbamoylamino group may have an aliphatic group, an aryl group, a heterocyclic group, or the like. Examples of the carbamoylamino group include a carbamoylamino group, alkylcarbamoylamino groups having 2 to 9 carbon atoms in total, dialkylcarbamoylamino groups having 3 to 10 carbon atoms in total, arylcarbamoylamino groups having 7 to 13 carbon atoms in total, and heterocyclic carbamoylamino groups having 3 to 12 carbon atoms in total, and preferably a carbamoylamino group, alkylcarbamoylamino groups having 2 to 7 carbon atoms in total, dialkylcarbamoylamino groups having 3 to 6 carbon atoms in total, arylcarbamoylamino groups having 7 to 11 carbon atoms in total, and heterocyclic carbamoylamino groups having 3 to 10 carbon atoms in total, such as a carbamoylamino group, a methylcarbamoylamino group, a N,N-dimethylcarbamoylamino group, a phenylcarbamoylamino group, and a 4-pyridinecarbamoylamino group.

A range indicated by endpoints as used herein includes all numerical values within the range (for example, the range of 1 to 10 includes 1.4, 1.9, 2.33, 5.75, 9.98, and the like).

The phrase "at least one" as used herein includes all numerical values greater than or equal to 1 (for example, at least 2, at least 4, at least 6, at least 8, at least 10, at least 25, at least 50, at least 100, and the like).

Hereinafter, specific embodiments of the present disclosure will now be described in detail, but the present disclosure is not limited to the following embodiments.

A production method of the present disclosure is a method for producing a fluorine-containing elastomer aqueous dispersion in which an aqueous dispersion of a fluorine-containing elastomer containing methylene group in the main chain is produced, the method comprising polymerizing a fluorine-containing monomer in the presence of a compound (A) containing a functional group capable of reaction by radical polymerization and a hydrophilic group, a polymer (I) containing a polymerization unit (I) derived from a monomer (I) represented by general formula (I), and an aqueous medium, thereby producing an aqueous dispersion of a fluorine-containing elastomer containing methylene group in the main chain:

General formula (I) : $CX^1X^3=CX^2R(-CZ^2Z^2-A^0)_m$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

By using the compound (A), which has a hydrophilic group and is capable of reacting with the fluorine-containing monomer, and the polymer (I), which has an anionic group, in combination, a sufficient number of fluorine-containing elastomer particles can be generated to allow the polymerization reaction to proceed smoothly while greatly suppressing adhesion of the fluorine-containing elastomer to a polymerization tank.

(Compound (A))

In the production method of the present disclosure, a sufficient number of fluorine-containing elastomer particles

can be generated while greatly suppressing adhesion of the fluorine-containing elastomer to a polymerization tank, and therefore, the fluorine-containing monomer is polymerized also in the presence of a compound (A) containing a functional group capable of reaction by radical polymerization and a hydrophilic group. In the production method of the present disclosure, one or two or more compounds (A) may be used. The compound (A) may be either a fluorine-containing compound or a fluorine-free compound.

Herein, the hydrophilic group is a group that shows affinity for an aqueous medium. The compound (A) is preferably a compound containing an anionic or nonionic hydrophilic group, and more preferably a compound containing an anionic hydrophilic group. For example, the compound (A) may solely contain an anionic hydrophilic group or may solely contain a nonionic hydrophilic group. The compound (A) may be a compound solely containing an anionic hydrophilic group, may be a compound solely containing a nonionic hydrophilic group, or may be a combination of a compound containing an anionic hydrophilic group and a compound containing a nonionic hydrophilic group. It is conjectured that due to the compound (A) having a hydrophilic group, highly stable particles are formed, and, due to high particle formability, the number of particles per unit amount of water is increased, thus resulting in a higher polymerization rate.

Examples of the hydrophilic group in the compound (A) include $-NH_2$, $-P(O)(OM)_2$, $-OP(O)(OM)_2$, $-SO_3M$, $-OSO_3M$, -COOM, - B (OM) $_2$, and -OB (OM) $_2$, where M is H, a metal atom, $NR^7_4$, imidazolium optionally having a substituent, pyridinium optionally having a substituent, or phosphonium optionally having a substituent; and $R^7$ is H or an organic group and optionally the same or different, and any two are optionally bonded to each other to form a ring. In particular, the hydrophilic group is preferably $-SO_3M$ or -COOM, and more preferably -COOM. The organic group of $R^7$ is preferably an alkyl group. $R^7$ is preferably H or a $C_{1-10}$ organic group, more preferably H or a $C_{1-4}$ organic group, even more preferably H or a $C_{1-4}$ alkyl group, and most preferably H. When two M are contained in each formula, the two M may be the same or different. Examples of the metal atom include monovalent or divalent metal atoms, an alkali metal (Group 1) or an alkaline earth metal (Group 2) is preferable, and Na, K, or Li is more preferable.

The "functional group capable of reaction by radical polymerization" in the compound (A) may be a group containing a radically polymerizable unsaturated bond.

The group having a radically polymerizable unsaturated bond is, for example, a group having an ethylenically unsaturated bond, such as a vinyl group or an allyl group. The group having an ethylenically unsaturated bond can be represented by the following formula:

$$CX^eX^g=CX^fR-$$

wherein $X^e$, $X^f$, and $X^g$ are each independently F, Cl, H, $CF_3$, $CF_2H$, $CFH_2$, or $CH_3$; and R is a linking group. The linking group R may be the linking group $R^a$, which will be described below.

Examples of the group having a radically polymerizable unsaturated bond include $-CH=CH_2$, $-CF=CH_2$, $-CH=CF_2$, $-CF=CF_2$, $-CH_2-CH=CH_2$, $-CF_2-CF=CH_2$, $-CF_2-CF=CF_2$, $-(C=O)-CH=CH_2$, $-(C=O)-CF=CH_2$, $-(C=O)-CH=CF_2$, $-(C=O)-CF=CF_2$, $-(C=O)-C(CH_3)=CH_2$, $-(C=O)-C(CF_3)=CH_2$, $-(C=O)-C(CH_3)=CF_2$, $-(C=O)-C(CF_3)=CF_2$, $-O-CH_2-CH=CH_2$, $-O-CF_2-CF=CH_2$, $-O-CH_2-CH=CF_2$, $-O-CF=CF_2$, and $-O-CF_2-CF=CF_2$.

The compound (A) has a functional group capable of reaction by radical polymerization, and it is thus conjectured that when used in the above polymerization, the compound (A) reacts with a fluorine-containing monomer at the initial stage of the polymerization reaction to form highly stable particles having a hydrophilic group derived from the compound (A). Therefore, it is considered that when polymerization is carried out in the presence of the compound (A), the number of particles of the fluorine-containing elastomer generated during polymerization is increased.

The amount of the compound (A) when polymerizing the fluorine-containing monomer is preferably 3 to 5,000 ppm by mass, more preferably 5 ppm by mass or more, even more preferably 10 ppm by mass or more, particularly preferably 20 ppm by mass or more, and most preferably 30 ppm by mass or more, and is more preferably 1,000 ppm by mass or less, even more preferably 500 ppm by mass or less, particularly preferably 200 ppm by mass or less, and most preferably 100 ppm by mass or less, based on the aqueous medium. By regulating the amount of the compound (A) to the above range, an even greater number of fluorine-containing elastomer particles can be generated while further suppressing adhesion of the fluorine-containing elastomer to a polymerization tank.

The amount of the compound (A) is also preferably regulated according to the type of the polymerization initiator used in the polymerization and the polymerization temperature.

When using a non-redox polymerization initiator as the polymerization initiator and performing the polymerization at 40 to 70°C, the amount of the compound (A) is preferably 3 to 300 ppm by mass, more preferably 3 to 150 ppm by mass, even more preferably 5 to 100 ppm by mass, and most preferably 8 to 80 ppm by mass based on the aqueous medium.

When using a non-redox polymerization initiator as the polymerization initiator and performing the polymerization at higher than 70°C and 98°C or lower, the amount of the compound (A) is preferably 3 to 500 ppm by mass, more preferably 3 to 200 ppm by mass, even more preferably 5 to 120 ppm by mass, and most preferably 20 to 110 ppm by

mass based on the aqueous medium.

When using a redox polymerization initiator as the polymerization initiator and performing the polymerization at 10°C or higher and lower than 40°C, the amount of the compound (A) is preferably 3 to 300 ppm by mass, more preferably 3 to 100 ppm by mass, even more preferably 5 to 80 ppm by mass, and most preferably 10 to 70 ppm by mass based on the aqueous medium.

When using a redox polymerization initiator as the polymerization initiator and performing the polymerization at 40 to 70°C, the amount of the compound (A) is preferably 3 to 500 ppm by mass, more preferably 5 to 300 ppm by mass, even more preferably 10 to 200 ppm by mass, and most preferably 15 to 150 ppm by mass based on the aqueous medium.

When using a redox polymerization initiator as the polymerization initiator and performing the polymerization at higher than 70°C and 98°C or lower, the amount of the compound (A) is preferably 5 to 500 ppm by mass, more preferably 8 to 300 ppm by mass, even more preferably 15 to 200 ppm by mass, and most preferably 20 to 150 ppm by mass based on the aqueous medium.

With the amount of the compound (A) being within the above range, the adhesion rate can be more reduced, and the polymerization time can be shortened.

The compound (A) is preferably added before the polymerization initiator is added to initiate the polymerization reaction. Preferably, the fluorine-containing compound (A) is added only before the initiation of the polymerization reaction and not added after the initiation of polymerization.

Since an even greater number of fluorine-containing elastomer particles can be generated while further suppressing adhesion of the fluorine-containing elastomer to a polymerization tank, the compound (A) is preferably at least one compound selected from the group consisting of (A0) a fluorine-containing compound containing a functional group capable of reaction by radical polymerization and a hydrophilic group, (A1) a compound having a triple bond and a hydrophilic group, (A2) a fluorine-containing compound represented by general formula (A2), (A3) a fluorine-free compound represented by general formula (A3), (A4) a compound having an aromatic ring, a hydrophilic group, and an unsaturated double bond, and (A5) a fluorine-free compound represented by general formula (A5).

The fluorine-containing compound (A0) is a compound containing a fluorine atom within the molecule, and is a compound containing a functional group capable of reaction by radical polymerization and a hydrophilic group. In the production method of the present disclosure, one or two or more compounds (A0) may be used.

Examples of the hydrophilic group in the fluorine-containing compound (A0) include $-NH_2$, $-P(O)(OM)_2$, $-OP(O)(OM)_2$, $-SO_3M$, $-OSO_3M$, $-COOM$, $-B(OM)_2$, and $-OB(OM)_2$, where M is H, a metal atom, $NR^7_4$, imidazolium optionally having a substituent, pyridinium optionally having a substituent, or phosphonium optionally having a substituent; and $R^7$ is H or an organic group and optionally the same or different, and any two are optionally bonded to each other to form a ring. In particular, the hydrophilic group is preferably $-SO_3M$ or $-COOM$, and more preferably $-COOM$. The organic group of $R^7$ is preferably an alkyl group. $R^7$ is preferably H or a $C_{1-10}$ organic group, more preferably H or a $C_{1-4}$ organic group, even more preferably H or a $C_{1-4}$ alkyl group, and most preferably H. When two M are contained in each formula, the two M may be the same or different. Examples of the metal atom include monovalent or divalent metal atoms, an alkali metal (Group 1) or an alkaline earth metal (Group 2) is preferable, and Na, K, or Li is more preferable.

The "functional group capable of reaction by radical polymerization" in the compound (A0) may be a group containing a radically polymerizable unsaturated bond.

The group having a radically polymerizable unsaturated bond is, for example, a group having an ethylenically unsaturated bond, such as a vinyl group or an allyl group. The group having an ethylenically unsaturated bond can be represented by the following formula:

$$CX^eX^g=CX^fR-$$

wherein $X^e$, $X^f$, and $X^g$ are each independently F, Cl, H, $CF_3$, $CF_2H$, $CFH_2$, or $CH_3$; and R is a linking group. The linking group R may be the linking group $R^a$, which will be described below.

Examples of the group having a radically polymerizable unsaturated bond include $-CH=CH_2$, $-CF=CH_2$, $-CH=CF_2$, $-CF=CF_2$, $-CH_2-CH=CH_2$, $-CF_2-CF=CH_2$, $-CF_2-CF=CF_2$, $-(C=O)-CH=CH_2$, $-(C=O)-CF=CH_2$, $-(C=O)-CH=CF_2$, $-(C=O)-CF=CF_2$, $-(C=O)-C(CH_3)=CH_2$, $-(C=O)-C(CF_3)=CH_2$, $-(C=O)-C(CH_3)=CF_2$, $-(C=O)-C(CF_3)=CF_2$, $-O-CH_2-CH=CH_2$, $-O-CF_2-CF=CH_2$, $-O-CH_2-CH=CF_2$, $-O-CF=CF_2$, and $-O-CF_2-CF=CF_2$.

Since an even greater number of fluorine-containing elastomer particles can be generated while further suppressing adhesion of the fluorine-containing elastomer to a polymerization tank, the fluorine-containing compound (A0) is preferably a fluorine-containing compound (A0) represented by general formula (A0):

General formula (A0): $$CX^iX^k=CX^jR^a-(CZ^1Z^2)_k-Y^3$$

wherein $X^i$, $X^j$, and $X^k$ are each independently F, Cl, H, or $CF_3$; $Y^3$ is a hydrophilic group; $R^a$ is a linking group; $Z^1$ and

$Z^2$ are each independently H, F, or $CF_3$; and k is 0 or 1, provided that at least one of $X^i$, $X^k$, $X^j$, $R^a$, $Z^1$, and $Z^2$ contains F, and provided that when k is 0, $R^a$ is a linking group other than a single bond.

$Y^3$ in general formula (A0) is a hydrophilic group. Since an even greater number of fluorine-containing elastomer particles can be generated while further suppressing adhesion of the fluorine-containing elastomer to a polymerization tank, the hydrophilic group is preferably $-NH_2$, $-P(O)(OM)_2$, $-OP(O)(OM)_2$, $-SO_3M$, $-OSO_3M$, -COOM, $-B(OM)_2$, or $-OB(OM)_2$, where M is H, a metal atom, $NR^7_4$, imidazolium optionally having a substituent, pyridinium optionally having a substituent, or phosphonium optionally having a substituent; and $R^7$ is H or an organic group and optionally the same or different, and any two are optionally bonded to each other to form a ring. In particular, the hydrophilic group is more preferably $-SO_3M$ or - COOM, and even more preferably -COOM. The organic group of $R^7$ is preferably an alkyl group. $R^7$ is preferably H or a $C_{1-10}$ organic group, more preferably H or a $C_{1-4}$ organic group, even more preferably H or a $C_{1-4}$ alkyl group, and most preferably H. Examples of the metal atom include monovalent or divalent metal atoms, an alkali metal (Group 1) or an alkaline earth metal (Group 2) is preferable, and Na, K, or Li is more preferable.

$R^a$ in general formula (A0) is a linking group. The "linking group" as used herein refers to a divalent linking group. The linking group is preferably a single bond or a group containing at least one carbon atom. However, when k is 0, $R^a$ is a linking group other than single bond, and is preferably a group containing at least one carbon atom. The number of carbon atoms in the linking group may be 2 or more, may be 4 or more, may be 8 or more, may be 10 or more, or may be 20 or more. The upper limit of the number of carbon atoms in the linking group is not limited, and, for example, may be 100 or less, and may be 50 or less.

The linking group may be linear or branched, cyclic or acyclic, saturated or unsaturated, and substituted or unsubstituted, and, as desired, may contain one or more heteroatoms selected from the group consisting of sulfur, oxygen, and nitrogen, and, as desired, may contain one or more functional groups selected from the group consisting of ester, amide, sulfonamide, carbonyl, carbonate, urethane, urea, and carbamate. The linking group may be a group that does not contain a carbon atom and that is a catenary heteroatom such as oxygen, sulfur, or nitrogen.

$R^a$ is preferably a catenary heteroatom such as oxygen, sulfur, or nitrogen, or a divalent organic group.

When $R^a$ is a divalent organic group, the hydrogen atom bonded to the carbon atom may be replaced with halogen other than fluorine, such as chlorine, and may or may not contain a double bond. $R^a$ may be linear or branched, and may be cyclic or acyclic. $R^a$ may contain a functional group (such as ester, ether, ketone, amine, or halide).

$R^a$ may also be a fluorine-free divalent organic group or a partially fluorinated or perfluorinated divalent organic group.

$R^a$ may be, for example, a hydrocarbon group in which no fluorine atom is bonded to a carbon atom, a hydrocarbon group in which some hydrogen atoms bonded to carbon atoms are replaced with fluorine atoms, a hydrocarbon group in which all hydrogen atoms bonded to carbon atoms are replaced with fluorine atoms, -(C=O)-, -(C=O)-O-, or a hydrocarbon group containing an ether bond, and these may contain an oxygen atom, may contain a double bond, and may contain a functional group.

$R^a$ is preferably a hydrocarbon group that has 1 to 100 carbon atoms, that may contain -(C=O)-, -(C=O)-O-, or an ether bond, and that may contain a carbonyl group, and in the hydrocarbon group, some or all hydrogen atoms bonded to carbon atoms may be replaced with fluorine.

$R^a$ is preferably at least one selected from $-(CH_2)_a-$, $-(CF_2)_a-$, $-O-(CF_2)_a-$, $-(CF_2)_a-O-(CF_2)_b-$, $-O(CF_2)_a-O-(CF_2)_b-$, $-(CF_2)_a-[O-(CF_2)_b]_c-$, $-O(CF_2)_a-[O-(CF_2)_b]_c-$, $-[(CF_2)_a-O]_b-[(CF_2)_c-O]_d-$, $-O[(CF_2)_a-O]_b-[(CF_2)_c-O]_d-$, $-O-[CF_2CF(CF_3)O]_a-(CF_2)_b-$, -(C=O)-, -(C=O)-O-, $-(C=O)-(CH_2)_a-$, $-(C=O)-(CF_2)_a-$, $-(C=O)-O-(CH_2)_a-$, $-(C=O)-O-(CF_2)_a-$, $-(C=O)-[(CH_2)_a-O]_b-$, $-(C=O)-[(CF_2)_a-O]_b-$, $-(C=O)-O[(CH_2)_a-O]_b-$, $-(C=O)-O[(CF_2)_a-O]_b-$, $-(C=O)-O[(CH_2)_a-O]_b-(CH_2)_c-$, $-(C=O)-O[(CF_2)_a-O]_b-(CF_2)_c-$, $-(C=O)-(CH_2)_a-O-(CH_2)_b-$, $-(C=O)-(CF_2)_a-O-(CF_2)_b-$, $-(C=O)-O-(CH_2)_a-O-(CH_2)_b-$, $-(C=O)-O-(CF_2)_a-O-(CF_2)_b-$, $-(C=O)-O-C_6H_4-$, and a combination thereof.

In the formulas, a, b, c, and d are each independently at least 1 or more, a, b, c, and d may each independently be 2 or more, may be 3 or more, may be 4 or more, may be 10 or more, and may be 20 or more. The upper limit of a, b, c, and d is, for example, 100.

Suitable specific examples of $R^a$ include $-O-CF_2-$, $-O-CF_2CF_2-$, $-O-CF_2CF_2CF_2-$, $-O-CF_2CF(CF_3)-O-$, $-O-CF_2CF(CF_3)-O-CF_2-$, $-CF_2-O-$, $-CF_2-O-CF_2-$, $-CF_2-O-CH_2-$, $-CF_2-O-CH_2CF_2-$, $-CF_2-O-CF_2CF_2-$, $-CF_2-O-CF_2CH_2-$, $-CF_2-O-CF_2CF_2CH_2-$, $-CF_2-O-CF(CF_3)-$, $-CF_2-O-CF(CF_3)CF_2-$, $-CF_2-O-CF(CF_3)CF_2-O-$, $-CF_2-O-CF(CF_3)CH_2-$, -(C=O)-, -(C=O)-O-, $-(C=O)-(CH_2)-$, $-(C=O)-(CF_2)-$, $-(C=O)-O-(CH_2)-$, $-(C=O)-O-(CF_2)-$, $-(C=O)-[(CH_2)_2-O]_n-$, $-(C=O)-[(CF_2)_2-O]_n-$, $-(C=O)-O[(CH_2)_2-O]_n-$, $-(C=O)-O[(CF_2)_2-O]_n-$, $-(C=O)-O[(CH_2)_2-O]_n-(CH_2)-$, $-(C=O)-O[(CF_2)_2-O]_n-(CF_2)-$, $-(C=O)-(CH_2)_2-O-(CH_2)-$, $-(C=O)-(CF_2)_2-O-(CF_2)-$, $-(C=O)-O-(CH_2)_2-O-(CH_2)-$, $-(C=O)-O-(CF_2)_2-O-(CF_2)-$, and $-(C=O)-O-C_6H_4-$. In particular, $R^a$ is preferably $-O-CF_2-$, $-O-CF_2CF_2-$, $-O-CF_2CF_2CF_2-$, $-O-CF_2CF(CF_3)-O-$, $-O-CF_2CF(CF_3)-O-CF_2-$, $-CF_2-O-$, $-CF_2-O-CF_2-$, $-CF_2-O-CF_2CF_2-$, $-CF_2-O-CF(CF_3)-$, $-CF_2-O-CF(CF_3)CF_2-$, $-CF_2-O-CF(CF_3)CF_2-O-$, -(C=O)-, -(C=O)-O-, $-(C=O)-(CH_2)-$, $-(C=O)-O-(CH_2)-$, $-(C=O)-O[(CH_2)_2-O]_n-$, $-(C=O)-O[(CH_2)_2-O]_n-(CH_2)-$, $-(C=O)-(CH_2)_2-O-(CH_2)-$, or $-(C=O)-O-C_6H_4-$.

In the formulas, n is an integer of 1 to 10.

$-R^a-(CZ^1Z^2)_k$ in general formula (A0) is preferably $-O-CF_2-$, $-O-CF_2CF_2-$, $-O-CF_2CF_2CF_2-$, $-O-CF_2CF(CF_3)-O-$

$CF_2$-, $-CF_2-O-CF_2-$, $-CF_2-O-CF(CF_3)$ -, $-CF_2-O-C(CF_3)_2-$, $-CF_2-O-CF_2-CF_2-$, $-CF_2-O-CF_2-CF(CF_3)-$, $-CF_2-O-CF_2-C(CF_3)_2-$, $-CF_2-O-CF_2CF_2-CF_2-$, $-CF_2-O-CF_2CF_2-CF(CF_3)-$, $-CF_2-O-CF_2CF_2-C(CF_3)_2-$, $-CF_2-O-CF(CF_3)-CF_2-$, $-CF_2-O-CF(CF_3)$ $-CF(CF_3)$ -, $-CF_2-O-CF(CF_3)-C(CF_3)$ $_2$-, $-CF_2-O-CF(CF_3)-CF_2-$, - $CF_2-O-CF(CF_3)$ $-CF(CF_3)$ -, $-CF_2-O-CF(CF_3)$ $-C(CF_3)$ $_2$-, $-CF_2-O-CF(CF_3)$ $CF_2-CF_2-$, $-CF_2-O-CF(CF_3)CF_2-CF(CF_3)$ -, $-CF_2-O-CF(CF_3)$ $CF_2-C(CF_3)_2-$, $-CF_2-O-CF(CF_3)CF_2-O-CF_2-$, $-CF_2-O-CF(CF_3)CF_2-O-CF(CF_3)$ -, $-CF_2-O-CF(CF_3)CF_2-O-C(CF_3)_2-$, -(C=O)-, -(C=O)-O-, $-(C=O)-(CH_2)-$, $-(C=O)-(CF_2)-$, $-(C=O)-O-(CH_2)-$, $-(C=O)-O-(CF_2)-$, $-(C=O)-[(CH_2)_2-O]_n-(CH_2)-$, $-(C=O)-[(CF_2)_2-O]_n-(CF_2)$ -, $-(C=O)-[(CH_2)_2-O]_n-(CH_2)-(CH_2)-$, $-(C=O)-[(CF_2)_2-O]_n-(CF_2)-(CF_2)$ -, $-(C=O)-O[(CH_2)_2-O]_n-(CF_2)-$, $-(C=O)-O[(CH_2)_2-O]_n-(CH_2)-(CH_2)-$, $-(C=O)-O[(CF_2)_2-O]_n-(CF_2)-$, $-(C=O)-O[(CF_2)_2-O]_n-(CF_2)-(CF_2)$ -, $-(C=O)-(CH_2)_2-O-(CH_2)-(CH_2)-$, $-(C=O)-(CF_2)_2-O-(CF_2)-(CF_2)-$, $-(C=O)-O-(CH_2)_2-O-(CH_2)-(CH_2)-$, $-(C=O)-O-(CF_2)_2-O-(CF_2)-(CF_2)-$, $-(C=O)-O-(CH_2)_2-O-(CH_2)-C(CF_3)_2-$, $-(C=O)-O-(CF_2)_2-O-(CF_2)-C(CF_3)_2-$, or $-(C=O)-O-C_6H_4-C(CF_3)$ $_2$, and more preferably $-O-CF_2-$, $-O-CF_2CF_2-$, $-O-CF_2CF_2CF_2-$, $-O-CF_2CF(CF_3)-O-$, $-O-CF_2CF(CF_3)-O-CF_2-$, $-CF_2-O-CF(CF_3)$ -, $-CF_2-O-CF_2-CF(CF_3)-$, $-CF_2-O-CF_2CF_2-CF(CF_3)-$, $-CF_2-O-CF(CF_3)-CF(CF_3)-$, - $CF_2-O-CF(CF_3)CF_2-CF(CF_3)$ -, $-CF_2-O-CF(CF_3)CF_2-O-CF(CF_3)$ -, -(C=O)-, $-(C=O)-O-(CH_2)-$, $-(C=O)-O-(CH_2)-(CH_2)-$, $-(C=O)-O-[(CH_2)_2-O]_n-(CH_2)-(CH_2)-$, $-(C=O)-O-(CH_2)_2-O-(CH_2)-C(CF_3)_2-$, or $-(C=O)-O-C_6H_4-C(CF_3)_2-$.

In the formulas, n is an integer of 1 to 10.

Specific examples of the fluorine-containing compound (A0) include:

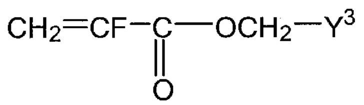

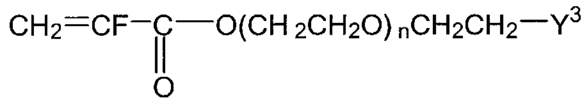

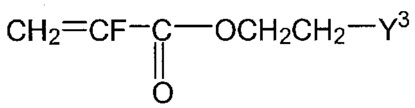

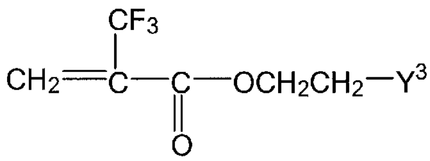

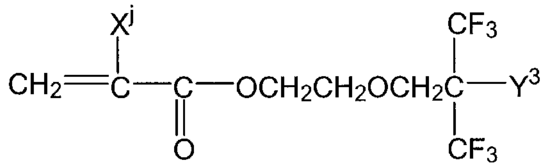

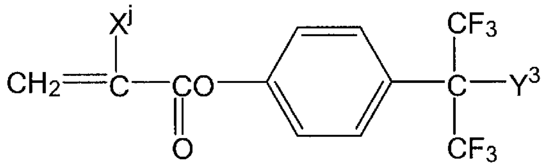

wherein $X^j$ and $Y^3$ are as described above; and n is an integer of 1 to 10.

$R^a$ is preferably a divalent group represented by the following general formula (r1):

$$-(C=O)_h-(O)_i-CF_2-O-(CX^6_2)_e-\{O-CF(CF_3)\}_f-(O)_g- \quad (r1)$$

(wherein $X^6$ is each independently H, F, or $CF_3$, e is an integer of 0 to 3, f is an integer of 0 to 3, g is 0 or 1, h is 0 or 1, and i is 0 or 1), and is also preferably a divalent group represented by the following general formula (r2):

$$-(C=O)_h-(O)_i-CF_2-O-(CX^7_2)_e-(O)_g- \quad (r2)$$

(wherein $X^7$ is each independently H, F, or $CF_3$, e is an integer of 0 to 3, g is 0 or 1, h is 0 or 1, and i is 0 or 1).

$-R^a-(CZ^1Z^2)_k-$ in general formula (A0) is also preferably a divalent group represented by the following formula (t1):

$$-(C=O)_h-(O)_i-CF_2-O-(CX^6_2)_e-\{O-CF(CF_3)\}_f-(O)_g-CZ^1Z^2- \quad (t1)$$

(wherein $X^6$ is each independently H, F, or $CF_3$, e is an integer of 0 to 3, f is an integer of 0 to 3, g is 0 or 1, h is 0 or 1, i is 0 or 1, and $Z^1$ and $Z^2$ are each independently F or $CF_3$), and, more preferably, in formula (t1), one of $Z^1$ and $Z^2$ is F, and the other is $CF_3$.

In general formula (A0), $-R^a-(CZ^1Z^2)_k-$ is also preferably a divalent group represented by the following formula (t2):

$$-(C=O)_h-(O)_i-CF_2-O-(CX^7{}_2)_e-(O)_g-CZ^1Z^2- \qquad (t2)$$

(wherein $X^7$ is each independently H, F, or $CF_3$, e is an integer of 0 to 3, g is 0 or 1, h is 0 or 1, i is 0 or 1, and $Z^1$ and $Z^2$ are each independently F or $CF_3$), and, more preferably, in formula (t2), one of $Z^1$ and $Z^2$ is F, and the other is $CF_3$.

It is also preferable that the fluorine-containing compound (A0) has a C-F bond and does not have a C-H bond in the portion excluding the hydrophilic group ($Y^3$). That is to say, in general formula (A0), it is preferable that $X^i$, $X^j$, and $X^k$ are all F, and that $R^a$ is a perfluoroalkylene group having one or more carbon atoms, and the perfluoroalkylene group may be either linear or branched, may be either cyclic or acyclic, and may contain at least one catenary heteroatom. The number of carbon atoms in the perfluoroalkylene group may be 2 to 20, and may be 4 to 18.

The fluorine-containing compound (A0) may be partially fluorinated. That is to say, in general formula (A0), it is preferable that the compound represented by general formula (A) has at least one hydrogen atom bonded to a carbon atom and at least one fluorine atom bonded to a carbon atom in the portion excluding the hydrophilic group ($Y^3$).

The fluorine-containing compound (A0) is also preferably a compound represented by the following formula (Aa):

$$CF_2=CF-O-Rf^0-Y^3 \qquad (Aa)$$

wherein $Y^3$ is a hydrophilic group, and $Rf^0$ is a perfluorinated divalent linking group that is perfluorinated, that may be linear or branched, cyclic or acyclic, saturated or unsaturated, and substituted or unsubstituted, and that optionally and additionally contains one or more heteroatoms selected from the group consisting of sulfur, oxygen, and nitrogen.

The fluorine-containing compound (A0) is also preferably a compound represented by the following formula (Ab):

$$CH_2=CH-O-Rf^0-Y^3 \qquad (Ab)$$

wherein $Y^3$ is a hydrophilic group, and $Rf^0$ is a perfluorinated divalent linking group as defined with respect to formula (Aa).

In one preferable form of general formula (A0), $Y^3$ is $-OSO_3M$. Examples of the fluorine-containing compound (A0) when $Y^3$ is $-OSO_3M$ include $CF_2=CF(OCF_2CF_2CH_2OSO_3M)$, $CH_2=CH((CF_2)_4CH_2OSO_3M)$, $CF_2=CF(O(CF_2)_4CH_2OSO_3M)$, $CF_2=CF(OCF_2CF(CF_3)CH_2OSO_3M)$, $CF_2=CF(OCF_2CF(CF_3)OCF_2CF_2CH_2OSO_3M)$, $CH_2=CH((CF_2)_4CH_2OSO_3M)$, $CF_2=CF(OCF_2CF_2SO_2N(CH_3)CH_2CH_2OSO_3M)$, $CH_2=CH(CF_2CF_2CH_2OSO_3M)$, $CF_2=CF(OCF_2CF_2CF_2CF_2SO_2N(CH_3)CH_2CH_2OSO_3M)$, and $CH_2=CH(CF_2CF_2CH_2OSO_3M)$. In the formulas, M is as described above.

In one preferable form of general formula (A0), $Y^3$ is $-SO_3M$. Examples of the fluorine-containing compound (A0) when $Y^3$ is $-SO_3M$ include $CF_2=CF(OCF_2CF_2SO_3M)$, $CF_2=CF(O(CF_2)_4SO_3M)$, $CF_2=CF(OCF_2CF(CF_3)SO_3M)$, $CF_2=CF(OCF_2CF(CF_3)OCF_2CF_2SO_3M)$, $CH_2=CH(CF_2CF_2SO_3M)$, $CF_2=CF(OCF_2CF(CF_3)OCF_2CF_2CF_2CF_2SO_3M)$, $CH_2=CH((CF_2)_4SO_3M)$, and $CH_2=CH((CF_2)_3SO_3M)$. In the formulas, M is as described above.

In one preferable form of general formula (A0), $Y^3$ is $-COOM$. Examples of the fluorine-containing compound (A0) when $Y^3$ is $-COOM$ include $CF_2=CF(OCF_2CF_2COOM)$, $CF_2=CF(OCF_2CF_2CF_2COOM)$, $CF_2=CF(O(CF_2)_5COOM)$, $CF_2=CF(OCF_2CF(CF_3)COOM)$, $CF_2=CF(OCF_2CF(CF_3)O(CF_2)_nCOOM)$ (n is greater than 1), $CH_2=CH(CF_2CF_2COOM)$, $CH_2=CH((CF_2)_4COOM)$, $CH_2=CH((CF_2)_3COOM)$, $CF_2=CF(OCF_2CF_2SO_2NR'CH_2COOM)$, $CF_2=CF(O(CF_2)_4SO_2NR'CH_2COOM)$, $CF_2=CF(OCF_2CF(CF_3)SO_2NR'CH_2COOM)$, $CF_2=CF(OCF_2CF(CF_3)OCF_2CF_2SO_2NR'CH_2COOM)$, $CH_2=CH(CF_2CF_2SO_2NR'CH_2COOM)$, $CF_2=CF(OCF_2CF(CF_3)OCF_2CF_2CF_2CF_2SO_2NR'CH_2COOM)$, $CH_2=CH((CF_2)_4SO_2NR'CH_2COOM)$, $CH_2=CH(CF_2CF_2SO_2NR'CH_2COOM)$, and $CH_2=CH((CF_2)_3SO_2NR'CH_2COOM)$. In the formulas, R' is H or a $C_{1-4}$ alkyl group, and M is as described above.

It is also one preferable form of general formula (A0) that $Y^3$ is $-OP(O)(OM)_2$. Examples of the fluorine-containing compound (A0) when $Y^3$ is $-OP(O)(OM)_2$ include $CF_2=CF(OCF_2CF_2CH_2OP(O)(OM)_2)$, $CF_2=CF(O(CF_2)_4CH_2OP(O)(OM)_2)$, $CF_2=CF(OCF_2CF(CF_3)CH_2OP(O)(OM)_2)$, $CF_2=CF(OCF_2CF(CF_3)OCF_2CF_2CH_2OP(O)(OM)_2)$, $CF_2=CF(OCF_2CF_2SO_2N(CH_3)CH_2CH_2OP(O)(OM)_2)$, $CF_2=CF(OCF_2CF_2CF_2CF_2SO_2N(CH_3)CH_2CH_2OP(O)(OM)_2)$, $CH_2=CH(CF_2CF_2CH_2OP(O)(OM)_2$, $CH_2=CH((CF_2)_4CH_2OP(O)(OM)_2)$, and $CH_2=CH((CF_2)_3CH_2OP(O)(OM)_2)$. In the formulas, M is as described above.

It is also one preferable form of general formula (A0) that $Y^3$ is $-P(O)(OM)_2$. Examples of the fluorine-containing compound (A0) when $Y^3$ is $-P(O)(OM)_2$ include $CF_2=CF(OCF_2CF_2P(O)(OM)_2)$, $CF_2=CF(O(CF_2)_4P(O)(OM)_2)$,

$CF_2=CF(OCF_2CF(CF_3)P(O)(OM)_2)$, $CF_2=CF(OCF_2CF(CF_3)OCF_2CF_2P(O)(OM)_2)$, $CH_2=CH(CF_2CF_2P(O)(OM)_2)$, $CH_2=CH((CF_2)_4P(O)(OM)_2)$, and $CH_2=CH((CF_2)_3P(O)(OM)_2)$, and in the formulas, M is as described above.

The fluorine-containing compound (A0) is preferably at least one selected from the group consisting of a compound represented by general formula (5):

$$CX_2=CY(-CZ_2-O-Rf-Y^3) \qquad (5)$$

(wherein X is the same or different and is -H or -F; Y is -H, -F, an alkyl group, or a fluorine-containing alkyl group; Z is the same or different and is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and $Y^3$ is as described above), a compound represented by general formula (6):

$$CX_2=CY(-O-Rf-Y^3) \qquad (6)$$

(wherein X is the same or different and is -H or -F; Y is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and $Y^3$ is as described above), and a compound represented by general formula (7):

$$CX_2=CY(-Rf-Y^3) \qquad (7)$$

(wherein X is the same or different and is -H or -F; Y is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and $Y^3$ is as described above).

The fluorine-containing alkylene group having 2 to 100 carbon atoms and having an ether bond is an alkylene group that does not contain a structure having an oxygen atom at a terminal and that contains an ether bond between carbon atoms.

In general formula (5), X is -H or -F. X may be both -F, or at least one may be -H. For example, one may be -F and the other may be -H, or both may be -H.

In general formula (5), Y is -H, -F, an alkyl group, or a fluorine-containing alkyl group. The alkyl group is an alkyl group that does not contain a fluorine atom, and has one or more carbon atoms. The alkyl group preferably has 6 or less carbon atoms, more preferably 4 or less carbon atoms, and even more preferably 3 or less carbon atoms. The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and even more preferably 3 or less carbon atoms. Y is preferably -H, -F, or $-CF_3$, and more preferably -F.

In general formula (5), Z is the same or different and is -H, -F, an alkyl group, or a fluoroalkyl group. The alkyl group is an alkyl group that does not contain a fluorine atom, and has one or more carbon atoms. The alkyl group preferably has 6 or less carbon atoms, more preferably 4 or less carbon atoms, and even more preferably 3 or less carbon atoms. The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and even more preferably 3 or less carbon atoms. Z is preferably - H, -F, or $-CF_3$, and more preferably -F.

In general formula (5), at least one of X, Y, and Z preferably contains a fluorine atom. For example, X may be -H, and Y and Z may be -F.

In general formula (5), Rf is a fluorine-containing alkylene group having 1 to 40 carbon atoms or a fluorine-containing alkylene group having 2 to 100 carbon atoms and having an ether bond. The fluorine-containing alkylene group preferably has 2 or more carbon atoms. The number of carbon atoms in the fluorine-containing alkylene group is preferably 30 or less, more preferably 20 or less, and even more preferably 10 or less. Examples of the fluorine-containing alkylene group include $-CF_2-$, $-CH_2CF_2-$, $-CF_2CF_2-$, $-CF_2CH_2-$, $- CF_2CF_2CH_2-$, $-CF (CF_3) -$, $-CF (CF_3) CF_2-$, and $-CF (CF_3) CH_2-$. The fluorine-containing alkylene group is preferably a perfluoroalkylene group.

The fluorine-containing alkylene group having an ether bond preferably has 3 or more carbon atoms. The number of carbon atoms in the fluorine-containing alkylene group having an ether bond is preferably 60 or less, more preferably 30 or less, and even more preferably 12 or less.

The fluorine-containing alkylene group having an ether bond is also preferably a divalent group represented by the following formula:

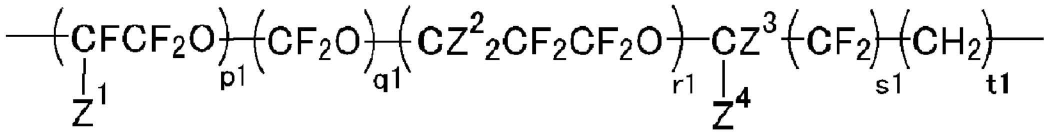

wherein $Z^1$ is F or $CF_3$; $Z^2$ and $Z^3$ are each H or F; $Z^4$ is H, F, or $CF_3$; p1 + q1 + r1 is an integer of 1 to 10; s1 is 0 or 1; and t1 is an integer of 0 to 5.

Specific examples of the fluorine-containing alkylene group having an ether bond include $-CF(CF_3)CF_2-O-CF(CF_3)-$, $-(CF(CF_3)CF_2-O)_n-CF(CF_3)-$ (wherein n is an integer of 1 to 10), $-CF(CF_3)CF_2-O-CF(CF_3)CH_2-$, $-(CF(CF_3)CF_2-O)_n-CF(CF_3)CH_2-$ (wherein n is an integer of 1 to 10), $-CH_2CF_2CF_2O-CH_2CF_2CH_2-$, $-CF_2CF_2CF_2O-CF_2CF_2-$, $-CF_2CF_2CF_2O-CF_2CF_2CH_2-$, $-CF_2CF_2O-CF_2-$, and $-CF_2CF_2O-CF_2CH_2-$. The fluorine-containing alkylene group having an ether bond is preferably a perfluoroalkylene group.

In general formula (5), $Y^3$ is preferably -COOM, $-SO_3M$, or $-OSO_3M$, where M is H, a metal atom, $NR^7_4$, imidazolium optionally having a substituent, pyridinium optionally having a substituent, or phosphonium optionally having a substituent; and $R^7$ is H or an organic group and optionally the same or different, and any two are optionally bonded to each other to form a ring.

The organic group of $R^7$ is preferably an alkyl group. $R^7$ is preferably H or a $C_{1-10}$ organic group, more preferably H or a $C_{1-4}$ organic group, and even more preferably H or a $C_{1-4}$ alkyl group. Examples of the metal atom include alkali metals (Group 1) and alkaline earth metals (Group 2), and Na, K, or Li is preferable. M is preferably -H, a metal atom, or $-NR^7_4$, more preferably -H, an alkali metal (Group 1), an alkaline earth metal (Group 2), or $-NR^7_4$, even more preferably -H, -Na, -K, - Li, or $-NH_4$, yet more preferably -Na, -K, or $-NH_4$, particularly preferably -Na or $-NH_4$, and most preferably $-NH_4$. $Y^3$ is preferably -COOM or $-SO_3M$, and more preferably -COOM.

The compound represented by general formula (5) is preferably a compound (5a) represented by general formula (5a) :

$$CH_2=CF(-CF_2-O-Rf-Y^3) \qquad (5a)$$

wherein Rf and $Y^3$ are as described above.

Specific examples of the compound represented by general formula (5a) include a compound represented by the following formula:

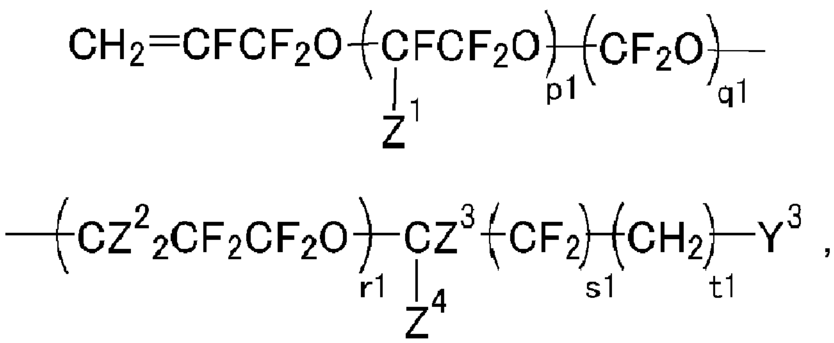

wherein $Z^1$ is F or $CF_3$; $Z^2$ and $Z^3$ are each independently H or F; $Z^4$ is H, F, or $CF_3$; p1 + q1 + r1 is an integer of 0 to 10; s1 is 0 or 1; t1 is an integer of 0 to 5; and $Y^3$ is as described above, provided that when $Z^3$ and $Z^4$ are both H, p1 + q1 + r1 + s1 is not 0. More specifically, preferable examples include:

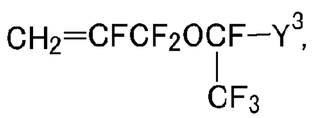 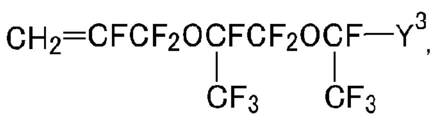

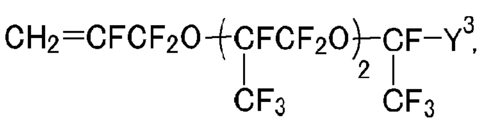 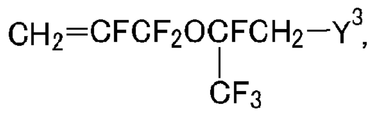

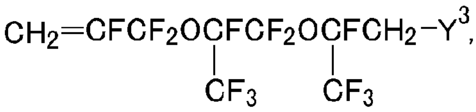 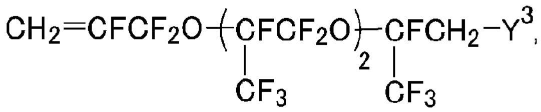

$CH_2=CFCF_2OCH_2CF_2-Y^3$ $CH_2=CFCF_2O(CH_2CF_2CF_2O)CH_2CF_2-Y^3$,

$CH_2=CFCF_2OCH_2CF_2CH_2-Y^3$,

$CH_2=CFCF_2O(CH_2CF_2CF_2O)CH_2CF_2CH_2-Y^3$

$CH_2=CFCF_2OCF_2CF_2-Y^3$, $CH_2=CFCF_2O(CF_2CF_2CF_2O)CF_2CF_2-Y^3$,

$CH_2=CFCF_2OCF_2CF_2CH_2-Y^3$

$CH_2=CFCF_2O(CF_2CF_2CF_2O)CF_2CF_2CH_2-Y^3$

$CH_2=CFCF_2OCF_2-Y^3$, $CH_2=CFCF_2O(CF_2CF_2O)CF_2-Y^3$,

$CH_2=CFCF_2OCF_2CH_2-Y^3$,

$CH_2=CFCF_2O(CF_2CF_2O)CF_2CH_2-Y^3$,

and, in particular,

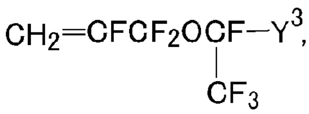 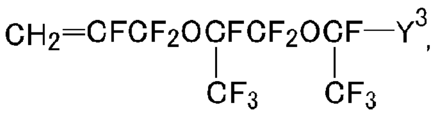

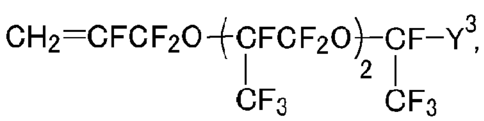 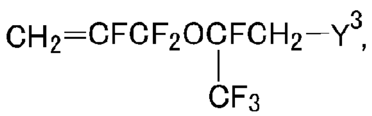

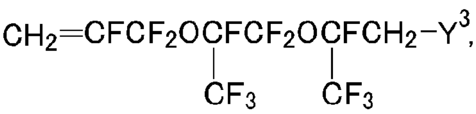 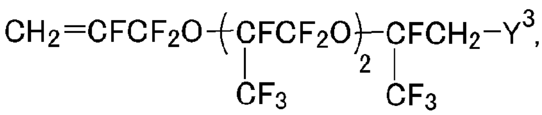

are preferable.

In the compound represented by general formula (5a), $Y^3$ in formula (5a) is preferably -COOM, and in particular, at least one selected from the group consisting of $CH_2=CFCF_2OCF(CF_3)COOM$ and $CH_2=CFCF_2OCF(CF_3)CF_2OCF(CF_3)COOM$ (wherein M is as defined above) is preferable, and $CH_2=CFCF_2OCF(CF_3)COOM$ is more preferable.

The compound represented by general formula (5) is preferably a compound (5b) represented by general formula (5b) :

$$CX^2{}_2=CFCF_2-O-(CF(CF_3)CF_2O)_{n5}-CF(CF_3)-Y^3 \qquad (5b)$$

wherein each $X^2$ is the same and represents F or H, n5 represents an integer of 0 or 1 to 10, and $Y^3$ is as defined above.

In general formula (5b), n5 in terms of the stability of the resulting aqueous dispersion is preferably an integer of 0 or 1 to 5, more preferably 0, 1, or 2, and even more preferably 0 or 1. $Y^3$ is preferably -COOM in terms of that a suitable water solubility and the stability of the aqueous dispersion can be obtained, and M is preferably H or $NH_4$ in terms of that the compound unlikely remains as an impurity, and that the heat resistance of the resulting formed article is improved.

Examples of the compound represented by general formula (5b) include $CH_2=CFCF_2OCF(CF_3)COOM$ and

$CH_2=CFCF_2OCF(CF_3)CF_2OCF(CF_3)COOM$, wherein M is as defined above.

Examples of the compound represented by general formula (5) also include a compound (5c) represented by general formula (5c):

$CF_2=CFCF_2\text{-}O\text{-}Rf\text{-}Y^3$ (5c)

wherein Rf and $Y^3$ are as described above.

More specifically, examples include:

$CF_2=CFCF_2OCF_2CF_2CF_2\text{-}Y^3$,

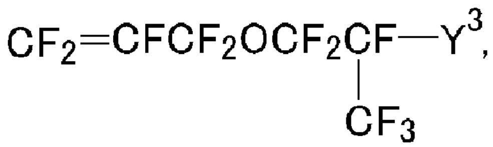

$CF_2=CFCF_2OCF_2CF_2CF_2CH_2\text{-}Y^3$,

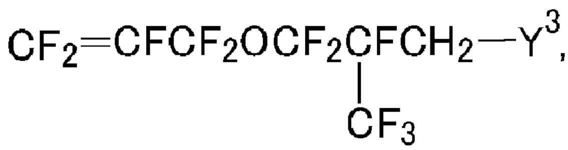

and the like.

In general formula (6), X is -H or -F. X may be both -F, or at least one may be -H. For example, one may be -F and the other may be -H, or both may be -H.

In general formula (6), Y is -H, -F, an alkyl group, or a fluorine-containing alkyl group. The alkyl group is an alkyl group that does not contain a fluorine atom, and has one or more carbon atoms. The alkyl group preferably has 6 or less carbon atoms, more preferably 4 or less carbon atoms, and even more preferably 3 or less carbon atoms. The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and even more preferably 3 or less carbon atoms. Y is preferably -H, -F, or $-CF_3$, and more preferably -F.

In general formula (6), at least one of X and Y preferably contains a fluorine atom. For example, X may be -H, and Y and Z may be -F.

In general formula (6), Rf is a fluorine-containing alkylene group having 1 to 40 carbon atoms or a fluorine-containing alkylene group having 2 to 100 carbon atoms and having an ether bond. The fluorine-containing alkylene group preferably has 2 or more carbon atoms. The number of carbon atoms in the fluorine-containing alkylene group is preferably 30 or less, more preferably 20 or less, and even more preferably 10 or less. Examples of the fluorine-containing alkylene group include $-CF_2-$, $-CH_2CF_2-$, $-CF_2CF_2-$, $-CF_2CH_2-$, $-CF_2CF_2CH_2-$, $-CF(CF_3)-$, $-CF(CF_3)CF_2-$, and $-CF(CF_3)CH_2-$. The fluorine-containing alkylene group is preferably a perfluoroalkylene group.

In general formula (6), $Y^3$ is preferably -COOM, $-SO_3M$, or $-OSO_3M$, where M is H, a metal atom, $NR^7_4$, imidazolium optionally having a substituent, pyridinium optionally having a substituent, or phosphonium optionally having a substituent; and $R^7$ is H or an organic group and optionally the same or different, and any two are optionally bonded to each other to form a ring.

The organic group of $R^7$ is preferably an alkyl group. $R^7$ is preferably H or a $C_{1\text{-}10}$ organic group, more preferably H or a $C_{1\text{-}4}$ organic group, and even more preferably H or a $C_{1\text{-}4}$ alkyl group. Examples of the metal atom include alkali metals (Group 1) and alkaline earth metals (Group 2), and Na, K, or Li is preferable. M is preferably -H, a metal atom, or $-NR^7_4$, more preferably -H, an alkali metal (Group 1), an alkaline earth metal (Group 2), or $-NR^7_4$, even more preferably -H, -Na, -K, - Li, or $-NH_4$, yet more preferably -Na, -K, or $-NH_4$, particularly preferably -Na or $-NH_4$, and most preferably $-NH_4$. $Y^3$ is preferably -COOM or $-SO_3M$, and more preferably -COOM.

The compound represented by general formula (6) is preferably at least one selected from the group consisting of compounds represented by general formulas (6a) to (6f):

$CF_2=CF\text{-}O\text{-}(CF_2)_{n1}\text{-}Y^3$ (6a)

wherein n1 represents an integer of 1 to 10, and $Y^3$ is as defined above,

$$CF_2=CF-O-(CF_2C(CF_3)F)_{n2}-Y^3 \qquad (6b)$$

wherein n2 represents an integer of 1 to 5, and $Y^3$ is as defined above,

$$CF_2=CF-O-(CFX^1)_{n3}-Y^3 \qquad (6c)$$

wherein $X^1$ represents F or $CF_3$, n3 represents an integer of 1 to 10, and $Y^3$ is as defined above,

$$CF_2=CF-O-(CF_2CFX^1O)_{n4}-(CF_2)_{n6}-Y^3 \qquad (6d)$$

wherein n4 represents an integer of 1 to 10, n6 represents an integer of 1 to 3, and $Y^3$ and $X^1$ are as defined above,

$$CF_2=CF-O-(CF_2CF_2CFX^1O)_{n5}-CF_2CF_2CF_2-Y^3 \qquad (6e)$$

wherein n5 represents an integer of 0 to 10, and $Y^3$ and $X^1$ are as defined above, and

$$CF_2=CF-O(-CF_2)_{n6}-O-CF_2-Y^3 \qquad (6f)$$

wherein n6 represents an integer of 1 to 6, and $Y^3$ and $X^1$ are as defined above.

In general formula (6a), n1 is preferably an integer of 5 or less, and more preferably an integer of 2 or less. $Y^3$ is preferably -COOM or $-SO_3M$ in terms of that a suitable water solubility and the stability of the aqueous dispersion can be obtained, and M is preferably Na, H, or $NH_4$ because of easy synthesis, and is preferably H or $NH_4$ in terms of that the compound unlikely remains as an impurity, and that the heat resistance of the resulting formed article is increased.

Examples of the compound represented by general formula (6a) include $CF_2=CF-O-CF_2COOM$, $CF_2=CF(OCF_2CF_2COOM)$, $CF_2=CF(OCF_2CF_2CF_2COOM)$, $CF_2=CF(OCF_2CF_2SO_3M)$, $CF_2=CF(OCF_2SO_3M)$, and $CF_2=CF(OCF_2CF_2CF_2SO_3M)$, wherein M is as defined above.

In general formula (6b), n2 is preferably an integer of 3 or less in terms of the stability of the resulting aqueous dispersion, $Y^3$ is preferably -COOM or $-SO_3M$ in terms of that a suitable water solubility and the stability of the aqueous dispersion can be obtained, and M is preferably H or $NH_4$ in terms of that the compound unlikely remains as an impurity, and that the heat resistance of the resulting formed article is increased.

In general formula (6c), n3 is preferably an integer of 5 or less in terms of water solubility, $Y^3$ is preferably -COOM or $-SO_3M$ in terms of that a suitable water solubility and the stability of the aqueous dispersion can be obtained, and M is preferably Na, H, or $NH_4$ in terms of an increased dispersion stability.

In general formula (6d), $X^1$ is preferably $-CF_3$ in terms of the stability of the aqueous dispersion, n4 is preferably an integer of 5 or less in terms of water solubility, $Y^3$ is preferably -COOM or $-SO_3M$ in terms of that a suitable water solubility and the stability of the aqueous dispersion can be obtained, and M is preferably Na, H, or $NH_4$.

Examples of the compound represented by general formula (6d) include $CF_2=CFOCF_2CF(CF_3)OCF_2CF_2COOM$, $CF_2=CFOCF_2CF(CF_3)OCF_2COOM$, $CF_2=CFOCF_2CF(CF_3)OCF_2CF_2CF_2COOM$, $CF_2=CFOCF_2CF(CF_3)OCF_2SO_3M$, $CF_2=CFOCF_2CF(CF_3)OCF_2CF_2SO_3M$, and $CF_2=CFOCF_2CF(CF_3)OCF_2CF_2CF_2SO_3M$, wherein M represents H, $NH_4$, or an alkali metal.

In general formula (6e), n5 is preferably an integer of 5 or less in terms of water solubility, $Y^3$ is preferably -COOM in terms of that a suitable water solubility and the stability of the aqueous dispersion can be obtained, and M is preferably Na, H, or $NH_4$.

Examples of the compound represented by general formula (6e) include $CF_2=CFOCF_2CF_2CF_2COOM$, wherein M represents H, $NH_4$, or an alkali metal.

Examples of the compound represented by general formula (6f) include $CF_2=CFOCF_2CF_2CF_2OCF_2COOM$, wherein M represents H, $NH_4$, or an alkali metal.

In general formula (7), Rf is preferably a fluorine-containing alkylene group having 1 to 40 carbon atoms. In general formula (7), at least one of X and Y preferably contains a fluorine atom.

The compound represented by general formula (7) is preferably at least one selected from the group consisting of a compound represented by general formula (7a):

$$CF_2=CF-(CF_2)_{n1}-Y^3 \qquad (7a)$$

(wherein n1 represents an integer of 1 to 10, and $Y^3$ is as defined above) and a compound represented by general

formula (7b) :

$$CF_2=CF-(CF_2C(CF_3)F)_{n2}-Y^3 \qquad (7b)$$

(wherein n2 represents an integer of 1 to 5, and $Y^3$ is as defined above).

$Y^3$ in general formula (7) is preferably $-SO_3M$ or -COOM, and M is preferably H, a metal atom, $NR^7{}_4$, imidazolium optionally having a substituent, pyridinium optionally having a substituent, or phosphonium optionally having a substituent. $R^7$ represents H or an organic group.

In general formula (7a), n1 is preferably an integer of 5 or less, and more preferably an integer of 2 or less. $Y^3$ is preferably -COOM in terms of that a suitable water solubility and the stability of the aqueous dispersion can be obtained, and M is preferably H or $NH_4$ in terms of that the compound unlikely remains as an impurity, and that the heat resistance of the resulting formed article is increased.

Examples of the compound represented by general formula (7a) include $CF_2=CFCF_2COOM$, wherein M is as defined above.

In general formula (7b), n2 is preferably an integer of 3 or less in terms of the stability of the resulting aqueous dispersion, $Y^3$ is preferably -COOM in terms of that a suitable water solubility and the stability of the aqueous dispersion can be obtained, and M is preferably H or $NH_4$ in terms of that the compound unlikely remains as an impurity, and that the heat resistance of the resulting formed article is increased.

The fluorine-containing compound (A0) is preferably at least one selected from the group consisting of a compound represented by general formula (5), a compound represented by general formula (6), and a compound represented by general formula (7), and more preferably at least one selected from the group consisting of a compound represented by general formula (5) and a compound represented by general formula (6), and since a large number of fluorine-containing elastomer particles can be generated at the initial stage of the polymerization reaction, even more preferably a compound represented by general formula (5).

The compound represented by general formula (5) is preferably at least one selected from the group consisting of a compound represented by general formula (5a), a compound represented by general formula (5b), and a compound represented by general formula (5c). In particular, at least one selected from the group consisting of a compound represented by general formula (5a) and a compound represented by general formula (5b) is more preferable, and a compound represented by general formula (5a) is even more preferable.

The amount of the fluorine-containing compound (A0) when polymerizing the fluorine-containing monomer is preferably 3 to 5,000 ppm by mass, more preferably 5 ppm by mass or more, even more preferably 10 ppm by mass or more, particularly preferably 20 ppm by mass or more, and most preferably 30 ppm by mass or more, and is more preferably 1,000 ppm by mass or less, even more preferably 500 ppm by mass or less, particularly preferably 200 ppm by mass or less, and most preferably 100 ppm by mass or less, based on the aqueous medium. By regulating the amount of the fluorine-containing compound (A0) to the above range, an even greater number of fluorine-containing elastomer particles can be generated while further suppressing adhesion of the fluorine-containing elastomer to a polymerization tank.

The amount of the fluorine-containing compound (A0) is also preferably regulated according to the type of the polymerization initiator used in the polymerization and the polymerization temperature.

When using a non-redox polymerization initiator as the polymerization initiator and performing the polymerization at 40 to 70°C, the amount of the fluorine-containing compound (A0) is preferably 3 to 300 ppm by mass, more preferably 3 to 150 ppm by mass, even more preferably 5 to 100 ppm by mass, and most preferably 8 to 80 ppm by mass based on the aqueous medium.

When using a non-redox polymerization initiator as the polymerization initiator and performing the polymerization at higher than 70°C and 98°C or lower, the amount of the fluorine-containing compound (A0) is preferably 3 to 500 ppm by mass, more preferably 3 to 200 ppm by mass, even more preferably 5 to 120 ppm by mass, and most preferably 20 to 110 ppm by mass based on the aqueous medium.

When using a redox polymerization initiator as the polymerization initiator and performing the polymerization at 10°C or higher and lower than 40°C, the amount of the fluorine-containing compound (A0) is preferably 3 to 300 ppm by mass, more preferably 3 to 100 ppm by mass, even more preferably 5 to 80 ppm by mass, and most preferably 10 to 70 ppm by mass based on the aqueous medium.

When using a redox polymerization initiator as the polymerization initiator and performing the polymerization at 40 to 70°C, the amount of the fluorine-containing compound (A0) is preferably 3 to 500 ppm by mass, more preferably 5 to 300 ppm by mass, even more preferably 10 to 200 ppm by mass, and most preferably 15 to 150 ppm by mass based on the aqueous medium.

When using a redox polymerization initiator as the polymerization initiator and performing the polymerization at higher than 70°C and 98°C or lower, the amount of the fluorine-containing compound (A0) is preferably 5 to 500 ppm by mass, more preferably 8 to 300 ppm by mass, even more preferably 15 to 200 ppm by mass, and most preferably

20 to 150 ppm by mass based on the aqueous medium.

With the amount of the fluorine-containing compound (A0) being within the above range, the adhesion rate can be more reduced, and the polymerization time can be shortened.

The fluorine-containing compound (A0) is preferably added before the polymerization initiator is added to initiate the polymerization reaction. Preferably, the fluorine-containing compound (A) is added only before the initiation of the polymerization reaction and not added after the initiation of polymerization.

The compound (A1) is a compound having one or more triple bonds and one or more hydrophilic groups within the molecule.

The triple bond is preferably a carbon-carbon triple bond. The number of triple bonds in the compound (A1) is preferably 1 to 3, more preferably 1 to 2, and even more preferably 1.

Examples of the hydrophilic group include an anionic hydrophilic group, a cationic hydrophilic group, and a nonionic hydrophilic group. For example, the compound (A1) may solely contain an anionic hydrophilic group or may solely contain a nonionic hydrophilic group. The compound (A1) is preferably (A1) a compound having a triple bond and an anionic hydrophilic group.

Since an even greater number of fluorine-containing elastomer particles can be generated while further suppressing adhesion of the fluorine-containing elastomer to a polymerization tank, for example, the hydrophilic group is preferably an anionic hydrophilic group, more preferably -COOM, $-SO_3M$, $-OSO_3M$, $-B(OM)(OR^2)$, $-OB(OM)(OR^2)$, $-PO(OM)(OR^2)$, or - OPO(OM) $(OR^2)$, and even more preferably -COOM. M is H, a metal atom, $NR^3_4$, imidazolium optionally having a substituent, pyridinium optionally having a substituent, or phosphonium optionally having a substituent. $R^3$ is the same or different at each occurrence, and is H or an organic group. $R^2$ is H, a metal atom, $NR^3_4$, imidazolium optionally having a substituent, pyridinium optionally having a substituent, phosphonium optionally having a substituent, or an alkynyl group.

M is preferably H, a metal atom, or $NR^3_4$, more preferably H, an alkali metal (Group 1), an alkaline earth metal (Group 2), or $NR^3_4$, even more preferably H, Na, K, Li, or $NH_4$, and particularly preferably H, Na, K, or $NH_4$.

The number of hydrophilic groups in the compound (A1) is preferably 1 to 3, more preferably 1 or 2, and even more preferably 1.

Since an even greater number of fluorine-containing elastomer particles can be generated while further suppressing adhesion of the fluorine-containing elastomer to a polymerization tank, the number of carbon atoms in the compound (A1) is preferably 2 to 25, more preferably 2 to 10, even more preferably 2 to 6, and particularly preferably 2 to 4. Herein, the number of carbon atoms in the compound (A1) does not include the number of carbon atoms in a carboxylic acid group and a carboxylic acid salt group that may be contained in the compound (A1).

The compound (A1) is preferably a fluorine-free compound.

In the production method of the present disclosure, one or two or more compounds (A1) may be used. Also, the compound (A1) may be a compound solely having an anionic hydrophilic group, may be a compound solely having a nonionic hydrophilic group, or may be a combination of a compound containing an anionic hydrophilic group and a compound containing a nonionic hydrophilic group.

The compound (A1) is preferably a compound (A1) represented by general formula (A1):

General formula (A1): $A^1\text{-}R^1\text{-}C{\equiv}CX^1$

wherein $A^1$ is -COOM, $-SO_3M$, $-OSO_3M$, $-B(OM)(OR^2)$, $-OB(OM)(OR^2)$, - $PO(OM)(OR^2)$, or $-OPO(OM)(OR^2)$; M is H, a metal atom, $NR^3_4$, imidazolium optionally having a substituent, pyridinium optionally having a substituent, or phosphonium optionally having a substituent; $R^3$ is the same or different at each occurrence and is H or an organic group; $R^2$ is H, a metal atom, $NR^3_4$, imidazolium optionally having a substituent, pyridinium optionally having a substituent, phosphonium optionally having a substituent, or an alkynyl group; $R^1$ is a single bond or a divalent hydrocarbon group optionally having a halogen atom; and $X^1$ is H, $A^1$, or a hydrocarbon group optionally having a halogen atom, an ether bond, an ester bond, or an amide bond.

In general formula (A1), $A^1$ is -COOM, $-SO_3M$, $-OSO_3M$, - $B(OM)(OR^2)$, $-OB(OM)(OR^2)$, $-PO(OM)(OR^2)$, or $-OPO(OM)(OR^2)$. Here, M is H, a metal atom, $NR^3_4$, imidazolium optionally having a substituent, pyridinium optionally having a substituent, or phosphonium optionally having a substituent; $R^3$ is the same or different at each occurrence and is H or an organic group; $R^2$ is H, a metal atom, $NR^3_4$, imidazolium optionally having a substituent, pyridinium optionally having a substituent, phosphonium optionally having a substituent, or an alkynyl group.

Since an even greater number of fluorine-containing elastomer particles can be generated while further suppressing adhesion of the fluorine-containing elastomer to a polymerization tank, $A^1$ is preferably -COOM.

Since an even greater number of fluorine-containing elastomer particles can be generated while further suppressing adhesion of the fluorine-containing elastomer to a polymerization tank, M in $A^1$ is preferably H, a metal atom, or $NR^3_4$, more preferably H, an alkali metal (Group 1), an alkaline earth metal (Group 2), or $NR^3_4$, even more preferably H, Na, K, Li, or $NH_4$, and particularly preferably H, Na, K, or $NH_4$.

The alkynyl group of $R^2$ is preferably an alkynyl group that does not contain a fluorine atom. The alkynyl group of $R^2$ is preferably an ethynyl group optionally substituted with an alkyl group having 1 to 5 carbon atoms, and is more preferably an unsubstituted ethynyl group.

$R^2$ is preferably H, a metal atom, or $NR^3_4$, more preferably H, an alkali metal (Group 1), an alkaline earth metal (Group 2), or $NR^3_4$, even more preferably H, Na, K, Li, or $NH_4$, particularly preferably H, Na, K, or $NH_4$, and most preferably H.

It is also a suitable embodiment that $R^2$ is an ethynyl group when $A^1$ is $-PO(OM)(OR^2)$ or $-OPO(OM)$ $(OR^2)$.

In general formula (A1), $R^1$ is a single bond or a divalent hydrocarbon group optionally having a halogen atom.

Examples of the divalent hydrocarbon group of $R^1$ in general formula (A1) include a linear or branched alkanediyl group, a linear or branched alkenediyl group, a linear or branched alkadienediyl group, or a cycloalkanediyl group.

The halogen atom that $R^1$ may contain is preferably F, Cl, Br, or I, and more preferably Cl, Br, or I.

Since an even greater number of fluorine-containing elastomer particles can be generated while further suppressing adhesion of the fluorine-containing elastomer to a polymerization tank, $R^1$ is preferably a single bond or a linear or branched alkanediyl group having 1 to 5 carbon atoms and optionally having a halogen atom, more preferably a single bond, a methylene group, or an ethylene group, even more preferably a single bond or a methylene group, and particularly preferably a single bond.

The number of carbon atoms in $R^1$ is preferably 0 to 20, more preferably 0 to 10, even more preferably 0 to 5, and particularly preferably 0 to 3.

In general formula (A1), $X^1$ is H, $A^1$, or a hydrocarbon group optionally having a halogen atom, an ether bond, an ester bond, or an amide bond. Here, $A^1$ is as described above.

Examples of the hydrocarbon group of $X^1$ include an alkyl group optionally having an aromatic group or a cycloalkyl group, an alkenyl group optionally having an aromatic group or a cycloalkyl group, a cycloalkyl group optionally having an aromatic group, and an aromatic group optionally having an alkyl group. The alkyl group of $X^1$ and the alkenyl group of $X^1$ are linear or branched. The cycloalkyl group of $X^1$ and the aromatic group optionally having an alkyl group of $X^1$ are monocyclic or polycyclic.

The halogen atom that $X^1$ may contain is preferably F, Cl, Br, or I, and more preferably Cl, Br, or I.

The number of carbon atoms in the hydrocarbon group of $X^1$ is preferably 1 to 20, more preferably 1 to 10, even more preferably 1 to 5, and particularly preferably 1 to 3.

Since an even greater number of fluorine-containing elastomer particles can be generated while further suppressing adhesion of the fluorine-containing elastomer to a polymerization tank, $X^1$ is preferably H, an alkyl group having 1 to 5 carbon atoms and optionally having a halogen atom, or $A^1$, more preferably H or $A^1$, even more preferably H, $-SO_3M$, or - COOM, and particularly preferably H or -COOM.

When $X^1$ is $A^1$, or that is to say, when $X^1$ is -COOM, $-SO_3M$, $-OSO_3M$, $-B(OM)_2$, $-OB(OM)_2$, $-PO(OM)_2$, or $-OPO(OM)_2$, M is preferably H, a metal atom, or $NR^3_4$, more preferably H, an alkali metal (Group 1), an alkaline earth metal (Group 2), or $NR^3_4$, even more preferably H, Na, K, Li, or $NH_4$, particularly preferably H, Na, K, or $NH_4$, and most preferably H.

Examples of the compound (A1) include a compound (A1-1) represented by general formula (A1-1):

General formula (A1-1): $A^1-R^1-C \equiv C-A^1$

wherein $R^1$ and $A^1$ are as described above and optionally the same or different at each occurrence.

The compound (A1-1) contains two $A^1$, $A^1$ contains one M, and thus the compound (A1-1) contains two M. The compound (A1-1) is preferably a compound in which only one of two M is H.

More specifically, examples of the compound (A1-1) include compounds represented by the following general formulas:

$MOOC-R^1-C \equiv C-COOM$

$MO_3S-R^1-C \equiv C-SO_3M$

$MO_3SO-R^1-C \equiv C-OSO_3M$

$(R^2O)(MO)B-R^1-C \equiv C-B(OM)(OR^2)$

$(R^2O)(MO)BO-R^1-C \equiv C-OB(OM)(OR^2)$

$(R^2O)(MO)OP-R^1-C \equiv C-PO(OM)(OR^2)$

$(R^2O)(MO)OPO-R^1-C\equiv C-OPO(OM)(OR^2)$

wherein $R^1$, M, and $R^2$ are as described above and optionally the same or different at each occurrence.

In particular, the compound (A1-1) is preferably a compound represented by the general formula:

$MOOC-R^1-C\equiv C-COOM$

wherein $R^1$ and M are as described above and optionally the same or different at each occurrence.

Examples of the compound (A1) include a compound (A1-2) represented by general formula (A1-2):

General formula (A1-2): $A^1-R^1-C\equiv C-R^4$

wherein $A^1$ and $R^1$ are as described above, and $R^4$ is H or a hydrocarbon group optionally having a halogen atom, an ether bond, an ester bond, or an amide bond.

In general formula (A1-2), $R^4$ is H or a hydrocarbon group optionally having a halogen atom, an ether bond, an ester bond, or an amide bond.

Examples of the hydrocarbon group of $R^4$ include an alkyl group optionally having an aromatic group or a cycloalkyl group, an alkenyl group optionally having an aromatic group or a cycloalkyl group, a cycloalkyl group optionally having an aromatic group, and an aromatic group optionally having an alkyl group. The alkyl group of $R^4$ and the alkenyl group of $R^4$ are linear or branched. The cycloalkyl group of $R^4$ and the aromatic group optionally having an alkyl group of $R^4$ are monocyclic or polycyclic.

The halogen atom that the hydrocarbon group of $R^4$ may contain is preferably F, Cl, Br, or I, and more preferably Cl, Br, or I.

The number of carbon atoms in the hydrocarbon group of $R^4$ is preferably 1 to 20, more preferably 1 to 10, even more preferably 1 to 5, and particularly preferably 1 to 3.

Since an even greater number of fluorine-containing elastomer particles can be generated while further suppressing adhesion of the fluorine-containing elastomer to a polymerization tank, $R^4$ is preferably H or an alkyl group having 1 to 20 carbon atoms, more preferably H or an alkyl group having 1 to 10 carbon atoms, even more preferably H or an alkyl group having 1 to 5 carbon atoms, particularly preferably H or an alkyl group having 1 to 3 carbon atoms, and most preferably H.

In particular, the compound (A1-2) is preferably a compound represented by the general formula:

$MOOC-R^1-C\equiv C-R^4$

wherein $R^1$, $R^4$, and M are as described above and optionally the same or different at each occurrence.

Examples of the compound (A1) include

acetylenesulfonic acid,
propiolic acid,
ethynyl hydrogen sulfate,
undec-10-ynyl hydrogen sulfate,
but-3-ynyl hydrogen sulfate,
prop-2-ynyl hydrogen sulfate,
pent-4-ynyl hydrogen sulfate,
5-methyl-1-hexyn-3-yl hydrogen sulfate,
ethynylboronic acid,
ethynyl dihydrogen phosphate,
diethynyl hydrogen phosphate,
acetylenedisulfonic acid,
acetylenedicarboxylic acid,
1-propynylsulfonic acid,
2-phenyl-1-ethynylsulfonic acid,
hex-1-yn-1-sulfonic acid,
hexadec-1-yn-1-sulfonic acid,
3,3-dimethyl-1-butinsulfonic acid,
2-cyclopropyl-1-ethynesulfonic acid,
3-methoxy-1-propynylsulfonic acid,
3-phenoxy-1-propynylsulfonic acid,

hept-2-ynoic acid,
6-phenylhex-2-ynoic acid,
3-cyclopropyl-2-propanoic acid,
cyclohexylpropiolic acid,
3-cyclopentyl-2-propynoic acid,
but-2-ynoic acid,
undeca-2,4-dien-6-ynoic acid,
3-(cyclohepta-2,4,6-trien-1-yl)propanoic acid,
6-(fluoren-9-yl)hex-2-ynoic acid,
6-cyclohexyl-hex-2-ynoic acid,
pent-3-ynoic acid,
4-phenyl-3-butynoic acid,
4-(4-methylphenyl)-3-butynoic acid,
4-p-chlorphenyl-3-butynoic acid,
4-p-bromphenyl-3-butynoic acid,
4-(4-fluorophenyl)-3-butynoic acid,
4-[4-(trifluoromethyl)phenyl]-3-butynoic acid,
4-(3-methylphenyl)-3-butynoic acid,
3-cyclopropyl-1-(1-carboxycyclopropyl)-1-propynoic acid,
4-(2-naphthalenyl)-3-butynoic acid,
4-cyclohexyl-3-propynoic acid,
5-phenylpent-1-ynoxyboronic acid,
but-3-en-1-ynoxyboronic acid,
2-phenylethynoxyboronic acid,
2-phenylethynyl phosphate,
and salts thereof.

Since an even greater number of fluorine-containing elastomer particles can be generated while further suppressing adhesion of the fluorine-containing elastomer to a polymerization tank, the compound (A1) is more preferably propiolic acid, acetylenedicarboxylic acid, or a salt thereof (such as an ammonium salt, a sodium salt, or a potassium salt).

The amount of the compound (A1) when polymerizing the fluorine-containing monomer is preferably 3 to 5,000 ppm by mass, more preferably 5 ppm by mass or more, even more preferably 10 ppm by mass or more, particularly preferably 20 ppm by mass or more, and most preferably 30 ppm by mass or more, and is more preferably 1,000 ppm by mass or less, even more preferably 500 ppm by mass or less, particularly preferably 300 ppm by mass or less, and most preferably 200 ppm by mass or less, based on the aqueous medium. By regulating the amount of the compound (A1) to the above range, an even greater number of fluorine-containing elastomer particles can be generated while further suppressing adhesion of the fluorine-containing elastomer to a polymerization tank.

The fluorine-containing compound (A2) is a compound that contains at least one fluorine atom within the molecule and that is represented by general formula (A2). In the production method of the present disclosure, one or two or more fluorine-containing compounds (A2) may be used.

General formula (A2) : $CX^1X^2=CX^3\text{-}Z$

wherein $X^1$ to $X^3$ are each independently H, F, or a fluorine-containing alkyl group; when $X^1$ and $X^2$ are both H, $X^3$ is F or a fluorine-containing alkyl group; Z is a group represented by - COOM, $-SO_3M$, $-OSO_3M$, $-PO(OM)_2$, $-OPO(OM)_2$, $-BO(OM)_2$, or - $OBO(OM)_2$; M is H, a metal atom, $NR^1_4$, imidazolium optionally having a substituent, pyridinium optionally having a substituent, or phosphonium optionally having a substituent; and $R^1$ is independently H or an organic group, and any two $R^1$ are optionally bonded to each other to form a ring.

In general formula (A2), $X^1$ to $X^3$ are each independently H, F, or a fluorine-containing alkyl group.

In general formula (A2), $X^1$ and $X^2$ are each independently preferably H or F, and more preferably $X^1$ and $X^2$ are both H.

The fluorine-containing alkyl group is not limited as long as it is an alkyl group containing at least one fluorine atom, and examples include linear, branched, or cyclic fluorine-containing alkyl groups. The fluorine-containing alkyl group of $X^3$ may contain an ether bond, an ester bond, or an amide bond. The number of carbon atoms in the fluorine-containing alkyl group of $X^3$ is preferably 1 or more, and is preferably 20 or less, more preferably 10 or less, even more preferably 5 or less, and particularly preferably 3 or less.

The fluorine-containing alkyl group of $X^1$ and $X^2$ is preferably $CF_3$, $CF_2H$, or $CFH_2$.

The fluorine-containing alkyl group of $X^3$ is preferably $CF_3$, $CF_2H$, or $CFH_2$.

In general formula (A2), when $X^1$ and $X^2$ are both H, $X^3$ is F or a fluorine-containing alkyl group. $X^3$ is preferably F, $CF_3$, $CF_2H$ or $CFH_2$, and more preferably F or $CF_3$.

In general formula (A2), Z is a group represented by - COOM, $-SO_3M$, $-OSO_3M$, $-PO(OM)_2$, $-OPO(OM)_2$, $-BO(OM)_2$, or $-OBO(OM)_2$. Since an even greater number of fluorine-containing elastomer particles can be generated while further suppressing adhesion of the fluorine-containing elastomer to a polymerization tank, Z is preferably -COOM, $-SO_3M$, or $-OSO_3M$, and more preferably - COOM.

M is H, a metal atom, $NR^1_4$, imidazolium optionally having a substituent, pyridinium optionally having a substituent, or phosphonium optionally having a substituent.

$R^1$ is independently H or an organic group, and any two $R^1$ may be bonded to each other to form a ring. The organic group is preferably an alkyl group. $R^1$ is preferably H or a $C_{1-10}$ organic group, more preferably H or a $C_{1-4}$ organic group, even more preferably H or a $C_{1-4}$ alkyl group, and most preferably H.

Examples of the metal atom include monovalent or divalent metal atoms, an alkali metal (Group 1) or an alkaline earth metal (Group 2) is preferable, and Na, K, or Li is more preferable.

Since an even greater number of fluorine-containing elastomer particles can be generated while further suppressing adhesion of the fluorine-containing elastomer to a polymerization tank, M is preferably H, a metal atom, or $NR^1_4$, more preferably H or $NR^1_4$, and even more preferably H or $NH_4$.

Since an even greater number of fluorine-containing elastomer particles can be generated while further suppressing adhesion of the fluorine-containing elastomer to a polymerization tank, the fluorine-containing compound (A2) is preferably at least one selected from the group consisting of 2-trifluoromethyl acrylic acid, $\alpha$-fluoroacrylic acid, 3-fluoroacrylic acid, 2,3-difluoroacrylic acid, 3,3-difluoroacrylic acid, perfluoroacrylic acid, 3-trifluoromethyl acrylic acid, 2-difluoromethyl acrylic acid, 2-monofluoromethyl acrylic acid, 3-monofluoromethyl acrylic acid, 3-difluoromethyl acrylic acid, and a salt thereof, and more preferably at least one selected from the group consisting of 2-trifluoromethylacrylic acid and $\alpha$-fluoroacrylic acid.

The amount of the fluorine-containing compound (A2) when polymerizing the fluorine-containing monomer is preferably 3 to 5,000 ppm by mass, more preferably 5 ppm by mass or more, even more preferably 10 ppm by mass or more, particularly preferably 20 ppm by mass or more, and most preferably 30 ppm by mass or more, and is more preferably 1,000 ppm by mass or less, even more preferably 500 ppm by mass or less, particularly preferably 300 ppm by mass or less, and most preferably 200 ppm by mass or less, based on the aqueous medium. By regulating the amount of the fluorine-containing compound (A2) to the above range, an even greater number of fluorine-containing elastomer particles can be generated while further suppressing adhesion of the fluorine-containing elastomer to a polymerization tank.

The fluorine-free compound (A3) is a compound that does not contain a fluorine atom within the molecule and that is represented by general formula (A3). In the production method of the present disclosure, one or two or more fluorine-free compounds (A3) may be used.

General formula (A3) : $CR^1X^1=CX^2-R^2-COOM$

wherein $R^1$ is H or an alkyl group that optionally contains an ether bond, an ester bond, or an amide bond; $R^2$ is a single bond or an alkylene group in which at least one hydrogen atom bonded to a carbon atom is optionally replaced with a group represented by $-R^3-COOM$ ($R^3$ is a single bond or an alkylene group) and which optionally contains an ether bond, an ester bond, an amide bond, an unsaturated bond, or a cyclic structure; $X^1$ and $X^2$ are each independently a group represented by $-R^1$ ($R^1$ is as described above) or $-R^2-COOM$ ($R^2$ is as described above); M is H, a metal atom, $NR^4_4$, imidazolium optionally having a substituent, pyridinium optionally having a substituent, or phosphonium optionally having a substituent; and $R^4$ is independently H or an organic group, and any two $R^4$ are optionally bonded to each other to form a ring.

The fluorine-free compound (A3) is usually water-soluble. The solubility of the fluorine-free compound (A3) in water may be 0.1 g or more per 100 g of water.

In general formula (A3), $R^1$ is H or an alkyl group.

The alkyl group of $R^1$ is not limited as long as it is an alkyl group that does not contain a fluorine atom, and examples include linear, branched, or cyclic alkyl groups. The alkyl group of $R^1$ may contain an ether bond, an ester bond, or an amide bond. The number of carbon atoms in the alkyl group of $R^1$ is preferably 1 or more, and is preferably 20 or less, more preferably 10 or less, even more preferably 5 or less, and particularly preferably 3 or less.

While at least one hydrogen atom bonded to a carbon atom may be replaced with a substituent, the alkyl group of $R^1$ is preferably an unsubstituted alkyl group. Examples of the alkyl group of $R^1$ include $-CH_3$, $-CH_2CH_3$, $-CH_2CH_2CH_3$, $-CH(CH_3)CH_3$, - $(CH_2)_yCH_3$ (y is 3 to 19), and $-COOCH_3$, and, in particular, $-CH_3$ or $-CH_2CH_3$ is preferable, and $-CH_3$ is more preferable.

In general formula (A3), $R^2$ is a single bond or an alkylene group. The alkylene group of $R^2$ is not limited as long as it is an alkylene group that does not contain a fluorine atom, and examples include linear or branched alkylene

groups. The number of carbon atoms in the alkylene group of $R^2$ is preferably 1 or more, and is preferably 20 or less, more preferably 10 or less, even more preferably 5 or less, and particularly preferably 3 or less.

In the alkylene group of $R^2$, at least one hydrogen atom bonded to a carbon atom may be replaced with a substituent. Examples of the substituent include groups represented by $-R^3$-COOM in addition to those mentioned above. The number of groups represented by $-R^3$-COOM contained in the alkylene of $R^2$ is preferably 1 to 3, and more preferably 1.

The alkylene group of $R^2$ may contain an ether bond, an ester bond, an amide bond, or an unsaturated bond. The alkylene group of $R^2$ may contain a cyclic structure such as a cycloalkylene group optionally containing an unsaturated bond.

Examples of the alkylene group of $R^2$ include $-CH_2-$, $-CH_2CH_2-$, $-CH_2CH_2CH_2-$, $-CH(CH_3)CH_2-$, $-CH_2-C(CH_3)_2-$, $-(CH_2)_y-$ (y is 3 to 19), $-CH_2-CH(-COOM)-$, $-CH_2-C(-CH_3)(-COOM)-$, $-CH_2-O-CH_2-$, $-CH(-COOM)-CH_2-$,

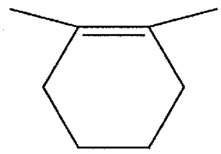 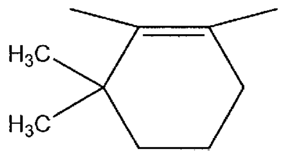

and, in particular, $-CH_2-$ or $-CH_2CH_2-$ is preferable, and $-CH_2-$is more preferable.

$R^3$ is a single bond or an alkylene group, and preferably a single bond. The alkylene group of $R^3$ is not limited as long as it is an alkylene group that does not contain a fluorine atom, and examples include linear or branched alkylene groups. The number of carbon atoms in the alkylene group of $R^3$ is preferably 1 or more, and is preferably 20 or less, more preferably 10 or less, even more preferably 5 or less, and particularly preferably 3 or less.

In the alkylene group of $R^3$, at least one hydrogen atom bonded to a carbon atom may be replaced with a substituent. Examples of the substituent include those mentioned above.

The alkylene group of $R^3$ may contain an ether bond, an ester bond, an amide bond, or an unsaturated bond. The alkylene group of $R^3$ may contain a cyclic structure such as a cycloalkylene group optionally containing an unsaturated bond.

Examples of the alkylene group of $R^3$ include $-CH_2-$, $-CH_2CH_2-$, $-CH_2CH_2CH_2-$, and $-CH(CH_3)CH_2-$, and, in particular, $-CH_2-$is preferable.

In general formula (A3), $X^1$ and $X^2$ are each independently a group represented by $-R^1$ or $-R^2$-COOM. $R^1$, $-R^2$, and M are as described above.

M is H, a metal atom, $NR^4_4$, imidazolium optionally having a substituent, pyridinium optionally having a substituent, or phosphonium optionally having a substituent.

$R^4$ is independently H or an organic group, and any two $R^4$ are optionally bonded to each other to form a ring. The organic group is preferably an alkyl group. $R^4$ is preferably H or a $C_{1-10}$ organic group, more preferably H or a $C_{1-4}$ organic group, even more preferably H or a $C_{1-4}$ alkyl group, and most preferably H.

Examples of the metal atom include monovalent or divalent metal atoms, an alkali metal (Group 1) or an alkaline earth metal (Group 2) is preferable, and Na, K, or Li is more preferable.

Since an even greater number of fluorine-containing elastomer particles can be generated while further suppressing adhesion of the fluorine-containing elastomer to a polymerization tank, M is preferably H, a metal atom, or $NR^4_4$, more preferably H or $NR^4_4$, and even more preferably H or $NH_4$.

Since an even greater number of fluorine-containing elastomer particles can be generated while further suppressing adhesion of the fluorine-containing elastomer to a polymerization tank, the fluorine-free compound (A3) is preferably a fluorine-free compound represented by any of the following general formulas.

General formula (A3-1): $CR^1_2=CR^1-R^2-COOM$

General formula (A3-2) $CR^1_2=C(-R^2-COOM)_2$

General formula (A3-3) : $MOCO-R^2-CR^1=CR^1-R^2-COOM$

General formula (A3-4): $MOCO-R^2-CR^1=C(-R^2-COOM)_2$

In general formulas (A3-1) to (A3-4), $R^1$, $R^2$, and M are as described above.

Furthermore, since an even greater number of fluorine-containing elastomer particles can be generated while further suppressing adhesion of the fluorine-containing elastomer to a polymerization tank, the fluorine-free compound (A3) is preferably a fluorine-free compound represented by general formula (A3-1-1).

General formula (A3-1-1): $CH_2=CH-R^2-COOM$

In general formula (A3-1-1), $R^2$ and M are as described above.

Since an even greater number of fluorine-containing elastomer particles can be generated while further suppressing adhesion of the fluorine-containing elastomer to a polymerization tank, the number of carbon atoms in the fluorine-free compound (A3) is preferably 2 or more, and is preferably 30 or less, more preferably 10 or less, even more preferably 5 or less, and particularly preferably 3 or less. Herein, the number of carbon atoms in the fluorine-free compound (A3) does not include the number of carbon atoms that may be contained in -COOM in the fluorine-free compound (A3).

Examples of the fluorine-free compound represented by general formula (A3-1) include:

acrylic acid,
methacrylic acid,
crotonic acid,
2-butenoic acid (isocrotonic acid),
3-butenoic acid,
3-methylcrotonic acid,
2-methylisocrotonic acid (angelica acid),
4-pentenoic acid,
2-ethyl-2-butenoic acid,
2-nonenoic acid,
4-decenoic acid,
10-undecenoic acid,
4-undecenoic acid,
tetradecenoic acid,
cis-15-heptadecenoic acid,
heptadeca-16-enoic acid,
henicos-20-enoic acid,
monomethyl fumarate,
2-allylmalonic acid,
ethyl (prop-2-en-1-yl)propanedioic acid,
(3-methyl-but-2-enyloxy)acetic acid,
2-allyl-3,3-dimethyl-1-cyclohexenecarboxylic acid,
2-allyl-1-cyclohexenecarboxylic acid,
and salts thereof.

Examples of the fluorine-free compound represented by general formula (A3-2) or general formula (A3-3) include: itaconic acid,

fumaric acid,
maleic acid,
methylmaleic acid (citraconic acid),
mesaconic acid,
2-pentenedioic acid,
isopropylidenesuccinic acid,
2,2-dimethyl-4-methylidenepentanedioic acid,
1-butene-2,4-dicarboxylic acid,
3-butene-1,2,3-tricarboxylic acid,
and salts thereof.

Examples of the fluorine-free compound represented by general formula (A3-4) include:

(E)-1-propene-1,2,3-tricarboxylic acid,
ethenetricarboxylic acid,
3-pentene-1,3,4-tricarboxylic acid,
and salts thereof.

Since an even greater number of fluorine-containing elastomer particles can be generated while further suppressing adhesion of the fluorine-containing elastomer to a polymerization tank, the fluorine-free compound (A3) is, in

particular, preferably acrylic acid, 3-butenoic acid, or a salt thereof (such as an ammonium salt, a sodium salt, or a potassium salt).

The amount of the fluorine-free compound (A3) when polymerizing the fluorine-containing monomer is preferably 3 to 5,000 ppm by mass, more preferably 5 ppm by mass or more, even more preferably 10 ppm by mass or more, particularly preferably 20 ppm by mass or more, and most preferably 30 ppm by mass or more, and is more preferably 1,000 ppm by mass or less, even more preferably 500 ppm by mass or less, particularly preferably 300 ppm by mass or less, and most preferably 200 ppm by mass or less, based on the aqueous medium. By regulating the amount of the fluorine-free compound (A3) to the above range, an even greater number of fluorine-containing elastomer particles can be generated while further suppressing adhesion of the fluorine-containing elastomer to a polymerization tank.

The compound (A4) has an aromatic ring, a hydrophilic group, and an unsaturated double bond.

Herein, the aromatic ring refers to a cyclic structure having aromaticity. Examples of the aromatic ring include a monocyclic aromatic ring such as a benzene ring, a condensed aromatic ring such as a naphthalene ring, an aromatic ring in which phenyl groups are bonded by a single bond such as a biphenyl ring, and a heteroaromatic ring such as a furan ring.

The aromatic ring may be monocyclic or polycyclic, and is preferably monocyclic. The number of aromatic rings contained in the compound (A4) is preferably 1 to 5, more preferably 1 or 2, and even more preferably 1. The aromatic ring may be either carbocyclic or heterocyclic, and is preferably carbocyclic.

The aromatic ring may have a substituent. That is to say, the aromatic ring may be a substituted or unsubstituted aromatic ring. Examples of the substituent include those mentioned above, and, in particular, a halogen atom, a hydroxy group, an alkyl group, a phenyl group, or a fluorophenyl group is preferable, and F, Cl, a hydroxy group, $CH_3$, or a p-fluorophenyl group are more preferable.

Examples of the hydrophilic group include an anionic hydrophilic group, a cationic hydrophilic group, and a nonionic hydrophilic group. For example, the compound (A4) may solely contain an anionic hydrophilic group or may solely contain a nonionic hydrophilic group. The number of hydrophilic groups contained in the compound (A4) may be 1 to 4, may be 1 to 3, may be 1 to 2, or may be 1.

Since an even greater number of fluorine-containing elastomer particles can be generated while further suppressing adhesion of the fluorine-containing elastomer to a polymerization tank, the hydrophilic group is, for example, preferably $-SO_3M$, $-OSO_3M$, $-COOM$, $-P(=O)(OM)_2$, $-OP(O)(OM)_2$, $-B(OM)_2$, or $-OB(OM)_2$, and more preferably $-SO_3M$, $-OSO_3M$, or $-COOM$.

M is H, a metal atom, $NR^6_4$, imidazolium optionally having a substituent, pyridinium optionally having a substituent, or phosphonium optionally having a substituent.

$R^6$ is independently H or an organic group, and any two $R^6$ are optionally bonded to each other to form a ring. The organic group is preferably an alkyl group. $R^6$ is preferably H or a $C_{1-10}$ organic group, more preferably H or a $C_{1-4}$ organic group, even more preferably H or a $C_{1-4}$ alkyl group, and most preferably H.

Examples of the metal atom include monovalent or divalent metal atoms, an alkali metal (Group A4) or an alkaline earth metal (Group 2) is preferable, and Na, K, or Li is more preferable.

Since an even greater number of fluorine-containing elastomer particles can be generated while further suppressing adhesion of the fluorine-containing elastomer to a polymerization tank, M is preferably H, a metal atom, or $NR^6_4$, more preferably H, Na, K, or $NR^6_4$, and even more preferably H, Na, K, or $NH_4$.

The unsaturated double bond is preferably a radically polymerizable unsaturated double bond, and may be a vinyl bond.

Since an even greater number of fluorine-containing elastomer particles can be generated while further suppressing adhesion of the fluorine-containing elastomer to a polymerization tank, the number of carbon atoms in the compound (A4) is preferably 6 to 80, more preferably 8 to 40, even more preferably 8 to 30, and particularly preferably 8 to 20. Herein, the number of carbon atoms in the compound (A4) does not include the number of carbon atoms in the hydrophilic group contained in the compound (A4).

The compound (A4) is preferably a fluorine-free compound.

The compound (A4) is usually water-soluble. The solubility of the compound (A4) in water may be 0.1 g or more per 100 g of water.

In the production method of the present disclosure, one or two or more compounds may be used as the compound (A4). Also, the compound (A4) may be a compound solely having an anionic hydrophilic group, may be a compound solely having a nonionic hydrophilic group, or may be a combination of a compound containing an anionic hydrophilic group and a compound containing a nonionic hydrophilic group.

The compound (A4) is preferably at least one compound selected from the group consisting of compounds represented by general formulas (A4-1) to (A4-4):

General formula (A4-1):

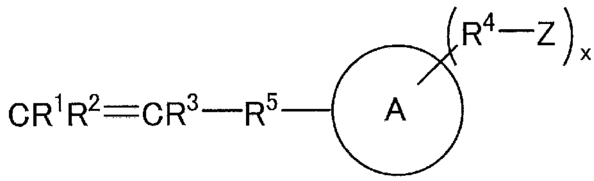

General formula (A4-2):

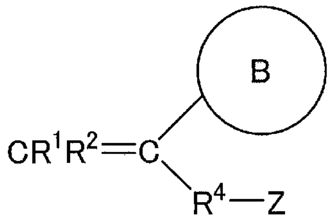

General formula (A4-3):

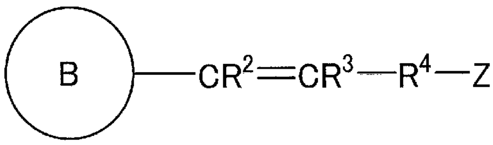

General formula (A4-4):

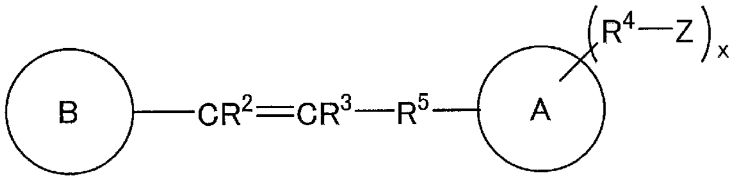

In general formulas (A4-1) to (A4-4), $R^1$ to $R^3$ are each independently H, a halogen atom, an alkyl group, or a group represented by $-R^4-Z$.

The alkyl group is not limited, and examples include linear, branched, or cyclic alkyl groups. When the alkyl group has 2 or more carbon atoms, the alkyl group may contain an ether bond. The number of carbon atoms in the alkyl group is preferably 1 or more, and is preferably 20 or less, more preferably 10 or less, even more preferably 5 or less, and particularly preferably 3 or less.

In the alkyl group, at least one hydrogen atom bonded to a carbon atom may be replaced with a substituent. Examples of the substituent include groups represented by $-R^4-Z$ in addition to those mentioned above. The number of groups represented by $-R^4-Z$ contained in the compound (A4) is preferably 1 or more, and is preferably 8 or less, more preferably 5 or less, even more preferably 4 or less, and particularly preferably 3 or less.

The alkyl group is preferably an alkyl group that does not contain a fluorine atom. Examples of the alkyl group include $-CH_3$, $-CH_2CH_3$, $-CH_2CH_2CH_3$, $-CH(CH_3)CH_3$, a cyclopropyl group, a cyclobutyl group, a cyclopentyl group, and a cyclohexyl group, and, in particular, $-CH_3$ is preferable.

The halogen atom is preferably F, Cl, or Br, and more preferably F.

$R^1$ to $R^3$ are, in particular, preferably H, F, $-CH_3$, a cyclopropyl group, a cyclopentyl group, or a cyclohexyl group, and more preferably H, $-CH_3$, a cyclopropyl group, a cyclopentyl group, or a cyclohexyl group.

In general formulas (A4-1) to (A4-4), $R^4$ is a single bond or an alkylene group. Examples of the alkylene group include linear or branched alkylene groups. The number of carbon atoms in the alkylene group is preferably 1 or more, and is preferably 20 or less, more preferably 10 or less, and even more preferably 3 or less. The alkylene group is

preferably $-CH_2-$, $-CH_2CH_2-$, $-CH_2CH_2CH_2-$, or $-CH(CH_3)CH_2-$, and more preferably $-CH_2-$.

$R^4$ is preferably a single bond or $-CH_2-$, and more preferably a single bond.

In general formulas (A4-1) and (A4-4), $R^5$ is a single bond or an alkylene group. Examples of the alkylene group include linear or branched alkylene groups. The number of carbon atoms in the alkylene group is preferably 1 or more, and is preferably 20 or less, more preferably 10 or less, and even more preferably 3 or less. The alkylene group is preferably $-CH_2-$, $-CH_2CH_2-$, $-CH_2CH_2CH_2-$, or $-CH(CH_3)CH_2-$, and more preferably $-CH_2-$.

$R^5$ is preferably a single bond or $-CH_2-$, and more preferably a single bond.

In general formulas (A4-1) to (A4-4), Z is $-SO_3M$, $-OSO_3M$, -COOM, $-P(=O)(OM)_2$, $-OP(O)(OM)_2$, $-B(OM)_2$, or $-OB(OM)_2$. M and $R^6$ are as mentioned above.

In general formulas (A4-1) and (A4-4), x represents the number of groups represented by $-R^4-Z$ bonded to the ring A and is an integer of 1 or more. The upper limit of x may be equal to or less than the number obtained by subtracting 1 from the number of all ring forming atoms constituting the ring A, and is preferably 5 or less, more preferably 3 or less, and even more preferably 2 or less.

In general formulas (A4-1) to (A4-4), the ring A and the ring B are aromatic rings optionally having a substituent.

The ring A and the ring B may be monocyclic or polycyclic, and is preferably monocyclic. The number of aromatic rings contained in the ring A and the ring B is preferably 1 to 5, more preferably 1 or 2, and even more preferably 1. The ring A and the ring B may be either carbocyclic or heterocyclic, and is preferably carbocyclic.

Examples of the ring A and the ring B include

a benzene ring, a naphthalene ring, a biphenyl ring, an anthracene ring,
a furan ring, a benzofuran ring,
a pyrrole ring, an indole ring, an imidazole ring, a benzimidazole ring, a pyrazole ring, an indazole ring,
a pyridine ring, a quinoline ring, a pyrazine ring, a pyrimidine ring, a pyridazine ring, a triazine ring,
a thiophene ring, a benzothiophene ring,
an oxazole ring, a benzoxazole ring,
a thiazole ring, and a benzothiazole ring
, and each may be substituted with a substituent.

The substituent that the ring A and the ring B may have is not limited as long as it is a substituent other than the group represented by $-R^4-Z$, and include those mentioned above, and, in particular, a halogen atom, a hydroxy group, an alkyl group, a phenyl group, or a fluorophenyl group is preferable, and F, Cl, a hydroxy group, $CH_3$, or a p-fluorophenyl group are more preferable.

Since an even greater number of fluorine-containing elastomer particles can be generated while further suppressing adhesion of the fluorine-containing elastomer to a polymerization tank, the ring A in general formulas (A4-1) and (A4-4) is preferably a ring represented by any of the following formulas:

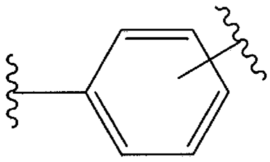
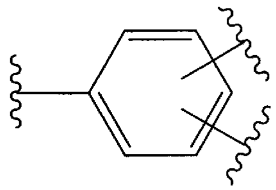
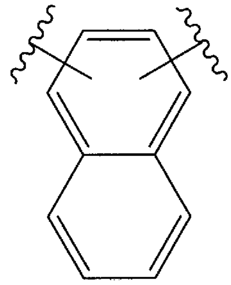
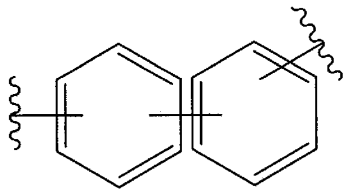
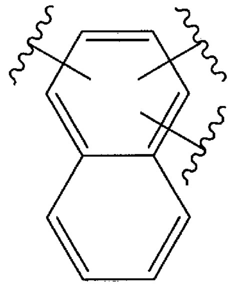
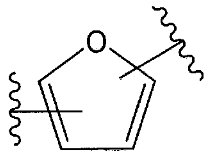
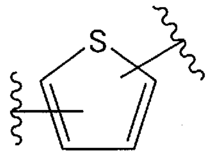
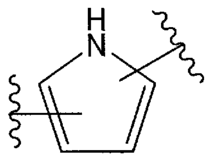
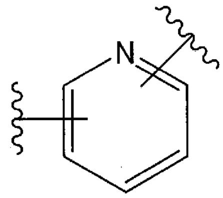

In each formula above, the wavy line represents the bond position where the ring A binds to the carbon atom constituting the vinyl group, the carbon atom of the alkylene group of $R^5$, or the group represented by $-R^4-Z$ in the compounds represented by general formulas (A4-1) and (A4-4). In any aromatic ring, a hydrogen atom bonded to a carbon atom may be replaced with a substituent, and a hydrogen atom bonded to a carbon atom may not be replaced with a substituent. Examples of the substituent include those mentioned above, and, in particular, a halogen atom, a hydroxy group, an alkyl group, a phenyl group, or a fluorophenyl group is preferable, and F, Cl, a hydroxy group, $CH_3$, or a p-fluorophenyl group are more preferable.

Since an even greater number of fluorine-containing elastomer particles can be generated while further suppressing adhesion of the fluorine-containing elastomer to a polymerization tank, the ring B in general formulas (A4-2) to (A4-4) is preferably a ring represented by any of the following formulas:

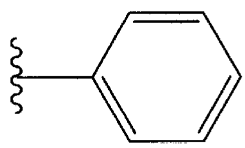
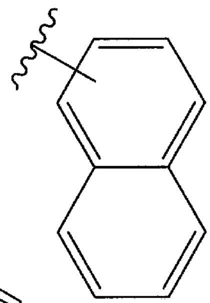
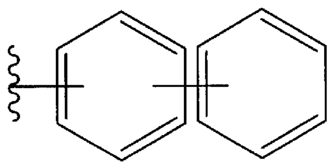
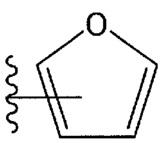
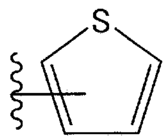

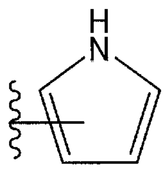
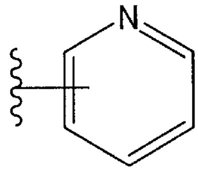

In each formula above, the wavy line represents the bond position where the ring B binds to the carbon atom constituting the vinyl group in the compounds represented by general formulas (A4-2) to (A4-4). In any aromatic ring, a hydrogen atom bonded to a carbon atom may be replaced with a substituent. Examples of the substituent include those mentioned above, and, in particular, a halogen atom, a hydroxy group, an alkyl group, a phenyl group, or a fluorophenyl group is preferable, and F, Cl, a hydroxy group, $CH_3$, or a p-fluorophenyl group are more preferable.

Since an even greater number of fluorine-containing elastomer particles can be generated while further suppressing adhesion of the fluorine-containing elastomer to a polymerization tank, the number of carbon atoms in the compound (A4) is preferably 6 or more and more preferably 8 or more, and is preferably 30 or less, more preferably 20 or less, even more preferably 12 or less, and particularly preferably 10 or less. Herein, the number of carbon atoms in the compound (A4) does not include the number of carbon atoms that may be contained in Z in the compound (A4).

In particular, the compound (A4) is preferably a compound represented by general formulas (A4-1) to (A4-4).

Examples of the compound (A4) include

p-styrenesulfonic acid,
2-styrenesulfonic acid,
m-styrenesulfonic acid,
4-(2-propenyl)benzoic acid,
4-vinylbenzoic acid,
4-(1-fluorovinyl)benzoic acid,
2-vinylphenylphosphonic acid (styrenephosphonic acid),
4-vinylphenylphosphonic acid (styrenephosphonic acid),
4-vinylbenzylphosphonic acid,
4-vinylphenyl sulfate,
2-(1-cyclopentylvinyl)benzoic acid,
(E)-2-(2-cyclopentylvinyl)benzoic acid,
2-[(E)-2-cyclohexylvinyl)]benzoic acid,
(E)-2-(3-(naphthalen-1-yl)allyl)benzoic acid,
1-cinnamyl-2-naphthoic acid,
(Z)-2-(3-phenylallyl)benzoic acid,
3-allylnaphthalene-2-carboxylic acid,
4-ethenylbenzene-1,3-dicarboxylic acid,
4-vinylphenylboronic acid,
4-allyl-2,3,5,6-tetrafluorobenzoic acid,
2-allylbenzoic acid,
2-allyl-3-chlorobenzoic acid,
2-allyl-4-fluorobenzoic acid,
2-allyl-4-methylbenzoic acid,
2-allyl-5,6-dichlorobenzoic acid,
2-(allyl-3,3-d2)-6-fluorobenzoic acid,
4-vinylphthalic acid,
3-ethenylbenzene-1,2-dicarboxylic acid,
2-vinylterephthalic acid,
5-vinylisophthalic acid,
4-vinylnaphthalene-1,2-dicarboxylic acid,
2-phenylacrylic acid,
trans-cinnamic acid,
3-phenyl-2-butenoic acid,
3-methyl-4-phenyl-3-butenoic acid,
trans-2-hydroxycinnamic acid,
5-vinyl-2-furanic acid,
2-vinyl-3-furoic acid,

2-methyl-5-vinyl-3-furoic acid,
2-(4-fluorophenyl)-4-vinyl-2,5-dihydrofuran-3-carboxylic acid,
3,5-dimethyl-4-vinyl-1H-pyrrole-2-carboxylic acid,
2-vinyl-3-thiophenecarboxylic acid,
5-vinylpyridine-2-carboxylic acid,
and salts thereof.

Since an even greater number of fluorine-containing elastomer particles can be generated while further suppressing adhesion of the fluorine-containing elastomer to a polymerization tank, the compound (A4) is, in particular, preferably p-styrenesulfonic acid, 4-vinylbenzoic acid, 4-vinylphenylboronic acid, or a salt thereof (such as an ammonium salt, a sodium salt, or a potassium salt).

The amount of the compound (A4) when polymerizing the fluorine-containing monomer is preferably 3 to 5,000 ppm by mass, more preferably 5 ppm by mass or more, even more preferably 10 ppm by mass or more, particularly preferably 20 ppm by mass or more, and most preferably 30 ppm by mass or more, and is more preferably 1,000 ppm by mass or less, even more preferably 500 ppm by mass or less, particularly preferably 300 ppm by mass or less, and most preferably 200 ppm by mass or less, based on the aqueous medium. By regulating the amount of the compound (A4) to the above range, an even greater number of fluorine-containing elastomer particles can be generated while further suppressing adhesion of the fluorine-containing elastomer to a polymerization tank.

The fluorine-free compound (A5) is a compound that does not contain a fluorine atom within the molecule and that is represented by general formula (A5). In the production method of the present disclosure, one or two or more fluorine-free compounds (A5) may be used.

General formula (A5) : $CX^1X^2=CX^3\text{-}R\text{-}Z$

wherein $X^1$, $X^2$, and $X^3$ are each independently H or an alkyl group; R is a single bond or an alkylene group; the total number of carbon atoms in $X^1$, $X^2$, $X^3$, and R is 0 to 5; Z is $-SO_3M$, $-OSO_3M$, $-P(=O)(OM)_2$, $-OP(O)(OM)_2$, or $-B(OM)_2$; M is H, a metal atom, $NR^1_4$, imidazolium optionally having a substituent, pyridinium optionally having a substituent, or phosphonium optionally having a substituent; and $R^1$ is independently H or an organic group, and any two $R^1$ are optionally bonded to each other to form a ring.

In general formula (A5), $X^1$, $X^2$, and $X^3$ are each independently H or an alkyl group. The alkyl group is not limited as long as it is an alkyl group that does not contain a fluorine atom, and examples include linear or branched alkyl groups. Examples of the alkyl group include $-CH_3$, $-CH_2CH_3$, $-CH_2CH_2CH_3$, and $-CH(CH_3)CH_3$, and, in particular, $-CH_3$ is preferable.

In general formula (A5), $X^1$ and $X^2$ are preferably H. In general formula (A5), $X^3$ is preferably -H or $-CH_3$, and more preferably -H.

In general formula (A5), R is a single bond or an alkylene group. The alkylene group is not limited as long as it is an alkylene group that does not contain a fluorine atom, and examples include linear or branched alkylene groups. Examples of the alkylene group include $-CH_2-$, $-CH_2CH_2-$, $-CH_2CH_2CH_2-$, and $-CH(CH_3)CH_2-$, and, in particular, $-CH_2-$ is preferable.

In general formula (A5), R is preferably a single bond or $-CH_2-$, and more preferably a single bond.

In general formula (A5), the total number of carbon atoms in $X^1$, $X^2$, $X^3$, and R is 0 to 5, preferably 0 to 4, more preferably 0 to 3, even more preferably 0 to 2, particularly preferably 0 or 1, and most preferably 0. When the total number of carbon atoms is excessive, the amount of the fluorine-containing polymer adhering to a polymerization tank can be large, and a sufficient number of fluorine-containing polymer particles cannot be generated.

In general formula (A5), Z is $-SO_3M$, $-OSO_3M$, $-P(=O)(OM)_2$, $-OP(O)(OM)_2$, or $-B(OM)_2$. Since an even greater number of fluorine-containing elastomer particles can be generated while further suppressing adhesion of the fluorine-containing elastomer to a polymerization tank, Z is preferably $-SO_3M$, $-OSO_3M$, or $-P(=O)(OM)_2$, and more preferably $-SO_3M$ or $-OSO_3M$.

M is H, a metal atom, $NR^1_4$, imidazolium optionally having a substituent, pyridinium optionally having a substituent, or phosphonium optionally having a substituent.

$R^1$ is independently H or an organic group, and any two $R^1$ may be bonded to each other to form a ring. The organic group is preferably an alkyl group. $R^1$ is preferably H or a $C_{1-10}$ organic group, more preferably H or a $C_{1-4}$ organic group, even more preferably H or a $C_{1-4}$ alkyl group, and most preferably H.

Examples of the metal atom include monovalent or divalent metal atoms, an alkali metal (Group 1) or an alkaline earth metal (Group 2) is preferable, and Na, K, or Li is more preferable.

Since an even greater number of fluorine-containing elastomer particles can be generated while further suppressing adhesion of the fluorine-containing elastomer to a polymerization tank, M is preferably H, a metal atom, or $NR^1_4$, more preferably H, Na, K, Li, or $NR^1_4$, even more preferably Na, K, Li, or $NR^1_4$, particularly preferably Na, K, Li,

or $NH_4$, and most preferably Na or $NH_4$.

Since an even greater number of fluorine-containing elastomer particles can be generated while further suppressing adhesion of the fluorine-containing elastomer to a polymerization tank, the fluorine-free compound (A5) is preferably a fluorine-free compound represented by general formula (1-1).

General formula (A5-1) : $CH_2=CX^4-R^2-Z$

wherein $X^4$ is H or $CH_3$, $R^2$ is a single bond or an alkylene group having 1 to 3 carbon atoms, and Z is as described above.

In general formula (A5-1), $X^4$ is preferably H. In general formula (A5-1), $R^2$ is preferably a single bond or $-CH_2-$, and even more preferably a single bond.

The fluorine-free compound (A5) is preferably $CH_2=CHSO_3M$,

$CH_2=CHCH_2SO_3M$,

$CH_2=C(CH_3)CH_2SO_3M$,

$CH_2=C(CH_3)SO_3M$,

$CH_2=CHOSO_3M$,

$CH_2=CHCH_2OSO_3M$,

$CH_2=C(CH_3)CH_2OSO_3M$,

$CH_2=C(CH_3)OSO_3M$,

$CH_2=CHP(O)(OM)_2$,

$CH_2=CHCH_2P(O)(OM)_2$,

$CH_2=C(CH_3)CH_2P(O)(OM)_2$,

$CH_2=C(CH_3)P(O)(OM)_2$,

$CH_2=CHOP(O)(OM)_2$,

$CH_2=CHCH_2OP(O)(OM)_2$,

$CH_2=C(CH_3)CH_2OP(O)(OM)_2$,

$CH_2=C(CH_3)OP(O)(OM)_2$,

$CH_2=CHB(OM)_2$,

$CH_2=CHCH_2B(OM)_2$,

$CH_2=C(CH_3)CH_2B(OM)_2$,

or

$CH_2=C(CH_3)B(OM)_2$,

more preferably $CH_2=CHSO_3M$ or $CH_2=CHCH_2SO_3M$, and even more preferably $CH_2=CHSO_3M$.

The amount of the fluorine-free compound (A5) when polymerizing the fluorine-containing monomer may be 3 to 5,000 ppm by mass and is preferably 1 to 1,000 ppm by mass, more preferably 3 ppm by mass or more, even more preferably 5 ppm by mass or more, particularly preferably 10 ppm by mass or more, and most preferably 15 ppm by mass or more, and is more preferably 800 ppm by mass or less, even more preferably 500 ppm by mass or less, particularly preferably 250 ppm by mass or less, and most preferably 150 ppm by mass or less, based on the aqueous

medium. By regulating the amount of the fluorine-free compound (A5) when polymerizing the fluorine-containing monomer to the above range, an even greater number of fluorine-containing elastomer particles can be generated while further suppressing adhesion of the fluorine-containing elastomer to a polymerization tank.

The compound (A1) having a triple bond and a hydrophilic group, the fluorine-containing compound (A2) represented by general formula (A2), the fluorine-free compound (A3) represented by general formula (A3), the compound (A4) having an aromatic ring, a hydrophilic group, and an unsaturated double bond, and the fluorine-free compound (A5) represented by general formula (A5) have a functional group capable of reaction by radical polymerization, and it is thus conjectured that when used in the above polymerization, these compounds react with the fluorine-containing monomer at the initial stage of the polymerization reaction to form highly stable particles having a hydrophilic group derived from these compounds. Therefore, it is considered that when polymerization is carried out in the presence of these compounds, the number of particles of the fluorine-containing elastomer generated during polymerization is increased.

(Polymer (I))

The polymer (I) used in the production method of the present disclosure is a polymer containing a polymerization unit (I) derived from a monomer (I). The monomer (I) is represented by the following general formula (I):

$$CX^1X^3=CX^2R(-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; A° is an anionic group; R is a linking group; $Z^1$ and $Z^2$ are each independently H, F, an alkyl group, or a fluorine-containing alkyl group; and m is an integer of 1 or more.

In the present disclosure, the anionic group includes a functional group that imparts an anionic group, e.g., an acid group such as -COOH and an acid salt group such as $-COONH_4$, in addition to anionic groups such as a sulfate group and a carboxylate group. The anionic group is preferably a sulfate group, a carboxylate group, a phosphate group, a phosphonate group, a sulfonate group, or $-C(CF_3)_2OM$, wherein M is -H, a metal atom, $-NR^7_4$, imidazolium optionally having a substituent, pyridinium optionally having a substituent, or phosphonium optionally having a substituent, and $R^7$ is H or an organic group.

In the production method of the present disclosure, as the monomer (I) represented by general formula (I), one type of monomer or two or more types of monomers can be used.

R is a linking group. The "linking group" as used herein refers to a (m + 1)-valent linking group, and when m is 1, it is a divalent linking group. The linking group may be a single bond and preferably contains at least one carbon atom, and the number of carbon atoms may be 2 or more, may be 4 or more, may be 8 or more, may be 10 or more, or may be 20 or more. The upper limit is not limited, and may be 100 or less or may be 50 or less, for example.

The linking group may be linear or branched, cyclic or acyclic, saturated or unsaturated, substituted or unsubstituted, and optionally contains one or more heteroatoms selected from the group consisting of sulfur, oxygen, and nitrogen, and optionally contains one or more functional groups selected from the group consisting of ester, amide, sulfonamide, carbonyl, carbonate, urethane, urea, and carbamate. The linking group may be free from carbon atoms and may be a catenary heteroatom such as oxygen, sulfur, or nitrogen.

m is an integer of 1 or more and is preferably 1 or 2 and more preferably 1. When m is an integer of 2 or more, $Z^1$, $Z^2$, and $A^0$ may be the same or different.

Next, a suitable configuration wherein m is 1 in general formula (I) will now be described.

R is preferably a catenary heteroatom such as oxygen, sulfur, or nitrogen, or a divalent organic group.

When R is a divalent organic group, a hydrogen atom bonded to a carbon atom may be replaced with a halogen other than fluorine, such as chlorine, and the divalent organic group may or may not contain a double bond. Further, R may be linear or branched, and may be cyclic or acyclic. R may also contain a functional group (e.g., ester, ether, ketone (a keto group), amine, halide, etc.).

Also, R may be a fluorine-free divalent organic group, or may be a partially fluorinated or perfluorinated divalent organic group.

R may be, for example, a hydrocarbon group in which a fluorine atom is not bonded to a carbon atom, a hydrocarbon group in which some of the hydrogen atoms bonded to carbon atoms are replaced with fluorine atoms, or a hydrocarbon group in which all of the hydrogen atoms bonded to carbon atoms are replaced with fluorine atoms, and these groups optionally contain an oxygen atom, optionally contain a double bond, and optionally contain a functional group.

R is preferably a hydrocarbon group having 1 to 100 carbon atoms that optionally contains an ether bond or a keto group, wherein some or all of the hydrogen atoms bonded to carbon atoms in the hydrocarbon group may be replaced with fluorine.

R is preferably at least one selected from $-(CH_2)_a-$, - $(CF_2)_a-$, $-(CF_2)_a-O-$, $-O-(CF_2)_a-$, $-(CF_2)_a-O-(CF_2)_b-$, $-O(CF_2)_a-O-(CF_2)_b-$, $-(CF_2)_a-[O-(CF_2)_b]_c-$, $-O(CF_2)_a-[O-(CF_2)_b]_c-$, $-[(CF_2)_a-O]_b-[(CF_2)_c-O]_d-$, $-O[(CF_2)_a-O]_b-$, $-O[(CF_2)_a-O]_b-[(CF_2)_c-O]_d-$, $-O-[CF_2CF(CF_3)O]_a-(CF_2)_b-$, $-O-(CF_2)_a-O-[CF(CF_3)CF_2O]_b-O-$, $-O-[CF_2CF(CF_3)O]_a-(CF_2)_b-O-$, $-O-[CF_2CF(CF_3)O]_a-(CF_2)_b-O-[CF(CF_3)CF_2O]_c-O-$, $-[CF_2CF(CF_3)O]_a-$, $-[CF(CF_3)CF_2O]_a-$, $-(CF_2)_a-O-[CF(CF_3)CF_2O]_a-$, - $(CF_2)_a-O-[CF(CF_3)CF_2O]_a-(CF_2)_b-$, $-[CF_2CF(CF_3)]_a-CO-(CF_2)_b-$, and a combination thereof.

In the formulas, a, b, c, and d are independently at least 1 or more, a, b, c, and d may be independently 2 or more, may be 3 or more, may be 4 or more, may be 10 or more, or may be 20 or more. The upper limits of a, b, c, and d are, for example, 100.

R is more preferably at least one selected from $-O-CF_2-$, - $O-CF_2CF_2-$, $-O-CF_2CF_2-O-$, $-O-CF_2CF_2CF_2-$, $-O-CF_2CF_2CF_2-O-$, $-O-CF_2CF(CF_3)-O-$, $-O-CF_2CF_2-O-CF(CF_3)CF_2-O-$, $-O-CF_2CF(CF_3)-O-CF_2CF_2-O-$, and $-O-CF_2CF(CF_3)-O-CF_2-$.

R is preferably a divalent group represented by general formula (r1):

$$-CF_2-O-(CX^6{}_2)_e-\{O-CF(CF_3)\}_f-(O)_g- \qquad (r1)$$

wherein $X^6$ is each independently H, F, or $CF_3$; e is an integer of 0 to 3; f is an integer of 0 to 3; and g is 0 or 1, and more preferably a divalent group represented by general formula (r2):

$$-CF_2-O-(CX^7{}_2)_e-(O)_g- \qquad (r2)$$

wherein $X^7$ is each independently H, F, or $CF_3$; e is an integer of 0 to 3; and g is 0 or 1.

Specific examples suitable for R include $-CF_2-O-$, $-CF_2-O-CF_2-$, $-CF_2-O-CH_2-$, $-CF_2-O-CH_2CF_2-$, $-O-CF_2-$, $-O-CF_2CF_2-$, $-O-CF_2CF_2CF_2-$, $-O-CF_2CF_2CF_2CF_2-$, $-O-CF_2CF(CF_3)-O-CF_2-$, $-O-CF_2CF(CF_3)-O-CF_2CF_2-$, $-CF_2-O-CF_2CF_2-$, $-CF_2-O-CF_2CH_2-$, $-CF_2-O-CF_2CF_2CH_2-$, $-CF_2-O-CF(CF_3)-$, $-CF_2-O-CF(CF_3)CF_2-$, $-CF_2-O-CF(CF_3)CF_2-O-$, $-CF_2-O-CF(CF_3)CF_2-O-CF_2-$, and $-CF_2-O-CF(CF_3)CH_2-$. In particular, R is preferably a perfluoroalkylene group optionally containing an oxygen atom, and specifically, $-CF_2-O-$, $-CF_2-O-CF_2-$, $-O-CF_2-$, - $O-CF_2CF_2-$, $-O-CF_2CF(CF_3)-O-CF_2-$, $-O-CF_2CF(CF_3)-O-CF_2CF_2-$, $-CF_2-O-CF_2CF_2-$, $-CF_2-O-CF(CF_3)-$, $-CF_2-O-CF(CF_3)CF_2-$, or $-CF_2-O-CF(CF_3)CF_2-O-$ is preferable.

$-R-CZ^1Z^2-$ in general formula (I) is preferably what is represented by general formula (s1):

$$-CF_2-O-(CX^6{}_2)_e-\{O-CF(CF_3)\}_f-(O)_g-CZ^1Z^2- \qquad (s1)$$

(wherein $X^6$ is each independently H, F, or $CF_3$; e is an integer of 0 to 3; f is an integer of 0 to 3; g is 0 or 1; and $Z^1$ and $Z^2$ are each independently H, F, an alkyl group, or a fluorine-containing alkyl group), and more preferably, in formula (s1), $Z^1$ and $Z^2$ are F or $CF_3$, and even more preferably one is F, and the other is $CF_3$.

Further, $-R-CZ^1Z^2-$ in general formula (I) is preferably what is represented by general formula (s2):

$$-CF_2-O-(CX^7{}_2)_e-(O)_g-CZ^1Z^2- \qquad (s2)$$

(wherein $X^7$ is each independently H, F, or $CF_3$; e is an integer of 0 to 3; g is 0 or 1; and $Z^1$ and $Z^2$ are each independently H, F, an alkyl group, or a fluorine-containing alkyl group), and more preferably, in formula (s2), $Z^1$ and $Z^2$ are F or $CF_3$, and even more preferably one is F, and the other is $CF_3$.

$-R-CZ^1Z^2-$ in general formula (I) is preferably $-CF_2-O-CF_2-$, $-CF_2-O-CF(CF_3)-$, $-CF_2-O-C(CF_3)_2-$, $-CF_2-O-CF_2-CF_2-$, $-CF_2-O-CF_2-CF(CF_3)-$, $-CF_2-O-CF_2-C(CF_3)_2-$, $-CF_2-O-CF_2CF_2-CF_2-$, $-CF_2-O-CF_2CF_2-CF(CF_3)-$, $-CF_2-O-CF_2CF_2-C(CF_3)_2-$, $-CF_2-O-CF(CF_3)-CF_2-$, - $CF_2-O-CF(CF_3)-CF-(CF_3)-$, $-CF_2-O-CF(CF_3)-C(CF_3)_2-$, $-CF_2-O-CF(CF_3)-CF_2-$, $-CF_2-O-CF (CF_3)-CF (CF_3)-$, $-CF_2-O-CF(CF_3)-C(CF_3)_2-$, $-CF_2-O-CF(CF_3)CF_2-CF_2-$, $-CF_2-O-CF(CF_3)CF_2-CF(CF_3)-$, $-CF_2-O-CF(CF_3)CF_2-C(CF_3)_2-$, $-CF_2-O-CF(CF_3)CF_2-O-CF_2-$, $-CF_2-O-CF(CF_3)CF_2-O-CF(CF_3)-$, or $-CF_2-O-CF(CF_3)CF_2-O-C(CF_3)_2-$, more preferably $-O-CF_2CF_2-$, $-O-CF_2CF_2CF_2-$, $-O-CF_2CF_2CF_2CF_2-$, $-O-CF_2CF(CF_3)-O-CF_2-$, $-O-CF_2CF(CF_3)-O-CF_2CF_2-$, $-CF_2-O-CF(CF_3)-$, $-CF_2-O-CF_2-CF(CF_3)-$, $-CF_2-O-CF_2CF_2-CF(CF_3)-$, $-CF_2-O-CF(CF_3)-CF (CF_3)-$, $-CF_2-O-CF(CF_3)CF_2-CF(CF_3)-$, or $-CF_2-O-CF(CF_3)CF_2-O-CF(CF_3)-$, and even more preferably $-O-CF_2CF_2-$ or $-O-CF_2CF(CF_3)-O-CF_2CF_2-$.

Also preferably, the polymer (I) is highly fluorinated. Except for the anionic group ($A^0$) such as a phosphate group moiety (such as $CH_2OP(O)(OM)_2$) and a sulfate group moiety (such as $CH_2OS(O)_2OM$), 80% or more, 90% or more, 95% or more, or 100% of the C-H bonds in the polymer (I) are preferably replaced with C-F bonds.

It is also preferable that the monomer (I) and the polymer (I) have C-F bonds and no C-H bonds, except for the anionic group ($A^0$). In other words, in general formula (I), preferably, $X^1$, $X^2$, and $X^3$ are all F, and R is a perfluoroalkylene group having one or more carbon atoms; the perfluoroalkylene group may be either linear or branched, may be either

cyclic or acyclic, and may contain at least one catenary heteroatom. The number of carbon atoms in the perfluoroalkylene group may be 2 to 20, and may be 4 to 18.

The monomer (I) and the polymer (I) may be partially fluorinated. In other words, it is also preferable that the monomer (I) and the polymer (I) have at least one hydrogen atom bonded to a carbon atom and at least one fluorine atom bonded to a carbon atom, except for the anionic group (A°).

The anionic group ($A^0$) may be $-SO_2M$, $-SO_3M$, $-OSO_3M$, -COOM, $-SO_2NR'CH_2COOM$, $-CH_2OP(O)(OM)_2$, $[-CH_2O]_2P(O)(OM)$, - $CH_2CH_2OP(O)(OM)_2$, $[-CH_2CH_2O]_2P(O)(OM)$, $-CH_2CH_2OSO_3M$, $-P(O)(OM)_2$, - $SO_2NR'CH_2CH_2OP(O)(OM)_2$, $[-SO_2NR'CH_2CH_2O]_2P(O)(OM)$, $-CH_2OSO_3M$, - $SO_2NR'CH_2CH_2OSO_3M$, or $-C(CF_3)_2OM$. In particular, it is preferably $-SO_3M$, $-OSO_3M$, -COOM, $-P(O)(OM)_2$, or $-C(CF_3)_2OM$; it is more preferably -COOM, $-SO_3M$, $-OSO_3M$, $-P(O)(OM)_2$, or - $C(CF_3)_2OM$; it is even more preferably $-SO_3M$, -COOM, or - $P(O)(OM)_2$; it is particularly preferably $-SO_3M$ or -COOM; and it is most preferably $-SO_3M$.

M is H, a metal atom, $NR^7_4$, imidazolium optionally having a substituent, pyridinium optionally having a substituent, or phosphonium optionally having a substituent, and $R^7$ is H or an organic group.

Examples of the metal atom include alkali metals (Group 1) and alkaline earth metals (Group 2), and Na, K, or Li is preferable.

M is preferably -H, a metal atom, or $NR^7_4$, more preferably -H, an alkali metal (Group 1), an alkaline earth metal (Group 2), or $NR^7_4$, even more preferably -H, -Na, -K, -Li, or $NH_4$, yet more preferably -H, -Na, -K, or $NH_4$, particularly preferably -H, -Na, or $NH_4$, and most preferably -H or $-NH_4$.

In the polymer (I), each polymerization unit (I) may have a different anionic group or may have the same anionic group.

It is also preferable that the monomer (I) is a monomer represented by general formula (Ia).

The polymer (I) is also preferably a polymer containing a polymerization unit (Ia) derived from a monomer represented by general formula (Ia):

$$CF_2=CF-O-R^0-A^0 \qquad (Ia)$$

wherein A° is an anionic group; and $Rf^0$ is a perfluorinated divalent linking group that is perfluorinated, may be linear or branched, cyclic or acyclic, saturated or unsaturated, substituted or unsubstituted, and optionally contains one or more heteroatoms selected from the group consisting of sulfur, oxygen, and nitrogen.

It is also preferable that the monomer (I) is a monomer represented by general formula (Ib).

The polymer (I) is also preferably a polymer containing a polymerization unit (Ib) derived from a monomer represented by general formula (Ib):

$$CH_2=CH-O-Rf^0-A^0 \qquad (Ib)$$

wherein $A^0$ is an anionic group; and $Rf^0$ is a perfluorinated divalent linking group as defined in formula Ia.

In a preferable embodiment, $A^0$ in general formula (I) is a sulfate group. $A^0$ is, for example, $-CH_2OSO_3M$, $-CH_2CH_2OSO_3M$, or $-SO_2NR'CH_2CH_2OSO_3M$, wherein R' is H or an alkyl group having 1 to 4 carbon atoms, and M is as described above.

When $A^0$ is a sulfate group, examples of the monomer represented by general formula (I) include $CF_2=CF(OCF_2CF_2CH_2OSO_3M)$, $CF_2=CF(O(CF_2)_4CH_2OSO_3M)$, $CF_2=CF(OCF_2CF(CF_3)CH_2OSO_3M)$, $CF_2=CF(OCF_2CF(CF_3)OCF_2CF_2CH_2OSO_3M)$, $CH_2=CH((CF_2)_4CH_2OSO_3M)$, $CF_2=CF(OCF_2CF_2SO_2N(CH_3)CH_2CH_2OSO_3M)$, $CH_2=CH(CF_2CF_2CH_2OSO_3M)$, $CF_2=CF(OCF_2CF_2CF_2CF_2SO_2N(CH_3)CH_2CH_2OSO_3M)$, and $CH_2=CH(CF_2CF_2CF_2CH_2OSO_3M)$. In the formulas, M is as described above.

In a preferable embodiment, $A^0$ in general formula (I) is a sulfonate group. $A^0$ is, for example, $-SO_3M$, wherein M is as described above.

When $A^0$ is a sulfonate group, examples of the monomer represented by general formula (I) include $CF_2=CF(OCF_2CF_2SO_3M)$, $CF_2=CF(O(CF_2)_3SO_3M)$, $CF_2=CF(O(CF_2)_4SO_3M)$, $CF_2=CF(OCF_2CF(CF_3)SO_3M)$, $CF_2=CF(OCF_2CF(CF_3)OCF_2CF_2SO_3M)$, $CH_2=CH(CF_2CF_2SO_3M)$, $CF_2=CF(OCF_2CF(CF_3)OCF_2CF_2CF_2CF_2SO_3M)$, $CH_2=CH((CF_2)_4SO_3M)$, and $CH_2=CH((CF_2)_3SO_3M)$. In the formulas, M is as described above.

In a preferable embodiment, $A^0$ in general formula (I) is a carboxylate group. $A^0$ is, for example, COOM or $SO_2NR'CH_2COOM$, wherein R' is H or an alkyl group having 1 to 4 carbon atoms, and M is as described above. When $A^0$ is a carboxylate group, examples of the monomer represented by general formula (I) include $CF_2=CF(OCF_2CF_2COOM)$, $CF_2=CF(O(CF_2)_3COOM)$, $CF_2=CF(O(CF_2)_5COOM)$, $CF_2=CF(OCF_2CF(CF_3)COOM)$, $CF_2=CF(OCF_2CF(CF_3)O(CF_2)_nCOOM)$ (n is greater than 1), $CH_2=CH(CF_2CF_2COOM)$, $CH_2=CH((CF_2)_4COOM)$, $CH_2=CH((CF_2)_3COOM)$, $CF_2=CF(OCF_2CF_2SO_2NR'CH_2COOM)$, $CF_2=CF(O(CF_2)_4SO_2NR'CH_2COOM)$, $CF_2=CF(OCF_2CF(CF_3)SO_2NR'CH_2COOM)$, $CF_2=CF(OCF_2CF(CF_3)OCF_2CF_2SO_2NR'CH_2COOM)$,

$CH_2=CH(CF_2CF_2SO_2NR'CH_2COOM)$, $CF_2=CF(OCF_2CF(CF_3)OCF_2CF_2CF_2CF_2SO_2NR'CH_2COOM)$, $CH_2=CH((CF_2)_4SO_2NR'CH_2COOM)$, and $CH_2=CH((CF_2)_3SO_2NR'CH_2COOM)$. In the formulas, R' is H or an alkyl group having 1 to 4 carbon atoms, and M is as described above.

In a preferable embodiment, $A^0$ in general formula (I) is a phosphate group. $A^0$ is, for example, $-CH_2OP(O)(OM)_2$, $[-CH_2O]_2P(O)(OM)$, $-CH_2CH_2OP(O)(OM)_2$, $[-CH_2CH_2O]_2P(O)(OM)$, $[-SO_2NR'CH_2CH_2O]_2P(O)(OM)$, or $SO_2NR'CH_2CH_2OP(O)(OM)_2$, wherein R' is an alkyl group having 1 to 4 carbon atoms, and M is as described above.

When $A^0$ is a phosphate group, examples of the monomer represented by general formula (I) include $CF_2=CF(OCF_2CF_2CH_2OP(O)(OM)_2)$, $CF_2=CF(O(CF_2)_4CH_2OP(O)(OM)_2)$, $CF_2=CF(OCF_2CF(CF_3)CH_2OP(O)(OM)_2)$, $CF_2=CF(OCF_2CF(CF_3)OCF_2CF_2CH_2OP(O)(OM)_2)$, $CF_2=CF(OCF_2CF_2SO_2N(CH_3)CH_2CH_2OP(O)(OM)_2)$, $CF_2=CF(OCF_2CF_2CF_2CF_2SO_2N(CH_3)CH_2CH_2OP(O)(OM)_2)$, $CH_2=CH(CF_2CF_2CH_2OP(O)(OM)_2)$, $CH_2=CH((CF_2)_4CH_2OP(O)(OM)_2)$, and $CH_2=CH((CF_2)_3CH_2OP(O)(OM)_2)$. In the formulas, M is as described above.

In a preferable embodiment, $A^0$ in general formula (I) is a phosphonate group. When $A^0$ is a phosphonate group, examples of the monomer represented by general formula (I) include $CF_2=CF(OCF_2CF_2P(O)(OM)_2)$, $CF_2=CF(O(CF_2)_4P(O)(OM)_2)$, $CF_2=CF(OCF_2CF(CF_3)P(O)(OM)_2)$, $CF_2=CF(OCF_2CF(CF_3)OCF_2CF_2P(O)(OM)_2)$, $CH_2=CH(CF_2CF_2P(O)(OM)_2)$, $CH_2=CH((CF_2)_4P(O)(OM)_2)$, and $CH_2=CH((CF_2)_3P(O)(OM)_2)$, wherein M is as described above.

It is preferable that the monomer (I) is a monomer (1) represented by general formula (1).

The polymer (I) is preferably a polymer (1) containing a polymerization unit (1) derived from a monomer represented by general formula (1):

$$CX_2=CY(-CZ_2-O-Rf-A) \qquad (1)$$

wherein X is the same or different and is -H or F; Y is -H, -F, an alkyl group, or a fluorine-containing alkyl group; Z is the same or different and is -H, -F, an alkyl group, or a fluoroalkyl group; Rf is a fluorine-containing alkylene group having 1 to 40 carbon atoms or a fluorine-containing alkylene group having 2 to 100 carbon atoms and having an ether bond; and A is -COOM, $-SO_3M$, $-OSO_3M$, or $-C(CF_3)_2OM$, where M is -H, a metal atom, $-NR^7_4$, imidazolium optionally having a substituent, pyridinium optionally having a substituent, or phosphonium optionally having a substituent, and $R^7$ is H or an organic group, provided that at least one of X, Y, and Z contains a fluorine atom.

In the production method of the present disclosure, the monomer (1) represented by general formula (1) and a further monomer may be copolymerized.

The polymer (1) may be a homopolymer of the fluoroallyl ether compound represented by general formula (1) or may be a copolymer thereof with a further monomer.

The fluorine-containing alkylene group having 2 to 100 carbon atoms and having an ether bond is an alkylene group that does not contain a structure having an oxygen atom at a terminal and that contains an ether bond between carbon atoms.

In general formula (1), X is -H or F. X may be both -F, or at least one may be -H. For example, one may be -F and the other may be -H, or both may be -H.

In general formula (1), Y is -H, -F, an alkyl group, or a fluorine-containing alkyl group. The alkyl group is an alkyl group free from fluorine atoms and may have one or more carbon atoms. The alkyl group preferably has 6 or less carbon atoms, more preferably 4 or less carbon atoms, and even more preferably 3 or less carbon atoms. The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and even more preferably 3 or less carbon atoms. Y is preferably -H, -F, or $CF_3$, and more preferably -F.

In general formula (1), Z is the same or different and is -H, -F, an alkyl group, or a fluoroalkyl group. The alkyl group is an alkyl group free from fluorine atoms and may have one or more carbon atoms. The alkyl group preferably has 6 or less carbon atoms, more preferably 4 or less carbon atoms, and even more preferably 3 or less carbon atoms. The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and even more preferably 3 or less carbon atoms. Z is preferably -H, -F, or $CF_3$, and more preferably -F.

In general formula (1), at least one of X, Y, and Z contains a fluorine atom. For example, X may be -H, and Y and Z may be -F.

In general formula (1), Rf is a fluorine-containing alkylene group having 1 to 40 carbon atoms or a fluorine-containing alkylene group having 2 to 100 carbon atoms and having an ether bond.

The fluorine-containing alkylene group preferably has 2 or more carbon atoms. Further, the number of carbon atoms in the fluorine-containing alkylene group is preferably 30 or less, more preferably 20 or less, even more preferably 10 or less, particularly preferably 6 or less, and most preferably 3 or less. Examples of the fluorine-containing alkylene group include $-CF_2-$, $-CH_2CF_2-$, $-CF_2CF_2-$, $-CF_2CH_2-$, $-CF_2CF_2CF_2-$, $-CF_2CF_2CH_2-$, $-CF(CF_3)-$, $-CF(CF_3)CF_2-$, and $-CF(CF_3)CH_2-$. The fluorine-containing alkylene group is preferably a perfluoroalkylene group.

The fluorine-containing alkylene group having an ether bond preferably has 3 or more carbon atoms. Further, the number of carbon atoms in the fluorine-containing alkylene group having an ether bond is preferably 60 or less, more preferably 30 or less, even more preferably 12 or less, particularly preferably 9 or less, and most preferably 6 or less. The fluorine-containing alkylene group having an ether bond is also preferably a divalent group represented by, for example, the general formula:

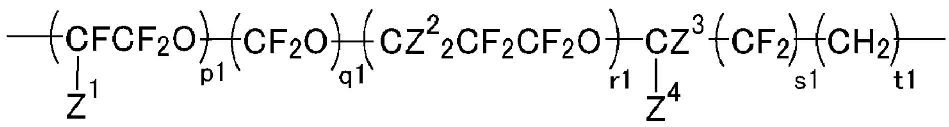

wherein $Z^1$ is F or $CF_3$; $Z^2$ and $Z^3$ are each H or F; $Z^4$ is H, F, or $CF_3$; p1 + q1 + r1 is an integer of 1 to 10; s1 is 0 or 1; and t1 is an integer of 0 to 5.

Specific examples of the fluorine-containing alkylene group having an ether bond include $-CF_2CF(CF_3)OCF_2-$, $-CF(CF_3)CF_2-O-CF(CF_3)-$, $-(CF(CF_3)CF_2-O)_n-CF(CF_3)-$ (wherein n is an integer of 1 to 10), $-CF(CF_3)CF_2-O-CF(CF_3)CH_2-$, $-(CF(CF_3)CF_2-O)_n-CF(CF_3)CH_2-$ (wherein n is an integer of 1 to 10), $-CH_2CF_2CF_2O-CH_2CF_2CH_2-$, $-CF_2CF_2CF_2O-CF_2CF_2-$, $-CF_2CF_2CF_2O-CF_2CF_2CH_2-$, $-CF_2CF_2O-CF_2-$, and $-CF_2CF_2O-CF_2CH_2$. The fluorine-containing alkylene group having an ether bond is preferably a perfluoroalkylene group.

In general formula (1), A is -COOM, $-SO_3M$, $-OSO_3M$, or $-C(CF_3)_2OM$, wherein M is H, a metal atom, $NR^7_4$, imidazolium optionally having a substituent, pyridinium optionally having a substituent, or phosphonium optionally having a substituent, and $R^7$ is H or an organic group.

$R^7$ is preferably H or a $C_{1-10}$ organic group, more preferably H or a $C_{1-4}$ organic group, and even more preferably H or a $C_{1-4}$ alkyl group.

Examples of the metal atom include alkali metals (Group 1) and alkaline earth metals (Group 2), and Na, K, or Li is preferable.

M is preferably H, a metal atom, or $NR^7_4$, more preferably H, an alkali metal (Group 1), an alkaline earth metal (Group 2), or $NR^7_4$, even more preferably H, Na, K, Li, or $NH_4$, yet more preferably H, Na, K, or $NH_4$, particularly preferably H, Na, or $NH_4$, and most preferably H or $NH_4$.

A is preferably -COOM or $-SO_3M$, and more preferably - COOM.

Suitable examples of the monomer represented by general formula (1) include a fluoroallyl ether compound represented by general formula (1a):

$$CX_2=CFCF_2-O-(CF(CF_3)CF_2O)_{n5}-CF(CF_3)-A \qquad (1a)$$

wherein each X is the same and represents F or H; n5 represents an integer of 0 or 1 to 10; and A is as defined above.

In general formula (1a), n5 is preferably an integer of 0 or 1 to 5, more preferably 0, 1, or 2, and even more preferably 0 or 1 from the viewpoint of obtaining particles having a small primary particle size.

In the production method of the present disclosure, the monomer represented by general formula (1a) and a further monomer may be copolymerized.

The polymer (1) may be a homopolymer of the fluoroallyl ether compound represented by general formula (1a) or may be a copolymer thereof with a further monomer.

It is preferable that the monomer (1) is a monomer represented by general formula (1A).

The polymerization unit (1) is preferably a polymerization unit (1A) derived from a monomer represented by general formula (1A):

$$CH_2=CF(-CF_2-O-Rf-A) \qquad (1A)$$

wherein Rf and A are as described above.

In the production method of the present disclosure, the monomer represented by general formula (1A) and a further monomer may be copolymerized.

The polymer (1) may be a homopolymer of the monomer represented by general formula (1A) or may be a copolymer thereof with a further monomer.

Specific examples of the monomer represented by formula (1A) include a monomer represented by the general formula:

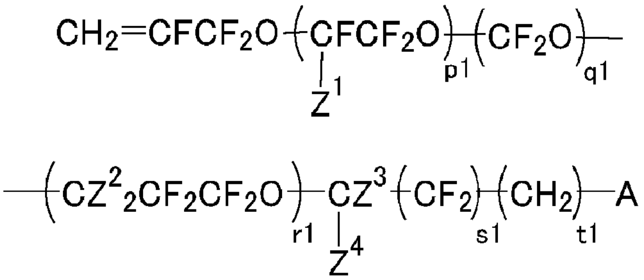,

wherein $Z^1$ is F or $CF_3$; $Z^2$ and $Z^3$ are each H or F; $Z^4$ is H, F, or $CF_3$; p1 + q1 + r1 is an integer of 0 to 10; s1 is 0 or 1; t1 is an integer of 0 to 5, provided that when $Z^3$ and $Z^4$ are both H, p1 + q1 + r1 + s1 is not 0; and A is as defined above. More specifically, preferable examples include:

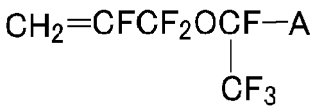, 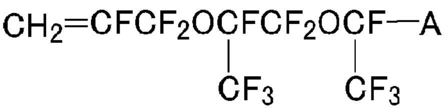,

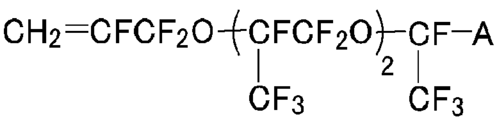, 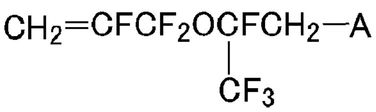,

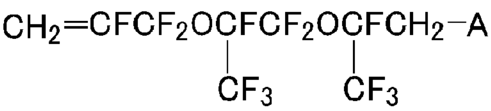, 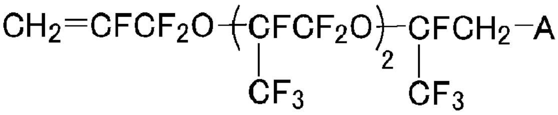,

$CH_2=CFCF_2OCH_2CF_2$-A , $CH_2=CFCF_2O(CH_2CF_2CF_2O)CH_2CF_2$-A ,

$CH_2=CFCF_2OCH_2CF_2CH_2$-A,

$CH_2=CFCF_2O(CH_2CF_2CF_2O)CH_2CF_2CH_2$-A,

$CH_2=CFCF_2OCF_2CF_2$-A, $CH_2=CFCF_2O(CF_2CF_2CF_2O)CF_2CF_2$-A,

$CH_2$-$CFCF_2OCF_2CF_2CH_2$-A,

$CH_2=CFCF_2O(CF_2CF_2CF_2O)CF_2CF_2CH_2$-A,

$CH_2$-$CFCF_2OCF_2$-A, $CH_2$-$CFCF_2O(CF_2CF_2O)CF_2$-A,

$CH_2=CFCF_2OCF_2CH_2$-A,

$CH_2=CFCF_2O(CF_2CF_2O)CF_2CH_2$-A,

and, in particular,

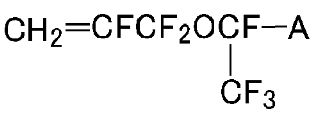, 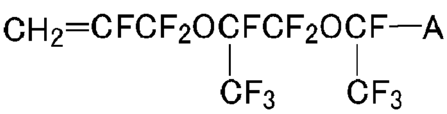,

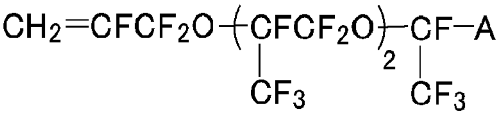, 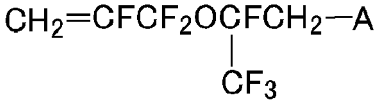,

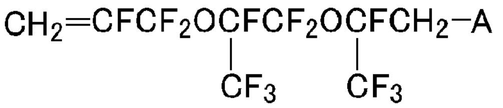 , 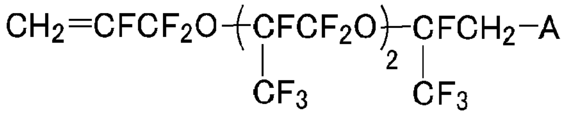 ,

are preferable.

In the monomer represented by general formula (1A), A in formula (1A) is preferably -COOM. In particular, it is preferably at least one selected from the group consisting of $CH_2$=$CFCF_2OCF(CF_3)COOM$ and $CH_2$=$CFCF_2OCF(CF_3)CF_2OCF(CF_3)COOM$ (wherein M is as defined above), and more preferably $CH_2$=$CFCF_2OCF(CF_3)COOM$.

Examples of the monomer represented by general formula (1) further include a monomer represented by the following formula:

$CF_2$=$CFCF_2$-O-Rf-A

wherein Rf and A are as described above.

More specifically, examples include:

$CF_2$=$CFCF_2OCF_2CF_2CF_2$-A,

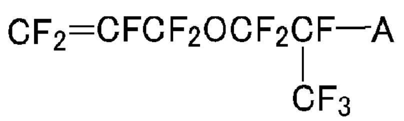

$CF_2$=$CFCF_2OCF_2CF_2CF_2CH_2$-A,

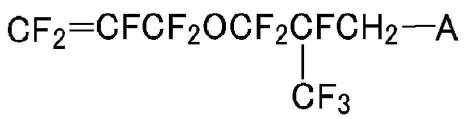

and the like.

It is also preferable that the monomer (I) is a monomer (2) represented by general formula (2).

The polymer (I) is also preferably a polymer (2) containing a polymerization unit (2) derived from a monomer represented by general formula (2):

$CX_2$=CY(-O-Rf-A) (2)

wherein X is the same or different and is -H or F; Y is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond or a keto group; and A is as described above.

In the production method of the present disclosure, the monomer (2) represented by general formula (2) and a further monomer may be copolymerized.

The polymer (2) may be a homopolymer of the monomer represented by general formula (2) or may be a copolymer thereof with a further monomer.

In general formula (2), X is -H or F. X may be both -F, or at least one may be -H. For example, one may be -F and the other may be -H, or both may be -H.

In general formula (2), Y is -H, -F, an alkyl group, or a fluorine-containing alkyl group. The alkyl group is an alkyl group that does not contain a fluorine atom, and has one or more carbon atoms. The alkyl group preferably has 6 or less carbon atoms, more preferably 4 or less carbon atoms, and even more preferably 3 or less carbon atoms. The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and even more preferably 3 or less carbon atoms. Y is preferably -H, -F, or $CF_3$, and more preferably -F.

In general formula (2), at least one of X and Y preferably contains a fluorine atom. For example, X may be -H, and Y and Z may be -F.

In general formula (2), Rf is a fluorine-containing alkylene group having 1 to 40 carbon atoms, a fluorine-containing alkylene group having 2 to 100 carbon atoms and having an ether bond, or a fluorine-containing alkylene group having 2 to 100 carbon atoms and having a keto group. The fluorine-containing alkylene group having 2 to 100 carbon atoms and having an ether bond is an alkylene group that does not contain a structure having an oxygen atom at a terminal and that contains an ether bond between carbon atoms.

The fluorine-containing alkylene group of Rf preferably has 2 or more carbon atoms. Further, the number of carbon atoms is preferably 30 or less, more preferably 20 or less, even more preferably 10 or less, and particularly preferably 5 or less. Examples of the fluorine-containing alkylene group include $-CF_2-$, $-CH_2CF_2-$, $-CF_2CF_2-$, $-CF_2CH_2-$, $-CF_2CF_2CH_2-$, $-CF(CF_3)-$, $-CF(CF_3)CF_2-$, $-CF(CF_3)CH_2-$, $-CF_2CF_2CF_2-$, and $-CF_2CF_2CF_2CF_2-$. The fluorine-containing alkylene group is preferably a perfluoroalkylene group, and more preferably an unbranched linear perfluoroalkylene group.

The fluorine-containing alkylene group having an ether bond preferably has 3 or more carbon atoms. Further, the number of carbon atoms in the fluorine-containing alkylene group having an ether bond is preferably 60 or less, more preferably 30 or less, even more preferably 12 or less, and particularly preferably 5 or less. The fluorine-containing alkylene group having an ether bond is also preferably a divalent group represented by, for example, the general formula:

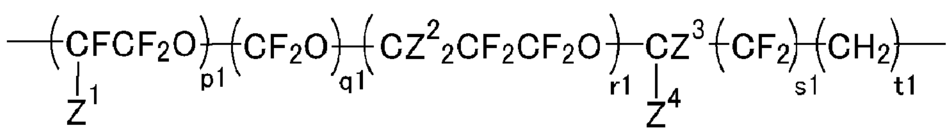

wherein $Z^1$ is F or $CF_3$; $Z^2$ and $Z^3$ are each H or F; $Z^4$ is H, F, or $CF_3$; p1 + q1 + r1 is an integer of 1 to 10; s1 is 0 or 1; and t1 is an integer of 0 to 5.

Specific examples of the fluorine-containing alkylene group having an ether bond include $-CF_2CF(CF_3)OCF_2-$, $-CF_2CF(CF_3)OCF_2CF_2-$, $-CF_2CF(CF_3)OCF_2CF_2CF_2-$, $-CF(CF_3)CF_2-O-CF(CF_3)-$, $-(CF(CF_3)CF_2-O)_n-CF(CF_3)-$ (wherein n is an integer of 1 to 10), $-CF(CF_3)CF_2-O-CF(CF_3)CH_2-$, $-(CF(CF_3)CF_2-O)_n-CF(CF_3)CH_2-$ (wherein n is an integer of 1 to 10), $-CH_2CF_2CF_2O-CH_2CF_2CH_2-$, $-CF_2CF_2CF_2O-CF_2-$, $-CF_2CF_2CF_2O-CF_2CF_2-$, $-CF_2CF_2CF_2O-CF_2CF_2CF_2-$, $-CF_2CF_2CF_2O-CF_2CF_2CH_2-$, $-CF_2CF_2O-CF_2-$, and $-CF_2CF_2O-CF_2CH_2-$. The fluorine-containing alkylene group having an ether bond is preferably a perfluoroalkylene group.

The fluorine-containing alkylene group having a keto group preferably has 3 or more carbon atoms. Further, the number of carbon atoms in the fluorine-containing alkylene group having a keto group is preferably 60 or less, more preferably 30 or less, even more preferably 12 or less, and particularly preferably 5 or less.

Examples of the fluorine-containing alkylene group having a keto group include $-CF_2CF(CF_3)CO-CF_2-$, $-CF_2CF(CF_3)CO-CF_2CF_2-$, $-CF_2CF(CF_3)CO-CF_2CF_2CF_2-$, and $-CF_2CF(CF_3)CO-CF_2CF_2CF_2CF_2-$. The fluorine-containing alkylene group having a keto group is preferably a perfluoroalkylene group.

Water may be added to the keto group in the fluorine-containing alkylene group. Accordingly, the monomer (2) may be a hydrate. Examples of the fluorine-containing alkylene group in which water is added to the keto group include $-CF_2CF(CF_3)C(OH)_2-CF_2-$, $-CF_2CF(CF_3)C(OH)_2-CF_2CF_2-$, $-CF_2CF(CF_3)C(OH)_2-CF_2CF_2CF_2-$, and $-CF_2CF(CF_3)C(OH)_2-CF_2CF_2CF_2CF_2-$.

In general formula (2), A is -COOM, $-SO_3M$, $-OSO_3M$, or $-C(CF_3)_2OM$, wherein M is H, a metal atom, $NR^7_4$, imidazolium optionally having a substituent, pyridinium optionally having a substituent, or phosphonium optionally having a substituent, and $R^7$ is H or an organic group.

$R^7$ is preferably H or a $C_{1-10}$ organic group, more preferably H or a $C_{1-4}$ organic group, and even more preferably H or a $C_{1-4}$ alkyl group.

Examples of the metal atom include alkali metals (Group 1) and alkaline earth metals (Group 2), and Na, K, or Li is preferable.

M is preferably H, a metal atom, or $NR^7_4$, more preferably H, an alkali metal (Group 1), an alkaline earth metal (Group 2), or $NR^7_4$, even more preferably H, Na, K, Li, or $NH_4$, yet more preferably H, Na, K, or $NH_4$, and particularly preferably H, Na, or $NH_4$.

A is preferably -COOM or $-SO_3M$, and more preferably $-SO_3M$.

The monomer represented by general formula (2) is preferably at least one selected from the group consisting of monomers represented by general formulas (2a), (2b), (2c), (2d), and (2e) :

$$CF_2=CF-O-(CF_2)_{n1}-A \qquad (2a)$$

wherein n1 represents an integer of 1 to 10, and A is as described above;

$$CF_2=CF-O-(CF_2C(CF_3)F)_{n2}-A \qquad (2b)$$

wherein n2 represents an integer of 1 to 5, and A is as defined above;

$$CF_2=CF\text{-}O\text{-}(CFX^1)_{n3}\text{-}A \qquad (2c)$$

wherein $X^1$ represents F or $CF_3$, n3 represents an integer of 1 to 10, and A is as defined above;

$$CF_2=CF\text{-}O\text{-}(CF_2CFX^1O)_{n4}\text{-}(CF_2)_{n6}\text{-}A \qquad (2d)$$

wherein n4 represents an integer of 1 to 10, n6 represents an integer of 1 to 3, and A and $X^1$ are as defined above; and

$$CF_2=CF\text{-}O\text{-}(CF_2CF_2CFX^1O)_{n5}\text{-}CF_2CF_2CF_2\text{-}A \qquad (2e)$$

wherein n5 represents an integer of 0 to 10, and A and $X^1$ are as defined above.

In general formula (2a), n1 is preferably an integer of 5 or less, and more preferably an integer of 2 or less.

Examples of the monomer represented by general formula (2a) include $CF_2=CF\text{-}O\text{-}CF_2COOM$, $CF_2=CF(OCF_2CF_2COOM)$, $CF_2=CF(O(CF_2)_3COOM)$, $CF_2=CF(OCF_2CF_2SO_3M)$, $CF_2=CFO(CF_2SO_3M)$, and $CF_2=CFO(CF_2CF_2CF_2SO_3M)$, wherein M is as defined above.

In general formula (2b), n2 is preferably an integer of 3 or less from the viewpoint of dispersion stability of the resulting composition.

In general formula (2c), n3 is preferably an integer of 5 or less from the viewpoint of water solubility, A is preferably -COOM, and M is preferably H or $NH_4$.

In general formula (2d), $X^1$ is preferably $-CF_3$ from the viewpoint of dispersion stability of the composition, n4 is preferably an integer of 5 or less from the viewpoint of water solubility, A is preferably -COOM, and M is preferably H or $NH_4$.

Examples of the monomer represented by general formula (2d) include $CF_2=CFOCF_2CF(CF_3)OCF_2CF_2COOM$, $CF_2=CFOCF_2CF(CF_3)OCF_2COOM$, $CF_2=CFOCF_2CF(CF_3)OCF_2CF_2CF_2COOM$, $CF_2=CFOCF_2CF(CF_3)OCF_2SO_3M$, $CF_2=CFOCF_2CF(CF_3)OCF_2CF_2SO_3M$, and $CF_2=CFOCF_2CF(CF_3)OCF_2CF_2CF_2SO_3M$, wherein M represents H, $NH_4$, or an alkali metal.

In general formula (2e), n5 is preferably an integer of 5 or less from the viewpoint of water solubility, A is preferably -COOM, and M is preferably H or $NH_4$.

Examples of the monomer represented by general formula (2e) include $CF_2=CFOCF_2CF_2CF_2COOM$, wherein M represents H, $NH_4$, or an alkali metal.

It is also preferable that the monomer (I) is a monomer (3) represented by general formula (3).

The polymer (I) is also preferably a polymer (3) containing a polymerization unit (3) derived from a monomer represented by general formula (3):

$$CX_2=CY(\text{-}Rf\text{-}A) \qquad (3)$$

wherein X is the same or different and is -H or F; Y is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and A is as described above.

In the production method of the present disclosure, the monomer (3) represented by general formula (3) and a further monomer may be copolymerized.

The polymer (3) may be a homopolymer of the monomer represented by general formula (3) or may be a copolymer thereof with a further monomer.

The fluorine-containing alkylene group having 2 to 100 carbon atoms and having an ether bond is an alkylene group that does not contain a structure having an oxygen atom at a terminal and that contains an ether bond between carbon atoms.

In general formula (3), Rf is preferably a fluorine-containing alkylene group having 1 to 40 carbon atoms. In general formula (3), at least one of X and Y preferably contains a fluorine atom.

The monomer represented by general formula (3) is preferably at least one selected from the group consisting of a monomer represented by general formula (3a):

$$CF_2=CF\text{-}(CF_2)_{n1}\text{-}A \qquad (3a)$$

wherein n1 represents an integer of 1 to 10, and A is as defined above; and a monomer represented by general formula (3b) :

$$CF_2=CF-(CF_2C(CF_3)F)_{n2}-A \qquad (3b)$$

wherein n2 represents an integer of 1 to 5, and A is as defined above.

In general formula (3a) and general formula (3b), A is preferably $-SO_3M$ or COOM, and M is preferably H, a metal atom, $NR^7{}_4$, imidazolium optionally having a substituent, pyridinium optionally having a substituent, or phosphonium optionally having a substituent. $R^7$ represents H or an organic group.

In general formula (3a), n1 is preferably an integer of 5 or less, and more preferably an integer of 2 or less. A is preferably -COOM, and M is preferably H or $NH_4$.

Examples of the monomer represented by general formula (3a) include $CF_2=CFCF_2COOM$, wherein M is as defined above.

In general formula (3b), n2 is preferably an integer of 3 or less from the viewpoint of dispersion stability of the resulting composition, A is preferably -COOM, and M is preferably H or $NH_4$.

Next, a suitable configuration wherein m is an integer of 2 or more in general formula (I) will now be described.

It is also preferable that the monomer (I) is at least one selected from the group consisting of monomers represented by general formula (4a) and general formula (4b).

The polymer (I) is also preferably a polymer (4) containing a polymerization unit (4) derived from at least one monomer selected from the group consisting of monomers represented by general formula (4a) and general formula (4b):

$$CF_2=CF-CF_2-O-Q^{F1}-CF(-Q^{F2}-CZ^1Z^2-A)_2 \qquad (4a)$$

wherein $Z^1$, $Z^2$, and A are as defined above, and $Q^{F1}$ and $Q^{F2}$ are the same or different, and are a single bond, a fluorine-containing alkylene group optionally containing an ether bond between carbon atoms, or a fluorine-containing oxyalkylene group optionally containing an ether bond between carbon atoms; and

$$CF_2=CF-O-Q^{F1}-CF(-Q^{F2}-CZ^2Z^2-A)_2 \qquad (4b)$$

wherein $Z^1$, $Z^2$, A, $Q^{F1}$, and $Q^{F2}$ are as defined above.

Examples of the monomers represented by general formula (4a) and general formula (4b) include:

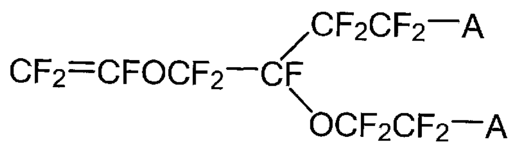

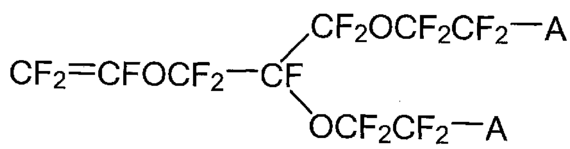

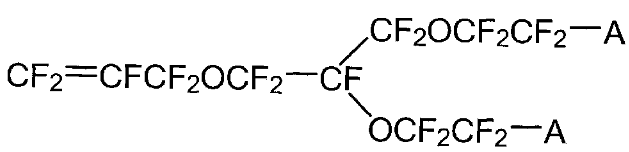

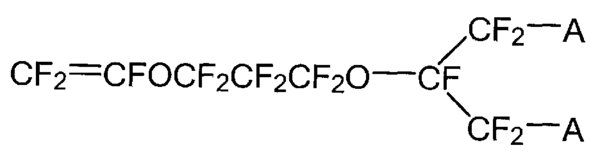

and the like.

The monomer (I) is preferably at least one selected from the group consisting of the monomer (1), the monomer (2), and the monomer (3), and is more preferably the monomer (2).

The polymer (I) is preferably at least one selected from the group consisting of the polymer (1), the polymer (2), and the polymer (3), and is more preferably the polymer (2).

In the production method of the present disclosure, the monomer (I) and a further monomer may be copolymerized.

The polymer (I) may be a homopolymer composed solely of the polymerization unit (I), or may be a copolymer containing the polymerization unit (I) and a polymerization unit derived from a further monomer copolymerizable with the monomer (I) represented by general formula (I). From the viewpoint of solubility in an aqueous medium, a homopolymer composed solely of the polymerization unit (I) is preferable. The polymerization unit (I) may be the same or different at each occurrence, and the polymer (I) may contain the polymerization units (I) derived from two or more different monomers represented by general formula (I).

By using as the polymer (I) a copolymer containing the polymerization unit (I) and a polymerization unit derived from a further monomer copolymerizable with the monomer (I) represented by general formula (I), adhesion of the fluorine-containing elastomer to a polymerization tank can be further reduced.

The further monomer is preferably a monomer represented by the general formula $CFR=CR_2$, wherein R is independently H, F, or a perfluoroalkyl group having 1 to 4 carbon atoms. Also, the further monomer is preferably a fluorine-containing ethylenic monomer having 2 or 3 carbon atoms. Examples of the further monomer include $CF_2=CF_2$, $CF_2=CFCl$, $CH_2=CF_2$, $CFH=CH_2$, $CFH=CF_2$, $CF_2=CFCF_3$, $CH_2=CFCF_3$, $CH_2=CHCF_3$, $CHF=CHCF_3$ (E-form), and $CHF=CHCF_3$ (Z-form).

In particular, from the viewpoint of good copolymerizability, the further monomer is preferably at least one selected from the group consisting of tetrafluoroethylene ($CF_2=CF_2$), chlorotrifluoroethylene ($CF_2=CFCl$), and vinylidene fluoride ($CH_2=CF_2$), more preferably at least one selected from the group consisting of tetrafluoroethylene and vinylidene fluoride, and even more preferably vinylidene fluoride. Accordingly, the polymerization unit derived from the further monomer is preferably at least one selected from the group consisting of a polymerization unit derived from tetrafluoroethylene and a polymerization unit derived from vinylidene fluoride, and even more preferably a polymerization unit derived from vinylidene fluoride. The polymerization unit derived from the further monomer may be the same or different at each occurrence, and the polymer (I) may contain polymerization units derived from two or more different further monomers.

Examples of the further monomer also include a monomer represented by general formula (n1-2):

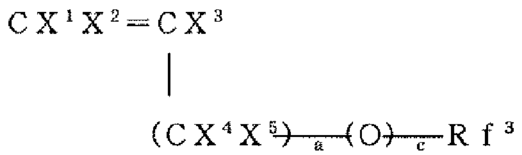

(n1-2)

wherein $X^1$ and $X^2$ are the same or different, and are H or F; $X^3$ is H, F, Cl, $CH_3$, or $CF_3$; $X^4$ and $X^5$ are the same or different, and are H or F; a and c are the same or different, and are 0 or 1; and $Rf^3$ is a fluorine-containing alkyl group having 1 to 40 carbon atoms or a fluorine-containing alkyl group having 2 to 100 carbon atoms and having an ether bond.

Specifically, preferable examples include $CH_2=CFCF_2-O-Rf^3$, $CF_2=CF-O-Rf^3$, $CF_2=CFCF_2-O-Rf^3$, $CF_2=CF-Rf^3$, $CH_2=CH-Rf^3$, and $CH_2=CHO-Rf^3$, wherein $Rf^3$ is as in formula (n1-2).

Examples of the further monomer also include a fluorine-containing acrylate monomer represented by formula (n2-1):

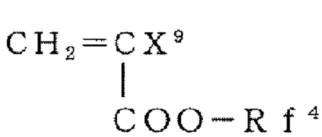

(n2-1)

wherein $X^9$ is H, F, or $CH_3$; and $Rf^4$ is a fluorine-containing alkyl group having 1 to 40 carbon atoms or a fluorine-containing alkyl group having 2 to 100 carbon atoms and having an ether bond. Examples of the $Rf^4$ group include:

$$-(CH_2)_{d1}-(CF_2)_{e1}-Z^8$$

wherein $Z^8$ is H, F, or Cl; dl is an integer of 1 to 4; and e1 is an integer of 1 to 10,

$-CH(CF_3)_2$,

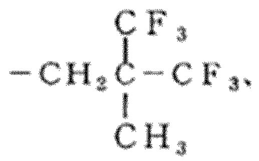

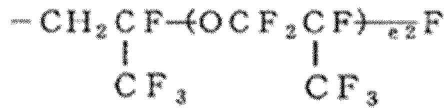

wherein e2 is an integer of 1 to 5,

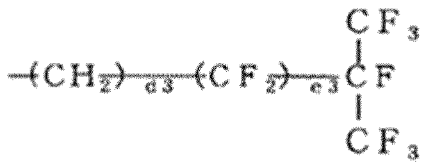

and

wherein d3 is an integer of 1 to 4; and e3 is an integer of 1 to 10.

Examples of the further monomer also include a fluorine-containing vinyl ether represented by formula (n2-2):

$CH_2=CHO-Rf^5$ (n2-2)

wherein $Rf^5$ is a fluorine-containing alkyl group having 1 to 40 carbon atoms or a fluorine-containing alkyl group having 2 to 100 carbon atoms and having an ether bond.

Specifically, preferable examples of the monomer represented by general formula (n2-2) include:

$$CH_2=CHOCH_2-(CF_2)_{e4}-Z^9$$

wherein $Z^9$ is H or F; and e4 is an integer of 1 to 10,

$$CH_2=CHOCH_2CH_2-(CF_2)_{e5}-F$$

wherein e5 is an integer of 1 to 10,

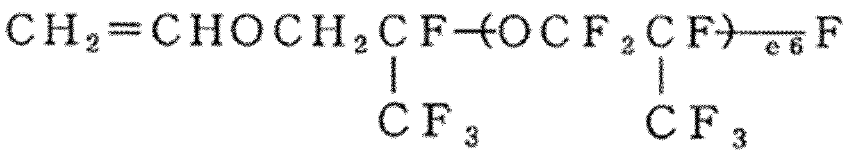

and

wherein e6 is an integer of 1 to 10.

More specifically, examples include:

$CH_2=CHOCH_2CF_2CF_2H$,

$$CH_2=CHOCH_2-(CF_2CF_2)_2-H,$$

$CH_2=CHOCH_2(CF_2CF_2)_3H$、

$CH_2=CHOCH_2CF_2CF_3$,

$CH_2=CHOCH_2CF_3$,

$CH_2=CHOCH_2CH_2(CF_2CF_2)_4F$、

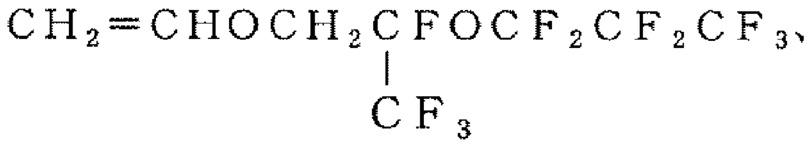

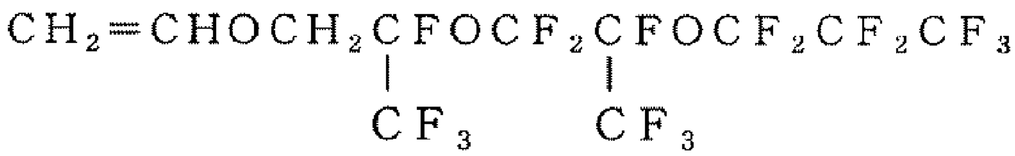

and the like.

In addition, examples also include a fluorine-containing allyl ether represented by general formula (n2-3):

$CH_2=CHCH_2O\text{-}Rf^6$ (n2-3)

wherein $Rf^6$ is a fluorine-containing alkyl group having 1 to 40 carbon atoms or a fluorine-containing alkyl group having 2 to 100 carbon atoms and having an ether bond; and a fluorine-containing vinyl monomer represented by general formula (n2-4) :

$CH_2=CH\text{-}Rf^7$ (n2-4)

wherein $Rf^7$ is a fluorine-containing alkyl group having 1 to 40 carbon atoms or a fluorine-containing alkyl group having 2 to 100 carbon atoms and having an ether bond.

Specific examples of the monomers represented by general formulas (n2-3) and (n2-4) include monomers such as:

$CH_2=CHCH_2OCH_2CF_2CF_2H$,

$CH_2=CHCH_2OCH_2(CF_2CF_2)_2H$、

$CH_2=CHCH_2OCH_2(CF_2CF_2)_3H$、

$CH_2=CHCH_2OCH_2CF_2CF_3$,

$CH_2=CHCH_2OCH_2CF_3$,

$CH_2=CHCH_2OCH_2CH_2(CF_2CF_2)_4F$、

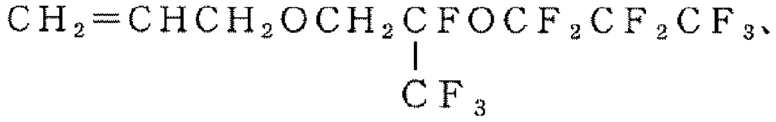

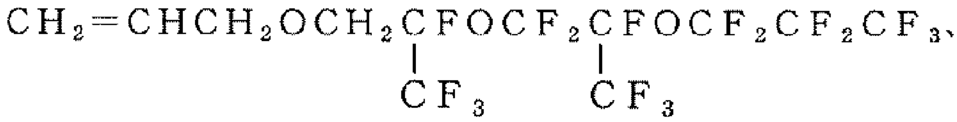

$$CH_2=CH-(CF_2CF_2)_2-F、$$

$$CH_2=CH-(CF_2CF_2)_4-F$$

and the like.

In the polymer (I), the content of the polymerization unit (I) is, in the order of becoming more preferred, 1.0 mol% or more, 3.0 mol% or more, 5.0 mol% or more, 10 mol% or more, 20 mol% or more, 30 mol% or more, 40 mol% or more, 50 mol% or more, 60 mol% or more, 70 mol% or more, 80 mol% or more, or 90 mol% or more, based on all polymerization units. It is particularly preferable that the content of the polymerization unit (I) is substantially 100 mol%, and it is most preferable that the polymer (I) is composed solely of the polymerization unit (I).

In the polymer (I), the content of the polymerization unit derived from the further monomer copolymerizable with the monomer represented by general formula (I) is, in the order of becoming more preferred, 99.0 mol% or less, 97.0 mol% or less, 95.0 mol% or less, 90 mol% or less, 80 mol% or less, 70 mol% or less, 60 mol% or less, 50 mol% or less, 40 mol% or less, 30 mol% or less, 20 mol% or less, or 10 mol% or less, based on all polymerization units. It is particularly preferable that the content of the polymerization unit derived from the further monomer copolymerizable with the monomer represented by general formula (I) is substantially 0 mol%, and it is most preferable that the polymer (I) contains no polymerization unit derived from the further monomer.

In one embodiment, the polymer (I) contains the polymerization unit (I) and the polymerization unit derived from the further monomer copolymerizable with the monomer (I). When the polymer (I) contains the polymerization unit (I) and the polymerization unit derived from the further monomer copolymerizable with the monomer (I), the content of the polymerization unit (I) derived from the monomer (I) is preferably 50 to 94% by mass, more preferably 63 to 90% by mass, and even more preferably 67 to 87% by mass, based on all polymerization units constituting the polymer (I), and the content of the polymerization unit derived from the further monomer is preferably 6 to 50% by mass, more preferably 10 to 37% by mass, and even more preferably 13 to 33% by mass, based on all polymerization units constituting the polymer (I).

When the polymer (I) contains the polymerization unit (I) and the polymerization unit derived from the further monomer copolymerizable with the monomer (I), the alternating ratio of the polymerization unit (I) and the polymerization unit derived from the further monomer copolymerizable with the monomer (I) is preferably 40% or more, more preferably 50% or more, and even more preferably 60% or more. The alternating ratio may be, for example, 40 to 99%.

The alternating ratio of the polymerization unit (I) and the polymerization unit derived from the further monomer copolymerizable with the monomer (I) in the polymer (I) can be determined by $^{19}$F-NMR analysis of the fluoropolymer.

The lower limit of the weight average molecular weight (Mw) of the polymer (I) is, in the order of becoming more preferred, $0.2 \times 10^4$ or more, $0.4 \times 10^4$ or more, $0.5 \times 10^4$ or more, $0.6 \times 10^4$ or more, $0.8 \times 10^4$ or more, $1.0 \times 10^4$ or more, $1.2 \times 10^4$ or more, $1.4 \times 10^4$ or more, $1.7 \times 10^4$ or more, $1.9 \times 10^4$ or more, $2.1 \times 10^4$ or more, $2.3 \times 10^4$ or more, $2.7 \times 10^4$ or more, $3.1 \times 10^4$ or more, $3.5 \times 10^4$ or more, $3.9 \times 10^4$ or more, $4.3 \times 10^4$ or more, $4.7 \times 10^4$ or more, $5.1 \times 10^4$ or more, $10.0 \times 10^4$ or more, $15.0 \times 10^4$ or more, $20.0 \times 10^4$ or more, or $25.0 \times 10^4$ or more. The upper limit of the weight average molecular weight (Mw) of the polymer (I) is, in the order of becoming more preferred, $150.0 \times 10^4$ or less, $100.0 \times 10^4$ or less, $60.0 \times 10^4$ or less, $50.0 \times 10^4$ or less, or $40.0 \times 10^4$ or less.

The lower limit of the number average molecular weight (Mn) of the polymer (I) is, in the order of becoming more preferred, $0.1 \times 10^4$ or more, $0.2 \times 10^4$ or more, $0.3 \times 10^4$ or more, $0.4 \times 10^4$ or more, $0.5 \times 10^4$ or more, $0.7 \times 10^4$ or more, $0.8 \times 10^4$ or more, $1.0 \times 10^4$ or more, $1.2 \times 10^4$ or more, $1.4 \times 10^4$, $1.6 \times 10^4$ or more, $1.8 \times 10^4$ or more, $2.0 \times 10^4$ or more, or $3.0 \times 10^4$ or more. The upper limit of the number average molecular weight (Mn) of the polymer (I) is, in the order of becoming more preferred, $75.0 \times 10^4$ or less, $50.0 \times 10^4$ or less, $40.0 \times 10^4$ or less, $30.0 \times 10^4$ or less, or $20.0 \times 10^4$ or less.

The molecular weight distribution (Mw/Mn) of the polymer (I) is, in the order of becoming preferred, 3.0 or less, 2.4 or less, 2.2 or less, 2.0 or less, 1.9 or less, 1.7 or less, 1.5 or less, 1.4 or less, or 1.3 or less.

The number average molecular weight and the weight average molecular weight are molecular weight values calculated by gel permeation chromatography (GPC) using monodisperse polyethylene oxide (PEO) and polyethylene glycol (PEG) as standards. Depending on the type of solvent used in the GPC measurement, the molecular weight may be calculated using monodisperse polystyrene as a standard. Further, when measurement by GPC is not possible, the number average molecular weight of the polymer (I) can be determined by the correlation between the number average molecular weight calculated from the number of terminal groups obtained by NMR, FT-IR, or the like, and the melt flow rate. The melt flow rate can be measured in accordance with JIS K 7210.

The polymer (I) usually has a terminal group. The terminal group is a terminal group produced during polymerization, and a representative terminal group is independently selected from hydrogen, iodine, bromine, a linear or branched alkyl group, and a linear or branched fluoroalkyl group, and may optionally contain at least one catenary heteroatom. The alkyl group or fluoroalkyl group preferably has 1 to 20 carbon atoms. These terminal groups are, in general, produced from an initiator or a chain transfer agent used to form the polymer (I) or produced during a chain transfer reaction.

The polymer (I) preferably has an ion exchange rate (IXR) of 53 or less. The IXR is defined as the number of carbon atoms in the polymer main chain based on the ionic group. A precursor group that becomes ionic by hydrolysis (such as $-SO_2F$) is not regarded as an ionic group for the purpose of determining the IXR.

The IXR is preferably 0.5 or more, more preferably 0.7 or more, even more preferably 1.0 or more, yet more preferably 1.2 or more, still yet more preferably 1.5 or more, and particularly preferably 1.9 or more. Further, the IXR is more preferably 30 or less, even more preferably 10 or less, particularly preferably 3 or less, and most preferably 2.2 or less.

The ion exchange capacity of the polymer (I) is, in the order of becoming more preferred, 0.80 meq/g or more, 1.50 meq/g or more, 1.75 meq/g or more, 2.00 meq/g or more, 2.40 meq/g or more, 2.50 meq/g or more, 2.60 meq/g or more, 3.00 meq/g or more, 3.20 meq/g or more, or 3.50 meq/g or more. The ion exchange capacity is the content of ionic groups (-COOM) in the polymer (1) and can be determined by calculation from the compositional features of the polymer (I). A precursor group that becomes ionic by hydrolysis (such as $-COOCH_3$) is not regarded as an ionic group for the purpose of determining the ion exchange capacity. It is conjectured that the higher the ion exchange capacity of the polymer (I), the more anionic groups in the polymer (I), the more stable particles are formed, and also the higher the particle forming ability, resulting in a larger number of particles per unit water volume and a higher polymerization rate. When the ion exchange capacity of the polymer (I) is too low, the fluorine-containing elastomer produced by the polymerization may adhere to the polymerization tank, a sufficient polymerization rate may not be obtained, or the number of fluorine-containing elastomer particles generated may be small.

In the polymer (I), the ionic groups (anionic groups) are typically distributed along the polymer main chain. The polymer (I) contains the polymer main chain together with repeating side chains bonded to this main chain, and these side chains preferably have ionic groups.

The polymer (I) preferably contains an ionic group having a pKa of less than 10, and more preferably less than 7. The ionic group of the polymer (I) is preferably selected from the group consisting of sulfonate, carboxylate, phosphonate, and phosphate.

The term "sulfonate, carboxylate, phosphonate, and phosphate" is intended to refer to the respective salts or the respective acids that can form the salts. When a salt is used, that salt is preferably an alkali metal salt or an ammonium salt. The preferred ionic group is a sulfonate group.

The polymer (I) preferably has water solubility. Water solubility means the property of being readily dissolved or dispersed in an aqueous medium. When the polymer has water solubility, the particle size thereof cannot be measured by, for example, dynamic light scattering (DLS), or a particle size of 10 nm or less is indicated.

It is preferable that the polymer (I) has sufficient water solubility. In general, the higher the content of the polymer (I) in the aqueous solution, the more difficult it is for the polymer (I) to be sufficiently dissolved or dispersed in the aqueous medium. Accordingly, it can be said that the polymer (I) whose particle size cannot be measured by dynamic light scattering (DLS) even in the case where the content of the polymer (I) in the aqueous solution is high has high water solubility. It is preferable that the particle size of the polymer (I) cannot be measured even in the case where it is contained in the aqueous solution at a content of 1.0% by mass. It is preferable that the particle size of the polymer (I) cannot be measured even in the case where it is contained in the aqueous solution at a content of more preferably 1.5% by mass, and even more preferably 2.0% by mass.

The viscosity of the aqueous solution of the polymer (I) is preferably 5.0 mPa.s or more, more preferably 8.0 mPa.s or more, even more preferably 10.0 mPa.s or more, particularly preferably 12.0 mPa.s or more, and most preferably 14.0 mPa.s or more, and is preferably 100.0 mPa.s or less, more preferably 50.0 mPa.s or less, even more preferably 25.0 mPa.s or less, and still yet more preferably 20.0 mPa.s or less.

The viscosity of the aqueous solution of the polymer (I) can be specified by adjusting the content of the polymer (I) in the aqueous solution to 33% by mass based on the aqueous solution and measuring the viscosity of the resulting aqueous solution at 20°C using a tuning fork vibro viscometer (model number: SV-10) manufactured by A&D Co., Ltd.

The critical micelle concentration (CMC) of the polymer (I) is preferably 0.1% by mass or more, more preferably 0.5% by mass or more, and even more preferably 1% by mass or more, and is preferably 20% by mass or less, more preferably 10% by mass or less, and even more preferably 5% by mass or less.

The critical micelle concentration of the polymer (I) can be determined by measuring the surface tension. The surface tension can be measured with, for example, a surface tensiometer manufactured by Kyowa Interface Science Co., Ltd., model CBVP-A3.

The acid number of the polymer (I) is preferably 60 or more, more preferably 90 or more, even more preferably 120 or more, particularly preferably 150 or more, and most preferably 180 or more, and the upper limit is not limited, but is preferably 300 or less.

The acid number of the polymer (I) can be measured by, in the case where the polymer (I) has an anionic group other than acid-type functional groups, such as -COOM, $-SO_3M$, $-OSO_3M$, or $-C(CF_3)_2OM$ (M is a metal atom, $NR^7{}_4$, imidazolium optionally having a substituent, pyridinium optionally having a substituent, or phosphonium optionally having a substituent, and $R^7$ is H or an organic group), converting these groups to acid-type groups (such as -COOH and $-SO_3H$), and then performing acid-base titration.

The polymer (I) may also be a polymer (11) of a monomer (11) represented by general formula (11), wherein the content of a polymerization unit (11) derived from the monomer (11) is 50 mol% or more based on all polymerization units constituting the polymer (11), and the weight average molecular weight (Mw) is $38.0 \times 10^4$ or more:

General formula (11): $CX_2=CY-CF_2-O-Rf-A$

wherein X and Y are independently H, F, $CH_3$, or $CF_3$, and at least one of X and Y is F; Rf is a fluorine-containing alkylene group having 1 to 40 carbon atoms or a fluorine-containing alkylene group having 2 to 100 carbon atoms and having an ether bond; and A is -COOM, $-SO_3M$, $-OSO_3M$, or $-C(CF_3)_2OM$, where M is H, a metal atom, $NR^7{}_4$, imidazolium optionally having a substituent, pyridinium optionally having a substituent, or phosphonium optionally having a substituent, and $R^7$ is H or an organic group.

In general formula (11), X and Y are independently H, F, $CH_3$, or $CF_3$, and at least one of X and Y is F. X is preferably H or F, and more preferably H. Y is preferably H or F, and more preferably F.

Rf and A in general formula (11) are the same as Rf and A in general formula (1), which represents the monomer constituting the polymer (1).

The polymer (11) may be a homopolymer composed solely of the polymerization unit (11) derived from the monomer (11), or may be a copolymer containing the polymerization unit (11) and a polymerization unit derived from a further monomer copolymerizable with the monomer (11). The further monomer is as mentioned above. The polymerization unit (11) may be the same or different at each occurrence, and the polymer (11) may contain the polymerization units (11) derived from two or more different monomers represented by general formula (11).

The content of the polymerization unit (11) in the polymer (11) is, in the order of becoming more preferred, 50 mol% or more, 60 mol% or more, 70 mol% or more, 80 mol% or more, 90 mol% or more, or 99 mol% or more, based on all polymerization units constituting the polymer (11). It is particularly preferable that the content of the polymerization unit (11) is substantially 100 mol%, and it is most preferable that the polymer (11) is composed solely of the polymerization unit (11).

In the polymer (11), the content of the polymerization unit derived from the further monomer copolymerizable with the monomer (11) is, in the order of becoming more preferred, 99.0 mol% or less, 97.0 mol% or less, 95.0 mol% or less, 90 mol% or less, 80 mol% or less, 70 mol% or less, 60 mol% or less, or 50 mol% or less, based on all polymerization units constituting the polymer (11). It is particularly preferable that the content of the polymerization unit derived from the further monomer copolymerizable with the monomer (11) is substantially 0 mol%, and it is most preferable that the polymer (11) contains no polymerization unit derived from the further monomer.

The lower limit of the weight average molecular weight of the polymer (11) is, in the order of becoming more preferred, $38.0 \times 10^4$ or more or $40.0 \times 10^4$ or more. The upper limit of the weight average molecular weight of the polymer (11) is, in the order of becoming more preferred, $150.0 \times 10^4$ or less, $100.0 \times 10^4$ or less, or $60.0 \times 10^4$ or less.

The lower limit of the number average molecular weight of the polymer (11) is, in the order of becoming more preferred, $5.0 \times 10^4$, $8.0 \times 10^4$, $10.0 \times 10^4$ or more, or $12.0 \times 10^4$ or more. The upper limit of the number average molecular weight of the polymer (11) is, in the order of becoming more preferred, $75.0 \times 10^4$ or less, $50.0 \times 10^4$ or less, $40.0 \times 10^4$ or less, or $30.0 \times 10^4$ or less.

As the polymer (I), a polymer (12) of a monomer (12) represented by general formula (12), in which the content of a polymerization unit (12) derived from the monomer (12) is 50 mol% or more based on all polymerization units constituting the polymer (12), and the weight average molecular weight (Mw) is $1.4 \times 10^4$ or more can also be used.

General formula (12): $CX_2=CX-O-Rf-A$

wherein X is independently F or $CF_3$; Rf is a fluorine-containing alkylene group having 1 to 40 carbon atoms or a fluorine-containing alkylene group having 2 to 100 carbon atoms and having an ether bond or a keto group; and A is -COOM, $-SO_3M$, $-OSO_3M$, or $-C(CF_3)_2OM$, where M is -H, a metal atom, $-NR^7_4$, imidazolium optionally having a substituent, pyridinium optionally having a substituent, or phosphonium optionally having a substituent, and $R^7$ is H or an organic group.

In general formula (12), X is independently F or $CF_3$. It is preferable that at least one or more X are F, and it is more preferable that all X are F.

Rf and A in general formula (12) are the same as Rf and A in general formula (2), which represents the monomer constituting the polymer (2).

The polymer (12) may be a homopolymer composed solely of the polymerization unit (12) derived from the monomer (12), or may be a copolymer containing the polymerization unit (12) and a polymerization unit derived from a further monomer copolymerizable with the monomer (12). The further monomer is as mentioned above. The polymerization unit (12) may be the same or different at each occurrence, and the polymer (12) may contain the polymerization units (12) derived from two or more different monomers represented by general formula (12).

The content of the polymerization unit (12) in the polymer (12) is, in the order of becoming more preferred, 50 mol% or more, 60 mol% or more, 70 mol% or more, 80 mol% or more, 90 mol% or more, or 99 mol% or more, based on all polymerization units constituting the polymer (12). It is particularly preferable that the content of the polymerization unit (12) is substantially 100 mol%, and it is most preferable that the polymer (12) is composed solely of the polymerization unit (12).

In the polymer (12), the content of the polymerization unit derived from the further monomer copolymerizable with the monomer (12) is, in the order of becoming more preferred, 50 mol% or less, 40 mol% or less, 30 mol% or less, 20 mol% or less, 10 mol% or less, or 1 mol% or less, based on all polymerization units constituting the polymer (12). It is particularly preferable that the content of the polymerization unit derived from the further monomer copolymerizable with the monomer (12) is substantially 0 mol%, and it is most preferable that the polymer (12) contains no polymerization unit derived from the further monomer.

The lower limit of the weight average molecular weight (Mw) of the polymer (12) is, in the order of becoming more preferred, $1.4 \times 10^4$ or more, $1.7 \times 10^4$ or more, $1.9 \times 10^4$ or more, $2.1 \times 10^4$ or more, $2.3 \times 10^4$ or more, $2.7 \times 10^4$ or more, $3.1 \times 10^4$ or more, $3.5 \times 10^4$ or more, $3.9 \times 10^4$ or more, $4.3 \times 10^4$ or more, $4.7 \times 10^4$ or more, or $5.1 \times 10^4$ or more. The upper limit of the weight average molecular weight (Mw) of the polymer (12) is, in the order of becoming more preferred, $150.0 \times 10^4$ or less, $100.0 \times 10^4$ or less, $60.0 \times 10^4$ or less, $50.0 \times 10^4$ or less, or $40.0 \times 10^4$ or less.

The lower limit of the number average molecular weight (Mn) of the polymer (12) is, in the order of becoming more preferred, $0.7 \times 10^4$ or more, $0.9 \times 10^4$ or more, $1.0 \times 10^4$ or more, $1.2 \times 10^4$ or more, $1.4 \times 10^4$ or more, $1.6 \times 10^4$ or more, or $1.8 \times 10^4$ or more. The upper limit of the number average molecular weight (Mn) of the polymer (12) is, in the order of becoming more preferred, $75.0 \times 10^4$ or less, $50.0 \times 10^4$ or less, $40.0 \times 10^4$ or less, $30.0 \times 10^4$ or less, or $20.0 \times 10^4$ or less.

The molecular weight distribution (Mw/Mn) of the polymer (12) is preferably 3.0 or less, more preferably 2.4 or less, even more preferably 2.2 or less, particularly preferably 2.0 or less, and most preferably 1.9 or less.

As the polymer (I), a polymer (13) of a monomer (13) represented by general formula (13), in which the content of a polymerization unit (13) derived from the monomer (13) is 50% by mass or more based on all polymerization units constituting the polymer (13) can also be used.

General formula (13): $CX_2=CX-O-Rf-SO_3M$

wherein X is independently F or $CF_3$; Rf is a fluorine-containing alkylene group having 1 to 40 carbon atoms or a fluorine-containing alkylene group having 2 to 100 carbon atoms and having an ether bond or a keto group; and M is -H, a metal atom, $-NR^7_4$, imidazolium optionally having a substituent, pyridinium optionally having a substituent, or phosphonium optionally having a substituent, and $R^7$ is H or an organic group.

In general formula (13), X is independently F or $CF_3$. It is preferable that at least one or more X are F, and it is more preferable that all X are F.

Rf and M in general formula (13) are the same as Rf and M in general formula (2), which represents the monomer constituting the polymer (2).

The polymer (13) may be a homopolymer composed solely of the polymerization unit (13) derived from the monomer (13), or may be a copolymer containing the polymerization unit (13) and a polymerization unit derived from a further monomer copolymerizable with the monomer (13). The further monomer is as mentioned above. The polymerization unit (13) may be the same or different at each occurrence, and the polymer (13) may contain the polymerization units (13) derived from two or more different monomers represented by general formula (13).

In the polymer (13), the content of the polymerization unit (13) derived from the monomer (13) is 50% by mass or more based on all polymerization units constituting the polymer (13). The content of the polymerization unit (13) in

the polymer (13) is, in the order of becoming preferred, 60% by mass or more, 70% by mass or more, 80% by mass or more, 90% by mass or more, or 99% by mass or more, based on all polymerization units constituting the polymer (13). It is particularly preferable that the content of the polymerization unit (13) is substantially 100% by mass, and it is most preferable that the polymer (13) is composed solely of the polymerization unit (13).

In the polymer (13), the content of the polymerization unit derived from the further monomer copolymerizable with the monomer (13) is, in the order of becoming preferred, 50% by mass or less, 40% by mass or less, 30% by mass or less, 20% by mass or less, 10% by mass or less, or 1% by mass or less, based on all polymerization units constituting the polymer (13). It is particularly preferable that the content of the polymerization unit derived from the further monomer copolymerizable with the monomer (13) is substantially 0% by mass, and it is most preferable that the polymer (13) contains no polymerization unit derived from the further monomer.

The lower limit of the number average molecular weight of the polymer (13) is, in the order of becoming preferred, $0.3 \times 10^4$ or more, $0.4 \times 10^4$ or more, $0.5 \times 10^4$ or more, $0.7 \times 10^4$ or more, $0.8 \times 10^4$ or more, $1.0 \times 10^4$ or more, $1.2 \times 10^4$ or more, $1.4 \times 10^4$ or more, $1.6 \times 10^4$ or more, $1.8 \times 10^4$ or more, $2.0 \times 10^4$ or more, or $3.0 \times 10^4$ or more. The upper limit of the number average molecular weight of the polymer (13) is, in the order of becoming preferred, $75.0 \times 10^4$ or less, $50.0 \times 10^4$ or less, $40.0 \times 10^4$ or less, $30.0 \times 10^4$ or less, or $20.0 \times 10^4$ or less.

The lower limit of the weight average molecular weight of the polymer (13) is, in the order of becoming preferred, $0.4 \times 10^4$ or more, $0.5 \times 10^4$ or more, $0.6 \times 10^4$ or more, $0.8 \times 10^4$ or more, $1.0 \times 10^4$ or more, $1.2 \times 10^4$ or more, $1.4 \times 10^4$ or more, $1.7 \times 10^4$ or more, $1.9 \times 10^4$ or more, $2.1 \times 10^4$ or more, $2.3 \times 10^4$ or more, $2.7 \times 10^4$ or more, $3.1 \times 10^4$ or more, $3.5 \times 10^4$ or more, $3.9 \times 10^4$ or more, $4.3 \times 10^4$ or more, $4.7 \times 10^4$ or more, $5.1 \times 10^4$ or more, $10.0 \times 10^4$ or more, $15.0 \times 10^4$ or more, $20.0 \times 10^4$ or more, or $25.0 \times 10^4$ or more. The upper limit of the weight average molecular weight of the polymer (13) is, in the order of becoming preferred, $150.0 \times 10^4$ or less, $100.0 \times 10^4$ or less, $60.0 \times 10^4$ or less, $50.0 \times 10^4$ or less, or $40.0 \times 10^4$ or less.

The molecular weight distribution (Mw/Mn) of the polymer (13) is, in the order of becoming preferred, 3.0 or less, 2.4 or less, 2.2 or less, 2.0 or less, 1.9 or less, 1.7 or less, 1.5 or less, 1.4 or less, or 1.3 or less.

The polymer (I) can be produced by a conventionally known method except that the above-described monomer is used.

Among the polymer (I), the polymer (11) can be produced by a method (11) for producing the polymer (11), the method comprising polymerizing the monomer (11) represented by general formula (11) in an aqueous medium to produce the polymer (11) of the monomer (11), wherein the oxygen concentration in the reaction system of the polymerization is maintained at 500 ppm by volume or less.

In the production method (11), the oxygen concentration in the reaction system of the polymerization is 500 ppm by volume or less. In the production method (11), the oxygen concentration in the reaction system is maintained at 500 ppm by volume or less throughout the polymerization of the monomer (11). The oxygen concentration in the reaction system is preferably 350 ppm by volume or less, more preferably 300 ppm by volume or less, even more preferably 100 ppm by volume or less, and particularly preferably 50 ppm by volume or less. The oxygen concentration in the reaction system is usually 0.01 ppm by volume or more.

In the production method (11), since a polymer (11) having an even higher molecular weight can be easily produced, the polymerization temperature of the monomer (11) is preferably 59°C or lower, more preferably 57°C or lower, even more preferably 55°C or lower, and particularly preferably 53°C or lower, and it is preferably 20°C or higher, more preferably 25°C or higher, even more preferably 30°C or higher, and particularly preferably 35°C or higher.

In the production method (11), the monomer (11) and the above-mentioned further monomer may be copolymerized.

In the production method (11), the polymerization pressure is usually atmospheric pressure to 10 MPaG. The polymerization pressure is determined as appropriate according to the type of monomer used, the molecular weight of the target polymer, and the reaction rate.

In the production method (11), the polymerization time is usually 1 to 200 hours, and it may be 5 to 100 hours.

Among the polymer (I), the polymer (12) can be produced by a method (12) for producing the polymer (12), the method comprising polymerizing the monomer (12) represented by general formula (12) in an aqueous medium to produce the polymer (12) of the monomer (12), wherein the oxygen concentration in the reaction system of the polymerization is maintained at 1,500 ppm by volume or less.

In the production method (12), the oxygen concentration in the reaction system of the polymerization is 1,500 ppm by volume or less. In the production method (12), the oxygen concentration in the reaction system is maintained at 1,500 ppm by volume or less throughout the polymerization of the monomer (12). The oxygen concentration in the reaction system is preferably 500 ppm by volume or less, more preferably 100 ppm by volume or less, and even more preferably 50 ppm by volume or less. The oxygen concentration in the reaction system is usually 0.01 ppm by volume or more.

In the production method (12), since a polymer (12) having an even higher molecular weight can be easily produced, the polymerization temperature of the monomer (12) is preferably 70°C or lower, more preferably 65°C or

lower, even more preferably 60°C or lower, particularly preferably 55°C or lower, still yet more preferably 50°C or lower, particularly preferably 45°C or lower, and most preferably 40°C or lower, and it is preferably 10°C or higher, more preferably 15°C or higher, and even more preferably 20°C or higher.

In the production method (12), the monomer (12) and the above-mentioned further monomer may be copolymerized.

In the production method (12), the polymerization pressure is usually atmospheric pressure to 10 MPaG. The polymerization pressure is determined as appropriate according to the type of monomer used, the molecular weight of the target polymer, and the reaction rate.

In the production method (12), the polymerization time is usually 1 to 200 hours, and it may be 5 to 100 hours.

Among the polymer (1), the polymer (13) can be produced by a method (13) for producing the polymer (13), the method comprising polymerizing the monomer (13) represented by general formula (13) in an aqueous medium to produce the polymer (13) of the monomer (13).

In the production method (13), the oxygen concentration in the reaction system of the polymerization is preferably 1,500 ppm by volume or less, more preferably 500 ppm by volume or less, even more preferably 100 ppm by volume or less, and particularly preferably 50 ppm by volume or less. The oxygen concentration in the reaction system is usually 0.01 ppm by volume or more. In the above production method, it is preferable that the oxygen concentration in the reaction system is maintained within the above range throughout the polymerization of the monomer (13).

In the production method (13), since a polymer (13) having an even higher molecular weight can be easily produced, the polymerization temperature of the monomer (13) is preferably 70°C or lower, more preferably 65°C or lower, even more preferably 60°C or lower, particularly preferably 55°C or lower, still yet more preferably 50°C or lower, particularly preferably 45°C or lower, and most preferably 40°C or lower, and it is preferably 10°C or higher, more preferably 15°C or higher, and even more preferably 20°C or higher.

In the production method (13), the monomer (13) and the above-mentioned further monomer may be copolymerized.

In the production method (13), the polymerization pressure is usually atmospheric pressure to 10 MPaG. The polymerization pressure is determined as appropriate according to the type of monomer used, the molecular weight of the target polymer, and the reaction rate.

In the production method (13), the polymerization time is usually 1 to 200 hours, and it may be 5 to 100 hours.

In the production methods (11) to (13), the oxygen concentration in the reaction system of the polymerization can be controlled by, for example, circulating an inert gas such as nitrogen or argon, or, in the case of using a gaseous monomer, that gaseous monomer in the liquid phase or gas phase in the reactor. The oxygen concentration in the reaction system of the polymerization can be determined by measuring and analyzing the gas emitted from the discharge gas line of the polymerization system with a low-concentration oxygen analyzer.

In the production methods (11) to (13), the aqueous medium is a reaction medium in which the polymerization is performed, and means a liquid containing water. The aqueous medium may be any medium containing water, and it may be one containing water and, for example, any of fluorine-free organic solvents such as alcohols, ethers, and ketones, and/or fluorine-containing organic solvents having a boiling point of 40°C or lower. The aqueous medium is preferably water.

In the production methods (11) to (13), the polymerization of the monomer can be carried out in the presence of a polymerization initiator. The polymerization initiator is not limited as long as it can generate radicals within the above polymerization temperature range, and known oil-soluble and/or water-soluble polymerization initiators can be used. The polymerization initiator can be combined with a reducing agent or the like to form a redox agent and initiate the polymerization. The concentration of the polymerization initiator is determined as appropriate according to the type of monomer, the molecular weight of the target polymer, and the reaction rate.

The polymerization initiator used may be an organic peroxide such as a persulfate (e.g., ammonium persulfate), disuccinic acid peroxide, or diglutaric acid peroxide alone or in the form of a mixture thereof. Further, the polymerization initiator may be used together with a reducing agent such as sodium sulfite so as to form a redox system. Moreover, the concentration of radicals in the system can be also regulated by adding a radical scavenger such as hydroquinone or catechol or adding a peroxide decomposer such as ammonium sulfite during polymerization.

Among the polymerization initiators, persulfates are preferable since a polymer having an even higher molecular weight can be easily produced. Examples of the persulfates include ammonium persulfate, potassium persulfate, and sodium persulfate, and ammonium persulfate is preferable.

The amount of the polymerization initiator added is not limited, and the polymerization initiator may be added in an amount that does not significantly decrease the polymerization rate (e.g., a concentration of several ppm in water) or more at once in the initial stage of polymerization, or added successively or continuously. The upper limit is within a range where the reaction temperature is allowed to increase while the polymerization reaction heat is removed through the device surface, and the upper limit is more preferably within a range where the polymerization reaction heat can be removed through the device surface.

In the production methods (11) to (13), the polymerization initiator can be added at the initiation of polymerization, and can be added also during polymerization. The proportion of the amount of the polymerization initiator added at the initiation of polymerization to the amount of the polymerization initiator added during polymerization is preferably 95/5 to 5/95, more preferably 60/40 to 10/90, and more preferably 30/70 to 15/85. The method for adding the polymerization initiator during polymerization is not limited, and the entire amount may be added at once, may be added in two or more divided portions, or may be added continuously.

In the production method (11) to (13), since a polymer having an even higher molecular weight can be easily produced, the polymerization initiator used for polymerization is preferably added in a total amount of 0.00001 to 10% by mass based on the aqueous medium. The polymerization initiator used for polymerization is added in a total amount of more preferably 0.0001% by mass or more, even more preferably 0.001% by mass or more, and particularly preferably 0.01% by mass or more, and more preferably 5% by mass or less, and even more preferably 2% by mass or less.

In the production methods (11) to (13), since a polymer having an even higher molecular weight can be easily produced, the polymerization initiator used for polymerization is preferably added in a total amount of 0.001 to 10 mol% based on the monomer. The total amount of the polymerization initiator added for use in polymerization is more preferably 0.005 mol% or more, even more preferably 0.01 mol% or more, still yet more preferably 0.1 mol% or more, and most preferably 0.5 mol% or more, and is more preferably 5 mol% or less, even more preferably 2.5 mol% or less, particularly most preferably 2.2 mol% or less, and most preferably 2.0 mol% or less.

In the production methods (11) to (13), since a polymer having an even higher molecular weight can be easily produced, it is preferable that the amount of monomer containing any of the monomers (11) to (13) present at the initiation of polymerization is 20% by mass or more based on the amount of aqueous medium present. The amount of monomer present is more preferably 30% by mass or more, and even more preferably 40% by mass or more. The upper limit of the amount of monomer present is not limited, and from the viewpoint of allowing the polymerization to proceed smoothly, it may be 200% by mass or less. The amount of monomer present at the initiation of polymerization is the total amount of any of the monomers (11) to (13) and the further monomer, if present, present in the reactor at the initiation of polymerization.

In the production methods (11) to (13), the polymerization may be carried out in the presence of a pH adjuster. The pH adjuster may be added before the initiation of polymerization or after the initiation of polymerization.

Examples of the pH adjuster include ammonia, sodium hydroxide, potassium hydroxide, sodium carbonate, potassium carbonate, ammonium carbonate, sodium hydrogen carbonate, potassium hydrogen carbonate, ammonium hydrogen carbonate, sodium phosphate, potassium phosphate, sodium citrate, potassium citrate, ammonium citrate, sodium gluconate, potassium gluconate, and ammonium gluconate.

In the production methods (11) to (13), the polymerization of the monomers (11) to (13) can be performed by charging a reactor with the aqueous medium, the monomers (11) to (13), optionally the further monomer, and optionally other additives, stirring the contents of the reactor, maintaining the reactor at a predetermined polymerization temperature, and then adding a predetermined amount of a polymerization initiator to thereby initiate the polymerization reaction. After the initiation of the polymerization reaction, the monomer, the polymerization initiator, and the other additives may be added depending on the purpose.

In the production methods (11) to (13), the polymerization of the monomer can be carried out substantially in the absence of a fluorine-containing surfactant. In the present disclosure, the expression "substantially in the absence of a fluorine-containing surfactant" means that the amount of the fluorine-containing surfactant is 10 ppm by mass or less based on the aqueous medium. The amount of the fluorine-containing surfactant based on the aqueous medium is preferably 1 ppm by mass or less, more preferably 100 ppb by mass or less, even more preferably 10 ppb by mass or less, and yet more preferably 1 ppb by mass or less.

The fluorine-containing surfactant will be described later as a "fluorine-containing surfactant not having a functional group capable of reaction by radical polymerization".

In the production method of the present disclosure, it is preferable that the polymer (I) is added in an amount of 0.00001 to 20% by mass based on 100% by mass of the aqueous medium. When the amount of the polymer (I) added in the above polymerization (the amount present) is within the above range, the polymerization reaction of the fluorine-containing monomer proceeds smoothly and the fluorine-containing elastomer can be produced efficiently. When the amount of the polymer (I) added is too small, a sufficient polymerization rate cannot be obtained or a sufficient yield cannot be obtained.

Since the polymerization reaction of the fluorine-containing monomer proceeds further smoothly, the amount of the polymer (I) added is more preferably 0.0001% by mass or more, even more preferably 0.0005% by mass or more, still more preferably 0.001% by mass or more, particularly preferably 0.005% by mass or more, and most preferably 0.01% by mass or more, based on 100% by mass of the aqueous medium.

In addition, when the amount added is too large, effects commensurate with the amount added cannot be obtained, which is economically disadvantageous, and therefore, the amount of the polymer (I) added is more preferably 2% by mass or less, even more preferably 1% by mass or less, and particularly preferably 0.5% by mass or less, based

on 100% by mass of the aqueous medium.

The timing of addition of the polymer (I) in the above polymerization is not limited, and it may be added before the initiation of polymerization or may be added after the initiation of polymerization. In addition, in the above polymerization, the polymer (I) may be added all at once at an arbitrary timing, or it may be added continuously. Adding the polymer (I) continuously means, for example, adding the polymer (I) not all at once, but adding over time and without interruption or adding in portions. When the polymer (I) is added continuously, it is preferable to add it such that the total amount of the polymer (I) added is within the above range. When the polymer (I) is added, an aqueous solution containing the polymer (I) and water may be prepared and that aqueous solution may be added.

As the polymer (I), an aqueous solution containing the polymer (I) can be used.

The polymer (I) or aqueous solution containing the polymer (I) may contain a dimer and a trimer of the monomer (1) or may be substantially free from the dimer and trimer of the monomer (1). The dimer and trimer of the monomer (1) are usually generated when the monomer (1) is polymerized to obtain the polymer (I). The content of the dimer and trimer in the polymer (I) or aqueous solution containing the polymer (I) is 1.0% by mass or less, preferably 0.1% by mass or less, more preferably 0.01% by mass or less, even more preferably 0.001% by mass or less, and particularly preferably 0.0001% by mass or less, based on the polymer (I).

The polymer (I) or aqueous solution containing the polymer (I) may be substantially free from a dimer and a trimer constituted by the polymerization unit (1) derived from the monomer (1), and the polymerization unit derived from the further monomer copolymerizable with the monomer (1). The dimer and trimer constituted by the polymerization unit (1) and the polymerization unit derived from the further monomer are usually generated when the monomer (1) and the further monomer copolymerizable with the monomer (1) are polymerized to obtain the polymer (1). The content of the dimer and trimer constituted by the polymerization unit (1) and the polymerization unit derived from the further monomer in the polymer (1) is 1.0% by mass or less, preferably 0.1% by mass or less, more preferably 0.01% by mass or less, even more preferably 0.001% by mass or less, and particularly preferably 0.0001% by mass or less, based on the polymer (1).

The content of the dimer and trimer in the polymer (I) or aqueous solution containing the polymer (I) can be specified by carrying out gel permeation chromatography (GPC) analysis of the polymer (I) and calculating the proportion (area percentage) of the total area of the dimer and trimer peaks to the total area of each peak in the chromatogram obtained by the GPC analysis.

Also, when the content of the dimer and trimer in the polymer (I) or aqueous solution containing the polymer (I) is less than 0.5% by mass based on the polymer (I), it can be specified by measurement by liquid chromatography-mass spectrometry (LC/MS).

Specifically, aqueous solutions having five or more different content levels of the polymer (I) are prepared, LC/MS analysis is performed on the aqueous solutions with the respective content levels, and the relationship between the content level and the area (peak integrated value) corresponding to that content level is plotted to prepare a calibration curve of the polymer (I). Furthermore, from the calibration curve of the polymer (I), a calibration curve of the dimer and trimer of the polymer (I) is prepared.

Methanol is added to the polymer (I) to prepare a mixture, the mixture is filtered using an ultrafiltration disc (a molecular weight cutoff of 3,000 Da), and the resulting recovered solution is subjected to LC/MS analysis.

Then, using the calibration curve, the area (peak integrated value) of the chromatogram of the dimer and trimer of the polymer (I) can be converted to the content of the dimer and trimer.

The dimer and trimer in the polymer (I) or aqueous solution containing the polymer (I) can be removed by treating the aqueous solution containing the polymer (I) by at least one means selected from the group consisting of ultrafiltration, microfiltration, dialysis membrane treatment, liquid separation, and reprecipitation.

The production method of the present disclosure is preferably one in which the polymerization of the fluorine-containing monomer is carried out substantially in the absence of a fluorine-containing surfactant not having a functional group capable of reaction by radical polymerization (hereinafter, sometimes simply referred to as "fluorine-containing surfactant").

Conventionally, fluorine-containing surfactants have been used for the polymerization of fluorine-containing monomers, but the production method of the present disclosure allows for, by using the fluorine-containing compound (A) and the polymer (I), polymerizing a fluorine-containing monomer to obtain a fluorine-containing elastomer even without using the fluorine-containing surfactants.

In the present disclosure, the expression "substantially in the absence of a fluorine-containing surfactant not having a functional group capable of reaction by radical polymerization" means that the content of the fluorine-containing surfactant based on the aqueous medium is 10 ppm by mass or less, and the content of the fluorine-containing surfactant is preferably 1 ppm by mass or less, more preferably 100 ppb by mass or less, even more preferably 10 ppb by mass or less, and particularly preferably 1 ppb by mass or less.

The fluorine-containing surfactant may be an anionic fluorine-containing surfactant.

The anionic fluorine-containing surfactant may be, for example, a surfactant containing a fluorine atom, in which

the total number of carbon atoms in the portion excluding the anionic group is 20 or less.

The fluorine-containing surfactant may also be a fluorine-containing surfactant in which the molecular weight of the anionic moiety is 1,000 or less, preferably 800 or less.

The "anionic moiety" means a portion of the fluorine-containing surfactant excluding the cation. For example, in the case of $F(CF_2)_{n1}COOM$ represented by formula (I) as will be described below, the anionic moiety is the "$F(CF_2)_{n1}COO$" moiety.

The fluorine-containing surfactant may also be a fluorine-containing surfactant having a LogPOW of 3.5 or less. The LogPOW is a partition coefficient between 1-octanol and water, and is represented by LogP wherein P represents a ratio of the fluorine-containing surfactant concentration in octanol/the fluorine-containing surfactant concentration in water attained when an octanol/water (1:1) mixture containing the fluorine-containing surfactant is phase-separated.

The LogPOW is calculated by performing HPLC on standard substances (heptanoic acid, octanoic acid, nonanoic acid, and decanoic acid) having a known octanol/water partition coefficient under conditions having column: TOSOH ODS-120T column (φ4.6 mm × 250 mm, manufactured by Tosoh Corporation), eluent: acetonitrile/0.6% by mass $HClO_4$ solution = 1/1 (vol/vol%), flow rate: 1.0 ml/min, sample volume: 300 μL, column temperature: 40°C, detection light: UV210 nm to construct a calibration curve concerning each elution time and known octanol/water partition coefficient, and determining the HPLC elution time of a sample liquid based on the calibration curve.

Specific examples of the fluorine-containing surfactant include those described in U.S. Patent Application Publication No. 2007/0015864, U.S. Patent Application Publication No. 2007/0015865, U.S. Patent Application Publication No. 2007/0015866, U.S. Patent Application Publication No. 2007/0276103, U.S. Patent Application Publication No. 2007/0117914, U.S. Patent Application Publication No. 2007/0142541, U.S. Patent Application Publication No. 2008/0015319, U.S. Patent. No. 3250808, U.S. Patent. No. 3271341, Japanese Patent Laid-Open No. 2003-119204, International Publication No. WO 2005/042593, International Publication No. WO 2008/060461, International Publication No. WO 2007/046377, Japanese Patent Laid-Open No. 2007-119526, International Publication No. WO 2007/046482, International Publication No. WO 2007/046345, U.S. Patent Application Publication No. 2014/0228531, International Publication No. WO 2013/189824, and International Publication No. WO 2013/189826.

The anionic fluorine-containing surfactant may be a compound represented by the following general formula (N°):

$$X^{n0}\text{-}Rf^{n0}\text{-}Y^0 \qquad (N^0)$$

wherein $X^{n0}$ is H, Cl, or/and F; $Rf^{n0}$ is a linear, branched, or cyclic alkylene group having 3 to 20 carbon atoms in which some or all of H are replaced with F, the alkylene group may contain one or more ether bonds, and some H may be replaced with Cl; and Y° is an anionic group.

The anionic group Y° may be $-COOM$, $-SO_2M$, or $-SO_3M$, and may be $-COOM$ or $-SO_3M$.

M is H, a metal atom, $NR^7_4$, imidazolium optionally having a substituent, pyridinium optionally having a substituent, or phosphonium optionally having a substituent, and $R^7$ is -H or an organic group.

Examples of the metal atom include alkali metals (Group 1) and alkaline earth metals (Group 2), such as Na, K, or Li.

$R^7$ may be -H or a $C_{1-10}$ organic group, may be -H or a $C_{1-4}$ organic group, or may be -H or a $C_{1-4}$ alkyl group.

M may be H, a metal atom, or $NR^7_4$, may be H, an alkali metal (Group 1), an alkaline earth metal (Group 2), or $NR^7_4$, and may be H, Na, K, Li, or $NH_4$.

In $Rf^{n0}$, 50% or more of H may be replaced with fluorine.

Examples of the compound represented by general formula ($N^0$) include:

a compound represented by the following general formula ($N^1$):

$$X^{n0}\text{-}(CF_2)_{m1}\text{-}Y^0 \qquad (N^1)$$

wherein $X^{n0}$ is H, Cl, or F; m1 is an integer of 3 to 15; and $Y^0$ is as defined above;

a compound represented by the following general formula ($N^2$):

$$Rf^{n1}\text{-}O\text{-}(CF(CF_3)CF_2O)_{m2}CFX^{n1}\text{-}Y^0 \qquad (N^2)$$

wherein $Rf^{n1}$ is a perfluoroalkyl group having 1 to 5 carbon atoms; m2 is an integer of 0 to 3; $X^{n1}$ is F or $CF_3$; and $Y^0$ is as defined above;

a compound represented by the following general formula ($N^3$):

$$Rf^{n2}(CH_2)_{m3}\text{-}(Rf^{n3})_q\text{-}Y^0 \qquad (N^3)$$

wherein $Rf^{n2}$ is a partially or fully fluorinated alkyl group having 1 to 13 carbon atoms and optionally containing an ether bond and/or a chlorine atom; m3 is an integer of 1 to 3; $Rf^{n3}$ is a linear or branched perfluoroalkylene group having 1 to 3 carbon atoms; q is 0 or 1; and $Y^0$ is as defined above;
a compound represented by the following general formula ($N^4$):

$Rf^{n4}$-O-$(CY^{n1}Y^{n2})_pCF_2$-$Y^0$ ($N^4$)

wherein $Rf^{n4}$ is a linear or branched partially or fully fluorinated alkyl group having 1 to 12 carbon atoms and optionally containing an ether bond; $Y^{n1}$ and $Y^{n2}$ are the same or different, and are H or F; p is 0 or 1; and $Y^0$ is as defined above; and
a compound represented by the following general formula ($N^5$):

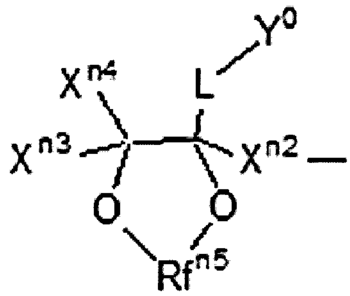

($N^5$)

wherein $X^{n2}$, $X^{n3}$, and $X^{n4}$ may be the same or different, and are H, F, or a linear or branched partially or fully fluorinated alkyl group having 1 to 6 carbon atoms and optionally containing an ether bond; $Rf^{n5}$ is a linear or branched partially or fully fluorinated alkylene group having 1 to 3 carbon atoms and optionally containing an ether bond; L is a linking group; and Y° is as defined above, provided that the total number of carbon atoms in $X^{n2}$, $X^{n3}$, $X^{n4}$, and $Rf^{n5}$ is 18 or less.

More specifically, examples of the compound represented by general formula ($N^0$) include a perfluorocarboxylic acid (I) represented by the following general formula (I), an ω-H perfluorocarboxylic acid (II) represented by the following general formula (II), a perfluoroethercarboxylic acid (III) represented by the following general formula (III), a perfluoroalkylalkylenecarboxylic acid (IV) represented by the following general formula (IV), a perfluoroalkoxyfluorocarboxylic acid (V) represented by the following general formula (V), a perfluoroalkylsulfonic acid (VI) represented by the following general formula (VI), an ω-H perfluorosulfonic acid (VII) represented by the following general formula (VII), a perfluoroalkylalkylene sulfonic acid (VIII) represented by the following general formula (VIII), an alkylalkylene carboxylic acid (IX) represented by the following general formula (IX), a fluorocarboxylic acid (X) represented by the following general formula (X), an alkoxyfluorosulfonic acid (XI) represented by the following general formula (XI), a compound (XII) represented by the following general formula (XII), and a compound (XIII) represented by the following general formula (XIII).
The perfluorocarboxylic acid (I) is represented by the following general formula (I):

$F(CF_2)_{n1}COOM$ (I)

wherein n1 is an integer of 3 to 14; M is H, a metal atom, $NR^7_4$, imidazolium optionally having a substituent, pyridinium optionally having a substituent, or phosphonium optionally having a substituent; and $R^7$ is -H or an organic group.
The ω-H perfluorocarboxylic acid (II) is represented by the following general formula (II):

$H(CF_2)_{n2}COOM$ (II)

wherein n2 is an integer of 4 to 15; and M is as defined above.
The perfluoroethercarboxylic acid (III) is represented by the following general formula (III):

$Rf^7$-O-$(CF(CF_3)CF_2O)_{n3}CF(CF_3)COOM$ (III)

wherein $Rf^1$ is a perfluoroalkyl group having 1 to 5 carbon atoms; n3 is an integer of 0 to 3; and M is as defined above.
The perfluoroalkylalkylenecarboxylic acid (IV) is represented by the following general formula (IV):

$Rf^2(CH_2)_{n4}Rf^3COOM$ (IV)

wherein $Rf^2$ is a perfluoroalkyl group having 1 to 5 carbon atoms; $Rf^3$ is a linear or branched perfluoroalkylene group having 1 to 3 carbon atoms; n4 is an integer of 1 to 3; and M is as defined above.

The alkoxyfluorocarboxylic acid (V) is represented by the following general formula (V):

$Rf^4\text{-O-}CY^1Y^2CF_2\text{-COOM}$ (V)

wherein $Rf^4$ is a linear or branched partially or fully fluorinated alkyl group having 1 to 12 carbon atoms and optionally containing an ether bond and/or a chlorine atom; $Y^1$ and $Y^2$ are the same or different, and are H or F; and M is as defined above.

The perfluoroalkylsulfonic acid (VI) is represented by the following general formula (VI):

$F(CF_2)_{n5}SO_3M$ (VI)

wherein n5 is an integer of 3 to 14; and M is as defined above.

The ω-H perfluorosulfonic acid (VII) is represented by the following general formula (VII):

$H(CF_2)_{n6}SO_3M$ (VII)

wherein n6 is an integer of 4 to 14; and M is as defined above.

The perfluoroalkylalkylenesulfonic acid (VIII) is represented by the following general formula (VIII):

$Rf^5(CH_2)_{n7}SO_3M$ (VIII)

wherein $Rf^5$ is a perfluoroalkyl group having 1 to 13 carbon atoms; n7 is an integer of 1 to 3; and M is as defined above.

The alkylalkylenecarboxylic acid (IX) is represented by the following general formula (IX):

$Rf^6(CH_2)_{n8}COOM$ (IX)

wherein $Rf^6$ is a linear or branched partially or fully fluorinated alkyl group having 1 to 13 carbon atoms and optionally containing an ether bond; n8 is an integer of 1 to 3; and M is as defined above.

The fluorocarboxylic acid (X) is represented by the following general formula (X):

$Rf^7\text{-O-}Rf^8\text{-O-}CF_2\text{-COOM}$ (X)

wherein $Rf^7$ is a linear or branched partially or fully fluorinated alkyl group having 1 to 6 carbon atoms and optionally containing an ether bond and/or a chlorine atom; $Rf^8$ is a linear or branched partially or fully fluorinated alkyl group having 1 to 6 carbon atoms; and M is as defined above.

The alkoxyfluorosulfonic acid (XI) is represented by the following general formula (XI):

$Rf^9\text{-O-}CY^1Y^2CF_2\text{-}SO_3M$ (XI)

wherein $Rf^9$ is a linear or branched partially or fully fluorinated alkyl group having 1 to 12 carbon atoms, optionally containing an ether bond, and optionally containing chlorine; $Y^1$ and $Y^2$ are the same or different, and are each H or F; and M is as defined above.

The compound (XII) is represented by the following general formula (XII):

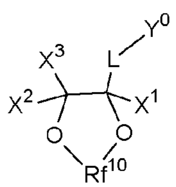

(XII)

wherein $X^1$, $X^2$, and $X^3$ are the same or different, and are each H, F, or a linear or branched partially or fully fluorinated alkyl group having 1 to 6 carbon atoms and optionally containing an ether bond; $Rf^{10}$ is a perfluoroalkylene group having 1 to 3 carbon atoms; L is a linking group; and Y° is an anionic group.

Y° may be -COOM, $-SO_2M$, or $-SO_3M$, and may be $-SO_3M$ or - COOM, wherein M is as defined above.

Examples of L include a single bond and a partially or fully fluorinated alkylene group having 1 to 10 carbon atoms and optionally containing an ether bond.

The compound (XIII) is represented by the following general formula (XIII):

$$Rf^{11}\text{-}O\text{-}(CF_2CF(CF_3)O)_{n9}(CF_2O)_{n10}CF_2COOM \qquad (XIII)$$

wherein $Rf^{11}$ is a fluoroalkyl group having 1 to 5 carbon atoms and containing chlorine, n9 is an integer of 0 to 3, n10 is an integer of 0 to 3, and M is as defined above. Examples of the compound (XIII) include $CF_2ClO(CF_2CF(CF_3)O)_{n9}(CF_2O)_{n10}CF_2COONH_4$ (a mixture having an average molecular weight of 750, wherein n9 and n10 are as defined above).

The fluorine-containing surfactant may be one fluorine-containing surfactant, or may be a mixture containing two or more fluorine-containing surfactants.

Examples of the fluorine-containing surfactant include compounds represented by the following formulas. The fluorine-containing surfactant may be a mixture of these compounds. In one embodiment of the above polymerization, a fluoromonomer is polymerized substantially in the absence of compounds represented by the following formulas:

$F(CF_2)_7COOM$,

$F(CF_2)_5COOM$,

$H(CF_2)_6COOM$,

$H(CF_2)_7COOM$,

$CF_3O(CF_2)_3OCHFCF_2COOM$,

$C_3F_7OCF(CF_3)CF_2OCF(CF_3)COOM$,

$CF_3CF_2CF_2OCF(CF_3)COOM$,

$CF_3CF_2OCF_2CF_2OCF_2COOM$,

$C_2F_5OCF(CF_3)CF_2OCF(CF_3)COOM$,

$CF_3OCF(CF_3)CF_2OCF(CF_3)COOM$,

$CF_2ClCF_2CF_2OCF(CF_3)CF_2OCF_2COOM$,

$CF_2ClCF_2CF_2OCF_2CF(CF_3)OCF_2COOM$,

$CF_2ClCF(CF_3)OCF\ (CF_3)CF_2OCF_2COOM$,

$CF_2ClCF\ (CF_3)OCF_2CF(CF_3)OCF_2COOM$,

and

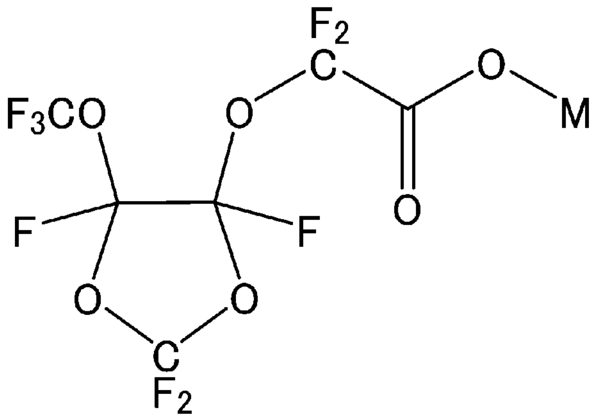

wherein M is H, a metal atom, $NR^7_4$, imidazolium optionally having a substituent, pyridinium optionally having a substituent, or phosphonium optionally having a substituent, and $R^7$ represents H or an organic group.

In the production method of the present disclosure, the polymerization may be carried out in the presence of a polymerization initiator.

In the production method of the present disclosure, the polymerization of the fluorine-containing monomer can be carried out by, for example, introducing the compound (A), the polymer (I), and an aqueous medium into a pressure-tight polymerization tank equipped with a stirrer, deoxygenating the polymerization tank, then introducing the monomer, heating the polymerization tank to a predetermined temperature, and adding the polymerization initiator to initiate the reaction. Since the pressure decreases as the reaction proceeds, an additional monomer is continuously or intermittently fed to maintain the initial pressure, the feeding is stopped when a predetermined amount of the monomer is fed, the monomer in the reaction container is purged, and the temperature is returned to room temperature to terminate the reaction.

The polymerization initiator may be a radical polymerization initiator. The polymerization initiator is not limited as long as it can generate radicals at the temperature of polymerizing the fluorine-containing monomer, and an oil-soluble polymerization initiator, a water-soluble polymerization initiator, and the like can be used while a water-soluble polymerization initiator is preferable. The polymerization initiator may be combined with a reducing agent or the like to be used as a redox initiator.

The amount of the polymerization initiator when polymerizing the fluorine-containing monomer is determined as appropriate according to the type of monomer, the molecular weight of the target fluorine-containing elastomer, and the reaction rate. The amount of the polymerization initiator is determined as appropriate according to the molecular weight of the target fluorine-containing elastomer and the polymerization reaction rate, and is preferably 0.00001 to 10% by mass and more preferably 0.0001 to 1% by mass based on 100% by mass of the total amount of the monomer.

The polymerization initiator may be an oil-soluble radical polymerization initiator, a water-soluble radical polymerization initiator, or an azo compound.

The oil-soluble radical polymerization initiator may be a known oil-soluble peroxide, and representative examples include dialkyl peroxycarbonates such as diisopropyl peroxydicarbonate and di-sec-butyl peroxydicarbonate; peroxy esters such as t-butyl peroxyisobutyrate and t-butyl peroxypivalate; and dialkyl peroxides such as di-t-butyl peroxide, as well as di[perfluoro (or fluorochloro) acyl] peroxides such as di(ω-hydro-dodecafluoroheptanoyl)peroxide, di(ω-hydro-tetradecafluorooctanoyl)peroxide, di(ω-hydro-hexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluorooctanoyl)peroxide, di(perfluorononanoyl)peroxide, di(ω-chloro-hexafluorobutyryl)peroxide, di(ω-chloro-decafluorohexanoyl)peroxide, di(ω-chloro-tetradecafluorooctanoyl)peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotoriacontafluorodocosanoyl)peroxide.

Examples of the azo compound include azodicarboxylate, azodicarboxyl diamide, 2,2'-azobisisobutyronitrile, 2,2'-azobis(2,4-dimethylvaleronitrile), 2,2'-azobis(2-methylpropionamidine) dihydrochloride, and 4,4'-azobis(4-cyanovaleric acid).

The water-soluble radical polymerization initiator may be a known water-soluble peroxide, and examples include ammonium salts, potassium salts, and sodium salts of persulfuric acid, perboric acid, perchloric acid, perphosphoric acid, percarbonic acid, and the like, organic peroxides such as disuccinic acid peroxide and diglutaric acid peroxide, t-butyl permaleate, and t-butyl hydroperoxide. A reducing agent such as sulfite may be contained together, and the amount

thereof may be 0.1 to 20 times the amount of the peroxide.

The water-soluble peroxide is preferably a salt of persulfuric acid because the amount of radicals to be generated can be easily regulated, and potassium persulfate ($K_2S_2O_8$), ammonium persulfate ($(NH_4)_2S_2O_8$), and sodium persulfate ($Na_2S_2O_8$) are preferable, and ammonium persulfate is most preferable.

When carrying out the polymerization using a water-soluble peroxide at a polymerization temperature of 45°C or higher, the polymerization is preferably carried out without using a reducing agent.

For example, when carrying out the polymerization at a low temperature of 60°C or lower, the polymerization initiator to be used is preferably a redox initiator obtained by combining an oxidizing agent and a reducing agent. That is to say, the polymerization is preferably carried out in the presence of a redox initiator.

Examples of the oxidizing agent include persulfates, organic peroxides, potassium permanganate, manganese triacetate, ammonium cerium nitrate, and bromates. Examples of the reducing agent include sulfites, bisulfites, bromates, diimine, oxalic acid, and sulfinic acid metal salts. Examples of persulfates include ammonium persulfate, potassium persulfate, and sodium persulfate. Examples of sulfites include sodium sulfite and ammonium sulfite. To increase the decomposition rate of the initiator, preferably a copper salt or an iron salt is also added to the combination of the redox initiator. The copper salt may be copper(II) sulfate, and the iron salt may be iron(II) sulfate. When a copper salt or an iron salt is used, a chelating agent is added particularly preferably. The chelating agent is preferably disodium ethylenediaminetetraacetate dihydrate.

Examples of the redox initiator include potassium permanganate/oxalic acid, ammonium persulfate/a bisulfurous acid salt/iron(II) sulfate, ammonium persulfate/a sulfurous acid salt/iron (II) sulfate, ammonium persulfate/a sulfurous acid salt, ammonium persulfate/iron(II) sulfate, manganese triacetate/oxalic acid, cerium ammonium nitrate/oxalic acid, a bromic acid salt/a sulfurous acid salt, a bromic acid salt/a bisulfurous acid salt, and ammonium persulfate/sodium hydroxymethanesulfinate dihydrate, and ammonium persulfate/sodium hydroxymethanesulfinate dihydrate is preferable.

When using a redox initiator, one of an oxidizing agent and a reducing agent may be introduced into a polymerization tank in advance, and then the other may be added continuously or intermittently to initiate the polymerization. For example, when using ammonium persulfate/sodium hydroxymethanesulfinate dihydrate, preferably ammonium persulfate is introduced into a polymerization tank, and then sodium hydroxymethanesulfinate dihydrate is continuously added thereto.

The amount of persulfate used in the redox initiator is preferably 0.001 to 2.0% by mass, more preferably 0.01 to 1.5% by mass, and particularly preferably 0.05 to 1.0% by mass based on the aqueous medium used in the polymerization.

The amount of the reducing agent used is preferably 0.01 to 30% by mass, more preferably 0.05 to 10% by mass, and particularly preferably 0.1 to 5% by mass based on the aqueous medium used in the polymerization.

The amount of the third component (such as the above copper salt or iron salt) used is preferably 0.001 to 0.5% by mass, more preferably 0.005 to 0.4% by mass, and particularly preferably 0.01 to 0.3% by mass based on the aqueous medium used in the polymerization.

In the production method of the present disclosure, the fluorine-containing monomer may be polymerized also in the presence of a chain transfer agent. The chain transfer agent may be a known chain transfer agent, and, for example, hydrocarbon, ester, ether, alcohol, ketone, a halogen-containing compound, carbonate, and the like are usable. In particular, isopentane, diethyl malonate, and ethyl acetate are preferable from the viewpoint that the reaction rate is unlikely impaired, and diiodine compounds such as $I(CF_2)_4I$, $I(CF_2)_6I$, and $ICH_2I$ are preferable from the viewpoint that the polymer terminal can be iodinated, and such a compound can be used as a reactive polymer.

The chain transfer agent used is particularly preferably a bromine compound or an iodine compound. The polymerization method involving a bromine compound or an iodine compound is, for example, iodine transfer polymerization or bromine transfer polymerization.

The iodine compound and the bromine compound are water-insoluble and are unlikely emulsified. Accordingly, their use is conventionally limited in emulsion polymerization, and there is a tendency that a large amount of a surfactant has to be used. According to the production method of the present disclosure, the fluorine-containing elastomer can be obtained by polymerization involving an iodine compound or a bromine compound, such as iodine transfer polymerization or bromine transfer polymerization, even in the absence of a conventionally used surfactant.

Iodine transfer polymerization refers to a method involving living radical polymerization by a radical chain reactivation mechanism, which is radically active due to a low carbon-iodine bond dissociation energy and occurs due to the involvement of a chain transfer reaction during the course of a radical polymerization reaction. Known reaction conditions can be suitably used, and, for example, the reaction conditions described in, but are not limited to, "KOBUNSHI RONBUNSHU (Japanese Journal of Polymer Science and Technology), Vol. 49, No. 10, pp. 765-783, October 1992", Japanese Patent Laid-Open No. 53-3495, and the like can be suitably adopted. Similar polymerization can be carried out by using a bromine compound in place of an iodine compound, and such polymerization is referred to as bromine transfer polymerization herein.

Among these, iodine transfer polymerization is preferable in terms of polymerization reactivity, crosslinking

reactivity, and the like.

Representative examples of the bromine compound and the iodine compound include a compound represented by the general formula:

$$R^8I_xBr_y$$

wherein x and y are each an integer of 0 to 2 and satisfy $1 \leq x + y \leq 2$, and $R^8$ is a saturated or unsaturated fluorohydrocarbon group or chlorofluorohydrocarbon group having 1 to 16 carbon atoms, or a hydrocarbon group having 1 to 3 carbon atoms, and may contain an oxygen atom. Iodine or bromine is introduced into a polymer by using a bromine compound or an iodine compound, and functions as a crosslinking point.

Examples of the bromine compound and the iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, $CF_2Br_2$, $BrCF_2CF_2Br$, $CF_3CFBrCF_2Br$, $CFClBr_2$, $BrCF_2CFClBr$, CFBrClCFClBr, $BrCF_2CF_2CF_2Br$, $BrCF_2CFBrOCF_3$, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1,2-bromo-4-iodoperfluorobutene-1, and a monoiodomonobromo-substituted product, a diiodomonobromo-substituted product, and a (2-iodoethyl) and (2-bromoethyl)-substituted product of benzene, and one of these compounds may be used singly, or these compounds can also be mutually combined and used. Among these, in terms of polymerization reactivity, crosslinking reactivity, availability, and the like, compounds that do not contain bromine and solely contain iodine are preferable, and 1,4-diiodoperfluorobutane, 1,6-diiodoperfluorohexane, or 2-iodoperfluoropropane is preferably used.

The amount of the chain transfer agent is preferably $0.2 \times 10^{-3}$ to 2 mol% and preferably $1.0 \times 10^{-3}$ to 1 mol% based on the total amount of the monomer used in the polymerization.

The aqueous medium means a liquid containing water. The aqueous medium is not limited as long as it contains water, and may be a medium that contains water and, for example, a fluorine-free organic solvent such as alcohol, ether, or ketone and/or a fluorine-containing organic solvent having a boiling point of 40°C or lower.

In the polymerization of the fluorine-containing monomer, a phosphoric acid salt, sodium hydroxide, potassium hydroxide, ammonia water, or the like may be used as a pH adjuster.

The aqueous medium is preferably acidic. By polymerizing the fluorine-containing monomer in the presence of the compound (A) and the polymer (I) using an acidic aqueous medium, adhesion of the fluorine-containing polymer to a polymerization tank can be further suppressed. The pH of the aqueous medium is preferably 7 or lower and more preferably 6 or lower, and is preferably 3 or higher.

In the production method of the present disclosure, the fluorine-containing monomer may be polymerized in the presence or absence of fluorine-containing monomer polymerization seed particles.

The "fluorine-containing monomer polymerization seed particles" are obtained by polymerizing the fluorine-containing monomer in an aqueous medium, and are caused to be present at the time of the second polymerization in which the type and the proportion of existing components such as monomers and additives (e.g., a polymerization initiator) constituting the polymerization reaction system, the reaction conditions, and the like are different. The fluorine-containing monomer polymerization seed particles act as so-called seed particles at the time of polymerizing the fluorine-containing monomer, and constitute the polymerization of the fluorine-containing monomer in the presence of the seed particles, i.e., seed polymerization. The production method of the present disclosure may be a method in which such seed polymerization is not carried out when polymerizing the fluorine-containing monomer.

In the production method of the present disclosure, the polymerization temperature for polymerizing the fluorine-containing monomer is preferably 10 to 120°C, and more preferably 20 to 100°C. From the viewpoint of the stability of the aqueous dispersion and reducing the adhesion rate, the polymerization temperature is preferably 15 to 60°C, more preferably 18 to 55°C, and even more preferably 20 to 50°C. The polymerization temperature is preferably 60 to 120°C, more preferably 60 to 100°C, and even more preferably 70 to 90°C because the polymerization rate is increased and, moreover, a fluorine-containing elastomer that provides a formed article having excellent physical properties can be obtained.

In the production method of the present disclosure, the polymerization pressure for polymerizing the fluorine-containing monomer is preferably 0.5 to 10 MPaG, and more preferably 1 to 7 MPaG.

In the production method of the present disclosure, the fluorine-containing monomer is polymerized in the presence of the compound (A), the polymer (I), and the aqueous medium, and thus adhesion of the polymer (the fluorine-containing elastomer) to a polymerization tank can be suppressed. The adhesion rate of the polymer to a polymerization tank is preferably 8% by mass or less, more preferably 4% by mass or less, even more preferably 3% by mass or less, and most preferably 2% by mass or less.

The polymer adhesion rate is a ratio (an adhesion rate to a polymerization tank) of the mass of polymer deposits adhering to the polymerization tank after the completion of polymerization to the total amount of the polymer (the fluorine-containing elastomer) after the completion of polymerization. Polymer deposits include the polymer adhering to the inside of a polymerization tank such as the inner wall of a polymerization tank and a stirring blade after an aqueous dispersion is removed from the polymerization tank after the completion of polymerization, and the polymer that is freed from the aqueous dispersion due to aggregation and floats or precipitates without being dispersed in the aqueous dispersion. The mass of polymer deposits is the mass after water contained in the polymer deposits is dried and removed at 120°C.

Polymer adhesion rate (% by mass) = Mass of polymer deposits / Mass of resulting polymer (including deposits) × 100

Mass of resulting polymer = Mass of aqueous dispersion × Solid concentration (% by mass) of aqueous dispersion / 100 + Mass of polymer deposits

In the production method of the present disclosure, a fluorine-containing monomer is polymerized, thereby obtaining an aqueous dispersion of a fluorine-containing elastomer. The fluorine-containing monomer is preferably a fluorine-containing monomer (excluding the compound (A)), and more preferably does not contain a hydrophilic group.
Examples of the fluorine-containing monomer include fluorine-containing monomers such as vinylidene fluoride (VdF), tetrafluoroethylene (TFE), hexafluoropropylene (HFP), perfluoro(alkyl vinyl ether) (PAVE), chlorotrifluoroethylene (CTFE), trifluoroethylene, trifluoropropylene, tetrafluoropropylene, pentafluoropropylene, trifluorobutene, tetrafluoroisobutene, hexafluoroisobutene, vinyl fluoride, iodine-containing vinyl fluoride ether, and a fluorine-containing monomer (2) represented by general formula (2):

$CHX^1=CX^2Rf$ (2)

wherein one of $X^1$ and $X^2$ is H, the other is F, and Rf is a linear or branched fluoroalkyl group having 1 to 12 carbon atoms.
PAVE is more preferably perfluoro(methyl vinyl ether) (PMVE), perfluoro(ethyl vinyl ether) (PEVE), or perfluoro(propyl vinyl ether) (PPVE), and particularly preferably PMVE.
PAVE may be perfluorovinyl ether represented by the formula: $CF_2=CFOCF_2ORf^c$ wherein $Rf^c$ is a linear or branched perfluoroalkyl group having 1 to 6 carbon atoms, a cyclic perfluoroalkyl group having 5 to 6 carbon atoms, or a linear or branched perfluorooxyalkyl group having 1 to 3 oxygen atoms and 2 to 6 carbon atoms. PAVE is preferably, for example, $CF_2=CFOCF_2OCF_3$, $CF_2=CFOCF_2OCF_2CF_3$, or $CF_2=CFOCF_2OCF_2CF_2OCF_3$.
The fluorine-containing monomer (2) is preferably a monomer in which Rf is a linear fluoroalkyl group, and is more preferably a monomer in which Rf is a linear perfluoroalkyl group. Rf preferably has 1 to 6 carbon atoms.
Examples of the fluorine-containing monomer (2) include $CH_2=CFCF_3$, $CH_2=CFCF_2CF_3$, $CH_2=CFCF_2CF_2CF_3$, $CH_2=CFCF_2CF_2CF_2CF_3$, $CHF=CHCF_3$ (1,3,3,3-tetrafluoropropene), $CHF=CHCF_3$ (E form), and $CHF=CHCF_3$ (Z form), and, in particular, 2,3,3,3-tetrafluoropropylene represented by $CH_2=CFCF_3$ is preferable.
In the production method of the present disclosure, since adhesion of the fluorine-containing elastomer to a polymerization tank can be further suppressed, at least vinylidene fluoride or tetrafluoroethylene is preferably polymerized as the fluorine-containing monomer, and vinylidene fluoride is more preferably polymerized.
In the production method of the present disclosure, a fluorine-free monomer may be polymerized together with the fluorine-containing monomer. Examples of the fluorine-free monomer include $\alpha$-olefin monomers having 2 to 10 carbon atoms, such as ethylene, propylene, butene, and pentene, and alkyl vinyl ethers having an alkyl group having 1 to 20 carbon atoms, such as methyl vinyl ether, ethyl vinyl ether, propyl vinyl ether, cyclohexyl vinyl ether, hydroxybutyl vinyl ether, and butyl vinyl ether, and one or a combination of two or more of these monomers and compounds can be used.
The production method of the present disclosure is capable of producing an aqueous dispersion containing a fluorine-containing elastomer (excluding the polymer (I)). The fluorine-containing elastomer obtained by the production method of the present disclosure contains methylene group ($-CH_2-$) in the main chain. The fluorine-containing elastomer containing $-CH_2-$ in the main chain is not limited as long as it contains a chemical structure represented by $-CH_2-$, and examples include fluorine-containing elastomers containing a structure such as $-CH_2-CF_2-$, $-CH_2-CH(CH_3)-$, $-CH_2-CH_2-$, or $-CH_2-CF_2-(CF_3)-$. These can be introduced into the main chain of a fluorine-containing elastomer by polymerizing, for example, vinylidene fluoride, propylene, ethylene, and 2,3,3,3-tetrafluoropropylene. The content of the tetrafluoroethylene unit in the fluorine-containing elastomer (the content of a monomer unit derived from tetrafluoroethylene based on all monomer units of the fluorine-containing elastomer) may be less than 40 mol%.

Since an even greater number of fluorine-containing elastomer particles can be generated while further suppressing adhesion of the fluorine-containing elastomer to a polymerization tank, the fluorine-containing elastomer is preferably a partially fluorinated elastomer. The partially fluorinated elastomer is a fluoropolymer that contains a fluorine-containing monomer unit, in which the content of a perfluoromonomer unit is less than 90 mol% based on all monomer units, and that has a glass transition temperature of 20°C or lower and a melting peak (ΔH) size of 4.5 J/g or less.

The fluorine-containing elastomer preferably contains a monomer unit derived from at least one monomer selected from the group consisting of, for example, tetrafluoroethylene (TFE), vinylidene fluoride (VdF), and a perfluoroethylenically unsaturated compound (such as hexafluoropropylene (HFP) or perfluoro(alkyl vinyl ether) (PAVE)) represented by the general formula: $CF_2$=CF-$Rf^a$, wherein $Rf^a$ is -$CF_3$ or -O$Rf^b$ ($Rf^b$ is a perfluoroalkyl group having 1 to 5 carbon atoms). The fluorine-containing elastomer is, in particular, preferably contains VdF unit or TFE unit, and more preferably contains VDF unit.

More specifically, examples of the fluorine-containing elastomer include a VdF-based fluorine-containing elastomer, a TFE/propylene (Pr)-based fluorine-containing elastomer, a TFE/Pr/VdF-based fluorine-containing elastomer, an ethylene (Et)/HFP-based fluorine-containing elastomer, an Et/HFP/VdF-based fluorine-containing elastomer, an Et/HFP/TFE-based fluorine-containing elastomer, and an Et/TFE/PAVE-based fluorine-containing elastomer. Among these, a VdF-based fluorine-containing elastomer, a TFE/Pr-based fluorine-containing elastomer, a TFE/Pr/VdF-based fluorine-containing elastomer, and an Et/TFE/PAVE-based fluorine-containing elastomer are more suitable in terms of good heat aging resistance and oil resistance.

The VdF-based fluorine-containing elastomer is a fluorine-containing elastomer having VdF unit. The content of VdF unit in the fluorine-containing elastomer is preferably 20 mol% or more, more preferably 40 mol% or more, even more preferably 50 mol% or more, and particularly preferably 60 mol% or more, based on all monomer units. The VdF-based fluorine-containing elastomer preferably has VdF unit that accounts for 20 mol% or more and 90 mol% or less, more preferably 40 mol% or more and 85 mol% or less, even more preferably 45 mol% or more and 80 mol% or less, and particularly preferably 50 mol% or more and 80 mol% or less of the total number of moles of the VdF unit and monomer units derived from further monomers.

The further monomers in the VdF-based fluorine-containing elastomer are not limited as long as they are monomers copolymerizable with VdF, and, for example, the above-mentioned fluorine-containing monomers can be used.

The VdF-based fluorine-containing elastomer is preferably at least one copolymer selected from the group consisting of a VdF/HFP copolymer, a VdF/TFE/HFP copolymer, a VdF/CTFE copolymer, a VdF/CTFE/TFE copolymer, a VdF/PAVE copolymer, a VdF/TFE/PAVE copolymer, a VdF/HFP/PAVE copolymer, a VdF/HFP/TFE/PAVE copolymer, a VdF/TFE/Pr copolymer, a VdF/Et/HFP copolymer, and a copolymer of VdF/fluorine-containing monomer (2). The further monomers other than VdF more preferably have at least one monomer selected from the group consisting of TFE, HFP, and PAVE.

Among these VdF-based fluorine-containing elastomers, at least one copolymer selected from the group consisting of a VdF/HFP copolymer, a VdF/TFE/HFP copolymer, a copolymer of VdF/fluorine-containing monomer (2), a VdF/PAVE copolymer, a VdF/TFE/PAVE copolymer, a VdF/HFP/PAVE copolymer, and a VdF/HFP/TFE/PAVE copolymer is preferable, and at least one copolymer selected from the group consisting of a VdF/HFP copolymer, a VdF/HFP/TFE copolymer, a copolymer of VdF/fluorine-containing monomer (2), and a VdF/PAVE copolymer is more preferable.

The VdF/PAVE copolymer preferably has a VdF/PAVE composition of (65 to 90) / (35 to 10) (mol%).

In one preferable form, the VdF/PAVE composition is (50 to 78)/(50 to 22) (mol%).

The VdF/TFE/PAVE copolymer preferably has a VdF/TFE/PAVE composition of (40 to 80)/(3 to 40)/(15 to 35) (mol%).

The VdF/HFP/PAVE copolymer preferably has a VdF/HFP/PAVE composition of (65 to 90)/(3 to 25)/(3 to 25) (mol%).

The VdF/HFP/TFE/PAVE copolymer preferably has a VdF/HFP/TFE/PAVE composition of (40 to 90)/(0 to 25)/(0 to 40)/(3 to 35) (mol%), and more preferably (40 to 80)/(3 to 25)/(3 to 40)/(3 to 25) (mol%).

As for the copolymer of VdF/fluorine-containing monomer (2), preferably the VdF/fluorine-containing monomer (2) unit is (85 to 20)/(15 to 80) (mol%) and further monomer units other than VdF and the fluorine-containing monomer (2) is 0 to 50 mol% based on all monomer units, and the mol% ratio of the VdF/fluorine-containing monomer (2) unit is more preferably (80 to 20)/ (20 to 80). It is also one of the preferable forms that the composition of the VdF/fluorine-containing monomer (2) unit is (78 to 50)/(22 to 50) (mol%).

The copolymer of VdF/fluorine-containing monomer (2) in which the VdF/fluorine-containing monomer (2) unit is (85 to 50)/(15 to 50) (mol%), and further monomer units other than VdF and the fluorine-containing monomer (2) is 1 to 50 mol% based on all monomer units, is also preferable. The further monomers other than VdF and the fluorine-containing monomer (2) are preferably monomers exemplified as the further monomers with respect to the VdF-based

fluorine-containing elastomer, such as TFE, HFP, PMVE, perfluoroethyl vinyl ether (PEVE), PPVE, CTFE, trifluoroethylene, hexafluoroisobutene, vinyl fluoride, Et, Pr, alkyl vinyl ether, and a monomer that provides a crosslinkable group, and, in particular, PMVE, CTFE, HFP, and TFE are more preferable.

The TFE/Pr-based fluorine-containing elastomer refers to a fluorine-containing copolymer composed of 45 to 70 mol% of TFE and 55 to 30 mol% of Pr. In addition to these two components, a specific third component may be contained.

The specific third component contained may be, for example, a fluorine-containing monomer such as fluorine-containing olefin other than TFE (such as VdF, HFP, CTFE, or perfluoro(butylethylene)), fluorine-containing vinyl ether (perfluoro(propyl vinyl ether), or perfluoro(methyl vinyl ether)); or a hydrocarbon-based monomer such as $\alpha$-olefin (such as ethylene or 1-butene), vinyl ether (such as ethyl vinyl ether, butyl vinyl ether, or hydroxybutyl vinyl ether), or vinyl ester (such as vinyl acetate, vinyl benzoate, vinyl crotonate, or vinyl methacrylate). As for the specific third component, one or a combination of two or more may be used.

The TFE/Pr-based fluorine-containing elastomer preferably contains VdF, and as for the TFE/Pr-based fluorine-containing elastomer, an elastomer composed of TFE, Pr, and VdF is referred to as a TFE/Pr/VdF-based fluorine-containing elastomer.

The TFE/Pr/VdF-based fluorine-containing elastomer may further contain the above specific third component other than VdF. As for the specific third component, one or a combination of two or more may be used. The total content of the third component in the TFE/Pr-based fluorine-containing elastomer is preferably 35 mol% or less, more preferably 33 mol% or less, and even more preferably 31 mol% or less.

The Et/HFP copolymer preferably has an Et/HFP composition of (35 to 80)/(65 to 20) (mol%), and more preferably (40 to 75)/(60 to 25) (mol%).

The Et/HFP/TFE copolymer preferably has an Et/HFP/TFE composition of (35 to 75)/(25 to 50)/(0 to 15) (mol%), and more preferably (45 to 75)/(25 to 45) / (0 to 10) (mol%).

The Et/TFE/PAVE copolymer preferably has an Et/TFE/PAVE composition of (10 to 40)/(32 to 60)/(20 to 40) (mol%), and more preferably (20 to 40)/(40 to 50)/(20 to 30) (mol%). PAVE is preferably PMVE.

The fluorine-containing elastomer is preferably a fluorine-containing elastomer containing VdF unit and more preferably a VdF/HFP copolymer or a VdF/HFP/TFE copolymer, and a fluorine-containing elastomer having a VdF/HFP/TFE composition of (32 to 85)/(10 to 34)/(0 to 40) (mol%) is particularly preferable. The VdF/HFP/TFE composition is more preferably (32 to 85)/(15 to 34)/(0 to 34) (mol%), and even more preferably (47 to 81)/(17 to 32) / (0 to 26) (mol%).

For example, the VdF/HFP copolymer preferably has a VdF/HFP composition of (45 to 85)/(15 to 55) (mol%), more preferably (50 to 83)/(17 to 50) (mol%), even more preferably (55 to 81)/(19 to 45) (mol%), and particularly preferably (60 to 80) / (20 to 40) (mol%).

The above-mentioned configuration is the configuration of the main monomers of the fluorine-containing elastomer, and a monomer that provides a crosslinkable group may be copolymerized in addition to the main monomers. The monomer that provides a crosslinkable group is a monomer capable of introducing into the fluorine-containing elastomer a crosslinkable group suitable according to the production method and the crosslinking system, and examples include known polymerizable compounds containing a crosslinkable group such as an iodine atom, a bromine atom, a carbon-carbon double bond, a cyano group, a carboxyl group, a hydroxyl group, an amino group, or an ester group.

Preferable examples of the monomer that provides a crosslinkable group include a compound represented by general formula (3):

$$CY^1_2{=}CY^2R_f^2X^1 \qquad (3)$$

wherein $Y^1$ and $Y^2$ are a fluorine atom, a hydrogen atom, or - $CH_3$; $R_f^2$ is a linear or branched fluorine-containing alkylene group that may have one or more ether-bonding oxygen atoms, that may have an aromatic ring, and in which some or all hydrogen atoms are replaced with fluorine atoms; and $X^1$ is an iodine atom or a bromine atom.

Specific examples of the monomer that provides a crosslinkable group include an iodine or bromine-containing monomer represented by general formula (4):

$$CY^1_2{=}CY^2R_f^3CHR^1\text{-}X^1 \qquad (4)$$

(wherein, $Y^1$, $Y^2$, and $X^1$ are as described above; $R_f^3$ is a linear or branched fluorine-containing alkylene group that may have one or more ether-bonding oxygen atoms and in which some or all hydrogen atoms are replaced with fluorine atoms, or that is to say, a linear or branched fluorine-containing alkylene group in which some or all hydrogen atoms are replaced with fluorine atoms, a linear or branched fluorine-containing oxyalkylene group in which some or all hydrogen atoms are replaced with fluorine atoms, or a linear or branched fluorine-containing polyoxyalkylene group in which some or all hydrogen atoms are replaced with fluorine atoms; and $R^1$ is a hydrogen atom or a methyl group), and

iodine or bromine-containing monomers represented by general formulas (5) to (22):

$CY^4_2=CY^4 (CF_2)_n-X^1$ (5)

(wherein $Y^4$ is the same or different and is a hydrogen atom or a fluorine atom, and n is an integer of 1 to 8),

$CF_2=CFCF_2R_f^4-X^1$ (6)

(wherein $R^4$ is $-(OCF_2)_n-$ or $-(OCF(CF_3))_n-$, and n is an integer of 0 to 5),

$CF_2=CFCF_2(OCF(CF_3)CF_2)_m(OCH_2CF_2CF_2)_nOCH_2CF_2-X^1$ (7)

(wherein m is an integer of 0 to 5, and n is an integer of 0 to 5),

$CF_2=CFCF_2(OCH_2CF_2CF_2)_m(OCF(CF_3)CF_2)_nOCF(CF_3)-X^1$ (8)

(wherein m is an integer of 0 to 5, and n is an integer of 0 to 5),

$CF_2=CF(OCF_2CF(CF_3))_mO(CF_2)_n-X^1$ (9)

(wherein m is an integer of 0 to 5, and n is an integer of 1 to 8),

$CF_2=CF(OCF_2CF(CF_3))_m-X^1$ (10)

(wherein m is an integer of 1 to 5),

$CF_2=CFOCF_2(CF(CF_3)OCF_2)_nCF(-X^1)CF_3$ (11)

(wherein n is an integer of 1 to 4),

$CF_2=CFO(CF_2)_nOCF(CF_3)-X^1$ (12)

(wherein n is an integer of 2 to 5),

$CF_2=CFO (CF_2)_n- (C_6H_4) -X^1$ (13)

(wherein n is an integer of 1 to 6),

$CF_2=CF (OCF_2CF (CF_3) )_nOCF_2CF (CF_3) -X^1$ (14)

(wherein n is an integer of 1 to 2),

$CH_2=CFCF_2O (CF (CF_3) CF_2O)_nCF (CF_3) -X^1$ (15)

(wherein n is an integer of 0 to 5),

$CF_2=CFO (CF_2CF (CF_3) O)_m (CF_2)_n-X^1$ (16)

(wherein m is an integer of 0 to 5, and n is an integer of 1 to 3),

$CH_2=CFCF_2OCF(CF_3)OCF(CF_3)-X^1$ (17),

$CH_2=CFCF_2OCH_2CF_2-X^1$ (18),

$CF_2=CFO(CF_2CF(CF_3)O)_mCF_2CF(CF_3)-X^1$ (19)

(wherein m is an integer of 0 or more),

$CF_2=CFOCF(CF_3)\ CF_2O\ (CF_2)\ _n\text{-}X^1$ (20)

(wherein n is an integer of 1 or more),

$CF_2=CFOCF_2OCF_2CF(CF_3)OCF_2\text{-}X^1$ (21),

and

$CH_2=CH\text{-}(CF_2)_nX^1$ (22)

(wherein n is an integer of 2 to 8),
(in general formulas (5) to (22), $X^1$ is as described above), and
one of these can be used singly, or these can be used in any combination.

The iodine or bromine-containing monomer represented by general formula (4) is preferably an iodine-containing fluorinated vinyl ether represented by general formula (23):

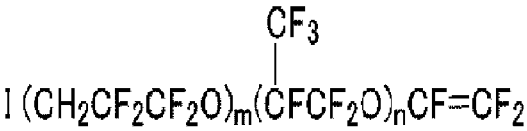

(23)

wherein m is an integer of 1 to 5, and n is an integer of 0 to 3,
more specifically

$I\ CH_2CF_2CF_2OCF=CF_2$, $I\ (CH_2CF_2CF_2O)\ _2CF\text{-}CF_2$,

$I\ (CH_2CF_2CF_2O)\ _3CF=CF_2$,

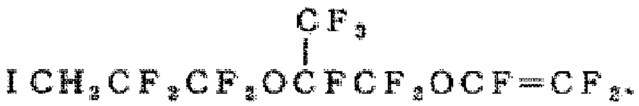

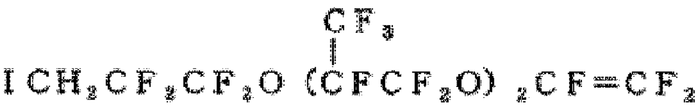

and among these, $ICH_2CF_2CF_2OCF=CF_2$ is preferable.
More specifically, the iodine or bromine-containing monomer represented by general formula (5) is preferably $ICF_2CF_2CF=CH_2$ or $I\ (CF_2CF_2)\ _2CF=CH_2$.
More specifically, the iodine or bromine-containing monomer represented by general formula (9) is preferably $I\ (CF_2CF_2)\ _2OCF=CF_2$.
More specifically, the iodine or bromine-containing monomer represented by general formula (22) is preferably $CH_2=CHCF_2CF_2I$ or $I\ (CF_2CF_2)\ _2CH=CH_2$.
Also, the monomer that provides a crosslinkable group is preferably a bisolefin compound represented by the formula:

$R^2R^3C=CR^4\text{-}Z\text{-}CR^5=CR^6R^7$

wherein $R^2$, $R^3$, $R^4$, $R^5$, $R^6$, and $R^7$ are the same or different, and are each H or an alkyl group having 1 to 5 carbon atoms; and Z is a linear or branched alkylene or cycloalkylene group having 1 to 18 carbon atoms that may contain an oxygen atom and that is preferably at least partially fluorinated, or a (per)fluoropolyoxyalkylene group. Herein, the "(per)fluoropolyoxyalkylene group" means "a fluoropolyoxyalkylene group or a perfluoropolyoxyalkylene group".
Z is preferably a (per)fluoroalkylene group having 4 to 12 carbon atoms, and $R^2$, $R^3$, $R^4$, $R^5$, $R^6$, and $R^7$ are

preferably hydrogen atoms.

Z when being a (per)fluoropolyoxyalkylene group is preferably a (per)fluoropolyoxyalkylene group represented by the formula:

$$-(Q)_p-CF_2O-(CF_2CF_2O)_m-(CF_2O)_n-CF_2-(Q)_p-$$

wherein Q is an alkylene group having 1 to 10 carbon atoms or an oxyalkylene group having 2 to 10 carbon atoms, p is 0 or 1, and m and n are integers such that the m/n ratio is 0.2 to 5 and that the molecular weight of the (per)fluoropolyoxyalkylene group is in the range of 500 to 10,000 and preferably 1,000 to 4,000. In this formula, Q is preferably selected from $-CH_2OCH_2-$ and $-CH_2O(CH_2CH_2O)_sCH_2-$ (s = 1 to 3).

Examples of preferable bisolefins include

$CH_2=CH-(CF_2)_2-CH=CH_2$,

$CH_2=CH-(CF_2)_4-CH=CH_2$,

$CH_2=CH-(CF_2)_6-CH=CH_2$,

formula: $CH_2=CH-Z^1-CH=CH_2$

(wherein $Z^1$ is $-CH_2OCH_2-CF_2O-(CF_2CF_2O)_m-(CF_2O)_n-CF_2-CH_2OCH_2-$ (m/n is 0.5), and the molecular weight is preferably 2,000),
and the like.

In particular, 3,3,4,4,5,5,6,6,7,7,8,8-dodecafluoro-1,9-decadiene represented by $CH_2=CH-(CF_2)_6-CH=CH_2$ is preferable.

The number average molecular weight Mn of the fluorine-containing elastomer is preferably 1,000 to 1,000,000, more preferably 10,000 to 500,000, and particularly preferably 20,000 to 300,000.

The fluorine content of the fluorine-containing elastomer is preferably 50% by mass or more, more preferably 55% by mass or more, and even more preferably 60% by mass or more. The upper limit of the fluorine content is preferably 75% by mass or less, and more preferably 73% by mass or less. The fluorine content is calculated based on a measured value obtained by $^{19}F$-NMR, $^1H$-NMR, elemental analysis, or the like.

The fluorine-containing elastomer preferably has a Mooney viscosity at 100°C (ML1 + 10 (100°C)) of 130 or less. The Mooney viscosity is more preferably 110 or less, and even more preferably 90 or less. The Mooney viscosity is more preferably 10 or more, and even more preferably 20 or more. Here, the Mooney viscosity is a value measured in accordance with JIS K 6300-1.2013.

The fluorine-containing elastomer preferably has a glass transition temperature of -50 to 0°C. The glass transition temperature is more preferably -2°C or lower, and even more preferably -3°C or lower. The glass transition temperature is more preferably -45°C or higher, and even more preferably -40°C or higher. The glass transition temperature may be -10°C or higher, and may be -9°C or higher. Here, the glass transition temperature can be determined by heating 10 mg of a sample at 20°C/min to give a DSC curve using a differential scanning calorimeter (e.g., X-DSC 7000 manufactured by Hitachi High-Tech Science Corporation) and calculating a glass transition temperature from a DSC differential curve in accordance with JIS K 6240:2011.

The fluorine-containing elastomer preferably has an iodine content of 0.05 to 1.0% by mass. The iodine content is more preferably 0.08% by mass or more, and even more preferably 0.10% by mass or more, and is more preferably 0.80% by mass or less, and even more preferably 0.60% by mass or less.

The iodine content can be determined by elemental analysis. Specifically, the iodine content can be measured by mixing 5 mg of $Na_2SO_3$ with 12 mg of the fluorine-containing elastomer, combusting the mixture in oxygen in a quartz flask using an absorbent obtained by dissolving 30 mg of a 1:1 (mass ratio) mixture of $Na_2CO_3$ and $K_2CO_3$ in 20 ml of pure water, leaving the combusted mixture to stand for 30 minutes, and then measuring the iodine content using a Shimadzu 20A ion chromatograph. A calibration curve of a KI standard solution containing 0.5 ppm by mass and 1.0 ppm by mass of iodine ions can be used.

The fluorine-containing elastomer preferably contains a $-CH_2I$ structure. Whether the $-CH_2I$ structure is contained can be verified by a $^1H$-NMR spectrum. The fluorine-containing elastomer containing a $-CH_2I$ structure can be obtained by iodine transfer polymerization.

In the fluorine-containing elastomer, the amount of the $-CH_2I$ structure is preferably 0.05 to 1.50 mol% based on 100 mol% of the $-CH_2-$ structure. The amount of the $-CH_2I$ structure is more preferably 0.08 mol% or more and even more preferably 0.12 mol% or more, and is more preferably 1.20 mol% or less, even more preferably 1.00 mol% or less, and particularly preferably 0.80 mol% or less. The amount of the $-CH_2I$ structure can be determined by a $^1H$-NMR

spectrum.

The fluorine-containing elastomer more preferably contains a $-CF_2CH_2I$ structure. The fluorine-containing elastomer containing the $-CF_2CH_2I$ structure can be obtained by producing a VdF-based fluorine-containing elastomer by iodine transfer polymerization.

In the fluorine-containing elastomer, the amount of the $-CF_2CH_2I$ structure is preferably 0.05 to 1.50 mol% based on 100 mol% of the $-CH_2-$ structure. The amount of the $-CF_2CH_2I$ structure is more preferably 0.08 mol% or more and even more preferably 0.12 mol% or more, and is more preferably 1.20 mol% or less, even more preferably 1.00 mol% or less, and particularly preferably 0.80 mol% or less. The amount of the - $CF_2CH_2I$ structure is calculated by A/B*100 from integrated value A of all peak intensities observed in a chemical shift region of 3.75 to 4.05 ppm derived from $-CH_2I$ and integrated value B of all peak intensities observed in chemical shift regions of 2.3 to 2.7 ppm and 2.9 to 3.75 ppm derived from - $CH_2$- in a $^1H$-NMR spectrum.

A suitable fluorine-containing monomer for use in the production method of the present disclosure may be the fluorine-containing monomer described with respect to the fluorine-containing elastomer.

By the production method of the present disclosure, an aqueous dispersion of a fluorine-containing elastomer is obtained. The resulting fluorine-containing elastomer aqueous dispersion preferably has a solid concentration (a fluorine-containing elastomer content) of 10 to 50% by mass, more preferably 15 to 40% by mass, and even more preferably 20 to 30% by mass, when polymerization is complete.

The aqueous dispersion of the fluorine-containing elastomer may contain fluorine-containing elastomer particles. The average particle size of fluorine-containing elastomer particles is preferably 10 to 800 nm, more preferably 50 to 500 nm, and more preferably 70 to 300 nm. The average particle size of fluorine-containing elastomer particles is a cumulant average diameter and can be measured by dynamic light scattering.

The number of fluorine-containing elastomer particles contained in the aqueous dispersion of the fluorine-containing elastomer is preferably $1.0 \times 10^{12}$ particles/cc or more, more preferably $5.0 \times 10^{12}$ particles/cc or more, even more preferably $1.0 \times 10^{13}$ particles/cc or more, particularly preferably $1.2 \times 10^{14}$ particles/cc or more, and most preferably $1.3 \times 10^{14}$ particles/cc or more. The number of particles (the number of polymer particles) can be calculated in accordance with the following expression:

$$\text{Number of polymer particles} = \left\{\frac{\text{Solid concentration of aqueous dispersion (mass\%)}}{100 - \textit{Solid concentration of aqueous dispersion (mass\%)}}\right\} / \left\{\frac{4}{3} \times 3.14 \times \left(\frac{\text{Average particle size (nm)}}{2} \times 10^{-9}\right)^3 \times \text{Specific gravity} \times 10^6\right\}$$

The number of fluorine-containing elastomer particles obtained by the above expression is the number of particles per 1 cc of water. The specific gravity is the specific gravity of the fluorine-containing elastomer. The specific gravity of the fluorine-containing elastomer can be determined in accordance with JIS Z 8807:2012.

A treatment such as coagulation or heating may be performed on the aqueous dispersion of the fluorine-containing elastomer.

Coagulation can be carried out by adding an alkaline earth or earth metal salt to the aqueous dispersion. Examples of the alkaline earth or earth metal salt include a sulfuric acid salt, a nitric acid salt, a hydrochloric acid salt, and an acetic acid salt of calcium, magnesium, and aluminum.

The coagulated fluorine-containing elastomer may be washed with water to remove a small amount of impurities such as a buffer and a salt present in the fluorine-containing elastomer, and then the washed fluorine-containing elastomer may be dried. The drying temperature is preferably 40 to 200°C, more preferably 60 to 180°C, and more preferably 80 to 150°C.

The form of the fluorine-containing elastomer obtained after coagulation is not limited, and may be gum, crumb, powder, pellet, or the like, and is preferably gum or crumb. Gum is a small mass of particles made of the fluorine-containing elastomer, and crumb is in the form of an amorphous mass as a result of the fluorine-containing elastomer being unable to maintain a small particulate form as a gum at room temperature and fusing to each other. Gum or crumb is suitably obtained by coagulation, drying, or the like by a conventionally known method from the aqueous dispersion obtained by the production method of the present disclosure.

The polymer (I), decomposition products and by-products of the polymer (I) by-produced from the polymer (I), residual monomers, and the like may be collected from discharge water generated in the above coagulation or washing and/or from off gas generated in the drying, and then purified to reuse the polymer (I), the decomposition products and by-products of the polymer (I) by-produced from the polymer (I), the residual monomers, and the like. Although the method for carrying out the above collection and purification is not limited, they may be carried out by known methods.

For example, they may be performed by the methods described in Japanese Translation of PCT International Application Publication No. 2011-520020, U.S. Patent Application Publication No. 2007/0015937, U.S. Patent Application Publication No. 2007/0025902, and U.S. Patent Application Publication No. 2007/0027251.

Examples of the method for collecting the polymer (I), the decomposition products and by-products of the polymer (I) by-produced from the polymer (I), the residual monomers, and the like from the above discharge water include a method in which the discharge water is brought into contact with adsorbent particles formed of ion exchange resin, activated carbon, silica gel, clay, zeolite, or the like, so that the particles are allowed to adsorb the polymer (I) and the others and the discharge water and the adsorbent particles are then separated. By incinerating the adsorbent particles that have adsorbed the polymer (I) and the others, release of the polymer (I) and the others to the environment can be prevented.

Alternatively, the polymer (I) and the others can be collected by removing and eluting the polymer (I) and the others from the ion exchange resin particles that have adsorbed the polymer (I) and the others by a known method. For example, when the ion exchange resin particles are anion exchange resin particles, the polymer (I) and the others can be eluted by bringing a mineral acid into contact with the anion exchange resin. Subsequently, when a water-soluble organic solvent is added to the resulting eluate, it is usually separated into two phases, and therefore, by collecting and neutralizing the lower phase, which contains the polymer (I) and the others, the polymer (I) and the others can be collected. Examples of the above water-soluble organic solvent include polar solvents such as alcohols, ketones, and ethers.

Other examples of the method for collecting the polymer (I) and the others from the ion exchange resin particles include a method using an ammonium salt and a water-soluble organic solvent, and a method using an alcohol and, if desired, an acid. In the latter method, ester derivatives of the polymer (I) and the others are produced, and thus, they can easily be separated from the alcohol by distillation.

When the above discharge water contains fluorine-containing elastomer particles and other solids, it is preferable that they are removed before the discharge water and the adsorbent particles are brought into contact with each other. Examples of the method for removing the fluorine-containing elastomer particles and other solids include a method of adding an aluminum salt or the like to deposit these components, and then separating the discharge water and the deposits, and an electrocoagulation method. They may also be removed by a mechanical method, such as a crossflow filtration method, a deep bed filtration method, or a precoat filtration method.

The concentration of the fluorine-containing elastomer that has not yet been agglomerated in the above discharge water is preferably low, more preferably less than 0.4% by mass, and particularly preferably less than 0.3% by mass, from the viewpoint of productivity.

Examples of the method for collecting the polymer (I) and the others from the above off gas include a method in which a scrubber is used and brought into contact with deionized water, an alkaline aqueous solution, an organic solvent such as a glycol ether solvent, or the like to provide a scrubber solution containing the polymer (I) and the others. When an alkaline aqueous solution with a high concentration is used as the alkaline aqueous solution, the scrubber solution can be collected with the polymer (I) and the others in a phase-separated state, making it easy to collect and reuse the above polymer (I) and the others. Examples of the alkali compound include alkali metal hydroxides and quaternary ammonium salts.

The scrubber solution containing the polymer (I) and the others may be concentrated using a reverse osmosis membrane or the like. The concentrated scrubber solution usually contains fluorine ions, but by further adding alumina after the concentration to remove the fluorine ions, it is also possible to facilitate the reuse of the polymer (I) and the others. Alternatively, adsorbent particles may be brought into contact with the scrubber solution to adsorb the polymer (I) and the others, thereby collecting the polymer (I) and the others by the method mentioned above.

The polymer (I) and the others collected by any of the above methods can be reused for production of the fluorine-containing elastomer.

By adding a cross-linking agent and the like to the aqueous dispersion of the fluorine-containing elastomer or the fluorine-containing elastomer obtained by the production method of the present disclosure, a composition (crosslinkable composition) can be produced. The type and the amount of the cross-linking agent are not limited, and the cross-linking agent can be used within a known range.

When the fluorine-containing elastomer is an uncrosslinked elastomer, examples of the crosslinking system therefor include a peroxide crosslinking system, a polyol crosslinking system, or a polyamine crosslinking system, and the crosslinking system is preferably at least one selected from the group consisting of a peroxide crosslinking system and a polyol crosslinking system. From the viewpoint of chemical resistance, a peroxide crosslinking system is preferable, and from the viewpoint of heat resistance, a polyol crosslinking system is preferable.

Accordingly, the cross-linking agent is preferably at least one cross-linking agent selected from the group consisting of a polyol cross-linking agent and a peroxide cross-linking agent, and more preferably a peroxide crosslinking agent.

The amount of the cross-linking agent contained is suitably selected according to the type of the cross-linking

agent and the like, and is preferably 0.2 to 6.0 parts by mass and more preferably 0.3 to 5.0 parts by mass based on 100 parts by mass of the fluorine-containing elastomer.

Peroxide crosslinking can be carried out by using an uncrosslinked elastomer capable of peroxide crosslinking as a fluorine-containing elastomer and an organic peroxide as a cross-linking agent.

The uncrosslinked elastomer capable of peroxide crosslinking is not limited, and may be an uncrosslinked elastomer having a site capable of peroxide crosslinking. The site capable of peroxide crosslinking is not limited, and examples include a site having an iodine atom and a site having a bromine atom.

The organic peroxide may be an organic peroxide capable of readily generating peroxy radicals in the presence of heat and a redox system, and examples include 1,1-bis(t-butylperoxy)-3,5,5-trimethylcyclohexane, 2,5-dimethylhexane-2,5-dihydroperoxide, di-t-butyl peroxide, t-butyl cumyl peroxide, dicumyl peroxide, $\alpha,\alpha$-bis(t-butylperoxy)-p-diisopropylbenzene, 2,5-dimethyl-2,5-di(t-butylperoxy)hexane, 2,5-dimethyl-2,5-di(t-butylperoxy)-hexyne-3, benzoyl peroxide, t-butyl peroxybenzene, t-butyl peroxymaleate, t-butyl peroxyisopropyl carbonate, and t-butyl peroxybenzoate. Among these, 2,5-dimethyl-2,5-di(t-butylperoxy)hexane and 2,5-dimethyl-2,5-di(t-butylperoxy)-hexyne-3 are preferable.

The amount of the organic peroxide contained is preferably 0.1 to 15 parts by mass and more preferably 0.3 to 5 parts by mass based on 100 parts by mass of the fluorine-containing elastomer.

When the cross-linking agent is an organic peroxide, the fluorine-containing elastomer composition preferably further contains a cross-linking aid. Examples of the cross-linking aid include triallyl cyanurate, triallyl isocyanurate (TAIC), triacrylformal, triallyl trimellitate, N,N'-m-phenylene bismaleimide, dipropargyl terephthalate, diallyl phthalate, tetraallyl terephthalate amide, triallyl phosphate, bismaleimide, fluorinated triallyl isocyanurate (1,3,5-tris(2,3,3-trifluoro-2-propenyl)-1,3,5-triazine-2,4,6-trione), tris(diallylamine)-S-triazine, N,N-diallylacrylamide, 1,6-divinyldodecafluorohexane, hexaallyl phosphoramide, N,N,N',N'-tetraallyl phthalamide, N,N,N',N'-tetraallyl malonamide, trivinyl isocyanurate, 2,4,6-trivinylmethyltrisiloxane, tri(5-norbornene-2-methylene)cyanurate, triallyl phosphite, and trimethallyl isocyanurate. Among these, triallyl isocyanurate (TAIC) is preferable in terms of excellent crosslinkability, mechanical properties, and flexibility.

The amount of the cross-linking aid contained is preferably 0.01 to 10 parts by mass, more preferably 0.01 to 7.0 parts by mass, and even more preferably 0.1 to 5.0 parts by mass based on 100 parts by mass of the fluorine-containing elastomer. An amount of the cross-linking aid of less than 0.01 parts by mass results in poor mechanical properties and poor flexibility. An amount exceeding 10 parts by mass tends to result in inferior heat resistance and also poor durability of a formed article.

Polyol crosslinking can be carried out by using an uncrosslinked elastomer capable of polyol crosslinking as a fluorine-containing elastomer and a polyhydroxy compound as a cross-linking agent. In the polyol crosslinking system, the amount of the polyhydroxy compound contained is preferably 0.01 to 10 parts by mass based on 100 parts by mass of the uncrosslinked elastomer capable of polyol crosslinking. When the amount of the polyhydroxy compound contained is in such a range, polyol crosslinking can be sufficiently promoted. The amount is more preferably 0.02 to 8 parts by mass. The amount is even more preferably 0.03 to 4 parts by mass.

The uncrosslinked elastomer capable of polyol crosslinking is not limited, and is an uncrosslinked elastomer having a site capable of polyol crosslinking. The site capable of polyol crosslinking is not limited, and may be, for example, a site having a vinylidene fluoride (VdF) unit. The method for introducing the crosslinking site may be a method involving copolymerizing a monomer that provides a crosslinking site at the time of polymerization of an uncrosslinked elastomer.

A suitable polyhydroxy compound may be a polyhydroxy aromatic compound in terms of excellent heat resistance.

The polyhydroxy aromatic compound is not limited, and examples include 2,2-bis(4-hydroxyphenyl)propane (hereinafter, referred to as bisphenol A), 2,2-bis(4-hydroxyphenyl)perfluoropropane (hereinafter, referred to as bisphenol AF, and bisphenol AF is available from, for example, FUJIFILM Wako Pure Chemical Corporation or Central Glass Co., Ltd.), 1,3-dihydroxybenzene, 1,7-dihydroxynaphthalene, 2,7-dihydroxynaphthalene, 1,6-dihydroxynaphthalene, 4,4'-dihydroxydiphenyl, 4,4'-dihydroxystilbene, 2,6-dihydroxyanthracene, hydroquinone, catechol, 2,2-bis(4-hydroxyphenyl)butane (hereinafter, referred to as bisphenol B), 4,4-bis(4-hydroxyphenyl)valeric acid, 2,2-bis(4-hydroxyphenyl)tetrafluorodichloropropane, 4,4'-dihydroxydiphenyl sulfone, 4,4'-dihydroxydiphenylketone, tri(4-hydroxyphenyl)methane, 3,3',5,5'-tetrachlorobisphenol A, and 3,3',5,5'-tetrabromobisphenol A. These polyhydroxy aromatic compounds may be alkali metal salts, alkaline earth metal salts, and the like, and when the copolymer is coagulated with acid, the metal salts are preferably not used. The amount of the polyhydroxy aromatic compound contained is 0.1 to 15 parts by mass and preferably 0.5 to 5 parts by mass based on 100 parts by mass of the uncrosslinked elastomer.

When the cross-linking agent is a polyhydroxy compound, the fluorine-containing elastomer composition preferably further contains a crosslinking accelerator. The crosslinking accelerator promotes formation of an intramolecular double bond in the dehydrofluorination reaction of the polymer main chain and addition of a polyhydroxy compound to the formed double bond.

The crosslinking accelerator may be used in combination with an acid acceptor such as magnesium oxide or with a crosslinking aid.

Examples of the crosslinking accelerator include onium compounds, and among onium compounds, the crosslinking accelerator is preferably at least one selected from the group consisting of ammonium compounds such as a quaternary ammonium salt, phosphonium compounds such as a quaternary phosphonium salt, oxonium compounds, sulfonium compounds, cyclic amines, and monofunctional amine compounds, and more preferably at least one selected from the group consisting of quaternary ammonium salts and quaternary phosphonium salts.

The quaternary ammonium salt is not limited, and examples include 8-methyl-1,8-diazabicyclo[5,4,0]-7-undecenium chloride, 8-methyl-1,8-diazabicyclo[5,4,0]-7-undecenium iodide, 8-methyl-1,8-diazabicyclo[5,4,0] -7-undecenium hydroxide, 8-methyl-1,8-diazabicyclo[5,4,0]-7-undecenium methyl sulfate, 8-ethyl-1,8-diazabicyclo[5,4,0]-7-undecenium bromide, 8-propyl-1,8-diazabicyclo[5,4,0]-7-undecenium bromide, 8-dodecyl-1,8-diazabicyclo[5,4,0]-7-undecenium chloride, 8-dodecyl-1,8-diazabicyclo[5,4,0]-7-undecenium hydroxide, 8-eicosyl-1,8-diazabicyclo[5,4,0]-7-undecenium chloride, 8-tetracosyl-1,8-diazabicyclo[5,4,0]-7-undecenium chloride, 8-benzyl-1,8-diazabicyclo[5,4,0]-7-undecenium chloride (hereinafter, referred to as DBU-B, and DBU-B is available from, for example, FUJIFILM Wako Pure Chemical Corporation), 8-benzyl-1,8-diazabicyclo[5,4,0]-7-undecenium hydroxide, 8-phenethyl-1,8-diazabicyclo[5,4,0]-7-undecenium chloride, 8-(3-phenylpropyl)-1,8-diazabicyclo[5,4,0]-7-undecenium chloride, tetrabutylammonium hydrogensulfate, tetrabutylammonium hydroxide, tetrabutylammonium chloride, and tetrabutylammonium bromide. Among these, DBU-B is preferable in terms of crosslinkability, mechanical properties, and flexibility.

The quaternary phosphonium salt is not limited, and examples include tetrabutylphosphonium chloride, benzyltriphenylphosphonium chloride (hereinafter, referred to as BTPPC), benzyltrimethylphosphonium chloride, benzyltributylphosphonium chloride, tributylallylphosphonium chloride, tributyl-2-methoxypropylphosphonium chloride, and benzylphenyl(dimethylamino)phosphonium chloride, and among these, benzyltriphenylphosphonium chloride (BTPPC) is preferable in terms of crosslinkability, mechanical properties, and flexibility.

The crosslinking accelerator may be a solid solution of a quaternary ammonium salt and bisphenol AF, a solid solution of a quaternary phosphonium salt and bisphenol AF, or a chlorine-free crosslinking accelerator disclosed in Japanese Patent Laid-Open No. 11-147891.

The amount of the crosslinking accelerator contained is preferably 0.01 to 8.00 parts by mass and more preferably 0.02 to 5.00 parts by mass based on 100 parts by mass of the uncrosslinked elastomer. The amount is even more preferably 0.03 to 3.00 parts by mass. When the amount of the crosslinking accelerator is less than 0.01 parts by mass, there is a possibly that the crosslinking of the uncrosslinked elastomer does not sufficiently proceed, and the resulting formed article has poor heat resistance and the like. When the amount exceeds 8.00 parts by mass, there is a possibility that the fluorine-containing elastomer composition has poor forming processability, and there is a tendency that elongation with respect to mechanical properties is reduced, and flexibility is also reduced.

The acid acceptor is used to neutralize an acidic substance generated during polyol crosslinking, and specific examples include magnesium oxide, calcium hydroxide (such as NICC 5000 (manufactured by Inoue Calcium Corporation), CALDIC #2000, CALDIC #1000 (manufactured by Ohmi Chemical Industry Co., Ltd.)), calcium oxide, litharge (lead oxide), zinc oxide, dibasic lead phosphite, and hydrotalcite, and the acid acceptor is preferably at least one selected from the group consisting of high-activity magnesium oxide and low-activity magnesium.

Polyamine crosslinking can be carried out by using a fluorine-containing elastomer capable of polyamine crosslinking as a fluorine-containing elastomer and a polyamine compound as a cross-linking agent.

The fluorine-containing elastomer capable of polyamine crosslinking is not limited, and is a fluorine-containing elastomer having a site capable of polyamine crosslinking. The site capable of polyamine crosslinking is not limited, and may be, for example, a site having a vinylidene fluoride (VdF) unit. The method for introducing the crosslinking site may be a method involving copolymerizing a monomer that provides a crosslinking site at the time of polymerization of a fluorine-containing elastomer.

Examples of the polyamine compound include hexamethylenediamine carbamate, N,N'-dicinnamylidene-1,6-hexamethylenediamine, and 4,4'-bis(aminocyclohexyl)methane carbamate. Among these, N,N'-dicinnamylidene-1,6-hexamethylenediamine is preferable.

The method for obtaining the composition containing a cross-linking agent is not limited as long as the method is capable of uniformly mixing the fluorine-containing elastomer obtained by the production method of the present disclosure with a cross-linking agent. An example may be a method involving kneading a powder obtained by coagulating the fluorine-containing elastomer alone and, if necessary, another additive or a compounding agent with a kneader such as an open roll.

The present disclosure also relates to a composition comprising: a fluorine-containing elastomer containing methylene group in the main chain and further containing a monomer unit (A) derived from a compound (A) containing a functional group capable of reaction by radical polymerization and a hydrophilic group (excluding a polymer (I)); and a polymer (I) containing a polymerization unit (I) derived from a monomer (I) represented by general formula (I). The composition of the present disclosure can be suitably produced by the production method of the present disclosure.

The form of the composition of the present disclosure is not limited, but it may be in the form of, for example, an aqueous dispersion, gum, crumb, powder, pellets, or the like. The aqueous dispersion refers to a dispersion system

in which an aqueous medium is the dispersion medium and the fluorine-containing elastomer is the dispersoid. The above aqueous medium is not limited as long as it is a liquid containing water, and it may be one containing, in addition to water, an organic solvent such as an alcohol, an ether, a ketone, and a paraffin wax.

The suitable configuration of the fluorine-containing elastomer is the same as the configuration of the fluorine-containing elastomer obtained by the production method of the present disclosure.

The suitable configuration of the compound (A) and the polymer (I) is the same as the configuration of the polymer (I) used in the production method of the present disclosure.

The content of the monomer unit (A) derived from the compound (A) in the fluorine-containing elastomer is preferably 0.0009 to 1.5% by mass, more preferably 0.0015% by mass or more, even more preferably 0.0030% by mass or more, particularly preferably 0.0060% by mass or more, and most preferably 0.0090% by mass or more, and is more preferably 0.30% by mass or less, even more preferably 0.15% by mass or less, particularly preferably 0.09% by mass or less, and most preferably 0.06% by mass or less, based on all monomer units. When the content of the monomer unit (A) derived from the compound (A) is too large, the properties required of the fluorine-containing elastomer may be impaired.

The content of the monomer unit (A) derived from the compound (A) in the fluorine-containing elastomer can be calculated by combining NMR, FT-IR, elemental analysis, and X-ray fluorescence analysis as appropriate according to the type of monomer.

The lower limit value of the content of the polymer (I) in the composition is preferably 0.00001% by mass, more preferably 0.0001% by mass, even more preferably 0.001% by mass, and particularly preferably 0.01% by mass, based on the fluorine-containing elastomer. The upper limit value of the content of the polymer (I) in the composition is preferably 20% by mass, more preferably 10% by mass, even more preferably 6% by mass, yet more preferably 4% by mass, and most preferably 2% by mass or less.

The content of the polymer (I) in the composition can be determined by, for example, solid-state NMR measurement or melt-state NMR measurement. In the case where the polymer (I) contains a carbonyl group, it can also be determined with a Fourier transform infrared spectrometer. Examples of the method for measuring the content of the polymer (I) include the methods for measuring the content of the respective polymers described in International Publication No. WO 2014/099453, International Publication No. WO 2010/075497, International Publication No. WO 2010/075496, International Publication No. WO 2011/008381, International Publication No. WO 2009/055521, International Publication No. WO 1987/007619, Japanese Patent Laid-Open No. 61-293476, International Publication No. WO 2010/075494, International Publication No. WO 2010/075359, International Publication No. WO 2012/082454, International Publication No. WO 2006/119224, International Publication No. WO 2013/085864, International Publication No. WO 2012/082707, International Publication No. WO 2012/082703, International Publication No. WO 2012/082451, International Publication No. WO 2006/135825, International Publication No. WO 2004/067588, International Publication No. WO 2009/068528, Japanese Patent Laid-Open No. 2004-075978, Japanese Patent Laid-Open No. 2001-226436, International Publication No. WO 1992/017635, International Publication No. WO 2014/069165, Japanese Patent Laid-Open No. 11-181009, and the like. Specific examples of the device used therefor include AVANCE III HD400 manufactured by Bruker and AVANCE300 manufactured by Bruker. The rotation speed is set according to the resonance frequency of the device, and is set such that the spinning side band does not overlap the peaks used for the content calculation of the fluorine-containing elastomer or the polymer (I).

It is preferable that the composition of the present disclosure is substantially free from a fluorine-containing surfactant not having a functional group capable of reaction by radical polymerization.

In the present disclosure, the expression "substantially free from a fluorine-containing surfactant not having a functional group capable of reaction by radical polymerization" means that the content of the fluorine-containing surfactant in the composition is 10 ppm by mass or less, and it is preferably 1 ppm by mass or less, more preferably 100 ppb by mass or less, even more preferably 10 ppb by mass or less, yet more preferably 1 ppb by mass or less, and particularly preferably the fluorine-containing surfactant is at or below the detection limit as measured by liquid chromatography-mass spectrometry (LC/MS).

The content of the fluorine-containing surfactant can be quantified by a known method, and can be quantified by, for example, LC/MS analysis.

First, extraction is performed by adding methanol to the composition, and the obtained extracted liquid is subjected to LC/MS analysis. To further increase extraction efficiency, treatment by Soxhlet extraction, ultrasonic treatment, or the like may be performed.

From the resulting LC/MS spectrum, molecular weight information is extracted, and a match with the structural formula of a candidate fluorine-containing surfactant is checked.

Thereafter, aqueous solutions having five or more different content levels of the confirmed fluorine-containing surfactant are prepared, LC/MS analysis is performed on the aqueous solutions with the respective content levels, and the relationship between the content level and the area corresponding to that content level is plotted to draw a calibration curve.

Then, using the calibration curve, the area of the LC/MS chromatogram of the fluorine-containing surfactant in the extract can be converted into the content of the fluorine-containing surfactant.

The composition of the present disclosure may be an aqueous dispersion containing the fluorine-containing elastomer, the polymer (I), and the aqueous medium. The upper limit value of the solid concentration of the aqueous dispersion is preferably 50% by mass, more preferably 40% by mass, even more preferably 35% by mass, and particularly preferably 30% by mass, based on the aqueous dispersion. The lower limit value of the solid concentration of the aqueous dispersion is preferably 5% by mass, more preferably 10% by mass, even more preferably 15% by mass, and particularly preferably 20% by mass. The solid concentration of the aqueous dispersion can be adjusted by diluting or concentrating the aqueous dispersion obtained by polymerization.

The solid concentration of the aqueous dispersion refers to the concentration of solids contained in the aqueous dispersion. Examples of the solids include the fluorine-containing elastomer and the polymer (I). Also, the solid concentration of the aqueous dispersion may be the content of the fluorine-containing elastomer in the aqueous dispersion. The solid concentration of the aqueous dispersion can be specified by drying 1 g of the aqueous dispersion at 150°C for 180 minutes, measuring the mass of the non-volatile matter, and calculating the proportion of the mass of the non-volatile matter to the mass of the aqueous dispersion.

The aqueous dispersion may further contain a crosslinking agent, a filler, and the like. The suitable configuration of the cross-linking agent is the same as the configuration of the composition (crosslinkable composition) obtained by the production method of the present disclosure.

The aqueous dispersion can be formed into a dispersion suited for rubber forming processing by addition of a dispersion stabilizer such as a hydrocarbon surfactant, concentration, and the like, as necessary. The dispersion is subjected to treatments such as pH adjustment, solidification, and heating.

The composition of the present disclosure may be a coagulated product obtained by coagulating the fluorine-containing elastomer contained in an aqueous dispersion, gum, crumb, powder, pellet, or the like, and is preferably gum or crumb. Gum is a small mass of particles made of the fluorine-containing elastomer, and crumb is in the form of an amorphous mass as a result of the fluorine-containing elastomer being unable to maintain a small particulate form as a gum at room temperature and fusing to each other. Gum or crumb is suitably obtained by coagulation, drying, or the like by a conventionally known method from the aqueous dispersion obtained by the production method of the present disclosure.

The water content of the composition is not limited, but is preferably 1% by mass or less, more preferably 0.1% by mass or less, and even more preferably 0.01% by mass or less, based on the mass of the composition. The water content of the composition can be calculated, for example, by heating the composition to 120°C or higher to sufficiently dry the composition, measuring the weight of the composition before and after the heating, and dividing the weight loss by the weight before the heating.

The composition may contain a cross-linking agent. The suitable configuration of the cross-linking agent is the same as the configuration of the composition (crosslinkable composition) obtained by the production method of the present disclosure.

The composition may contain at least one polyfunctional compound. The polyfunctional compound is a compound having two or more functional groups having the same or different structures within one molecule. The functional group contained in the polyfunctional compound may be a functional group generally known to have reactivity, such as a carbonyl group, a carboxyl group, a haloformyl group, an amide group, an olefin group, an amino group, an isocyanate group, a hydroxy group, and an epoxy group.

To the composition, usual additives compounded in the elastomer as necessary, for example, various additives such as fillers (carbon black, barium sulfate, and the like), processing aids (waxes and the like), plasticizers, coloring agents, stabilizers, stickiness imparting agents (coumarone resin, coumarone-indene resin, and the like), mold release agents, electric conductivity imparting agents, thermal conductivity imparting agents, surface non-stickiness agents, flexibility imparting agents, heat resistance improving agents, and flame retarders can be compounded, and one or more types of ordinary cross-linking agents or crosslinking accelerators different from those described above may also be compounded.

The content of the filler such as carbon black is not limited, and is preferably 0 to 300 parts by mass, more preferably 1 to 150 parts by mass, even more preferably 2 to 100 parts by mass, and particularly preferably 2 to 75 parts by mass, based on 100 parts by mass of the fluorine-containing elastomer.

The content of the processing aid such as wax is preferably 0 to 10 parts by mass and more preferably 0 to 5 parts by mass based on 100 parts by mass of the fluorine-containing elastomer. When a processing aid, a plasticizer, and a mold release agent are used, the mechanical properties and the sealability of the resulting formed article tend to be impaired, and thus the contents thereof need to be regulated such that the characteristics of the target formed article to be obtained are acceptable.

By forming the composition, a formed article can be obtained. Alternatively, a formed article can also be obtained by forming and crosslinking the composition. The composition can be formed by a conventionally known method. The

forming and crosslinking methods and conditions may be within the scope of known methods and conditions of the adopted forming and crosslinking. The order of forming and crosslinking is not limited, and the composition may be formed and then crosslinked, may be crosslinked and then formed, or simultaneously formed and crosslinked.

Examples of the forming method include, but are not limited to, compression forming, casting, injection molding, extrusion forming, and forming with Rotocure. The crosslinking method adopted may be steam crosslinking, crosslinking by heating, radiation crosslinking, or the like; in particular, steam crosslinking and crosslinking by heating are preferable. Non-limiting specific crosslinking conditions may be determined as appropriate according to the types of crosslinking accelerator, cross-linking agent, acid acceptor, and others, usually within a temperature range of 140 to 250°C and a crosslinking time of 1 minute to 24 hours.

By heating the resulting formed article with an oven or the like, mechanical properties and high-temperature permanent compression set properties can be improved, for example. Non-limiting specific crosslinking conditions may be determined as appropriate according to the types of crosslinking accelerator, cross-linking agent, acid acceptor, and others, usually within a temperature range of 140 to 300°C and the range of 30 minutes to 72 hours.

The resulting formed article can be used as various components in various fields such as automobile industry, aircraft industry, and semiconductor industry. The formed article can be used in the same applications as the crosslinked rubber formed articles described in Japanese Patent Laid-Open No. 2013-216915 and the fluoroelastomer formed articles described in Japanese Patent Laid-Open No. 2019-94430, such as sealing materials, sliding members, and non-stick members.

Examples of the usage of the formed article include various sealing materials and packings, such as rings, packings, gaskets, diaphragms, oil seals, and bearing seals. The formed article as a sealing material can be used in applications where excellent non-stickiness and low-friction properties are required. In particular, the formed article can be suitably used in various sealing materials in the automobile industry and the like.

Also, the formed article can be used as tubes, hoses, rolls, various rubber rolls, flexible joints, rubber plates, coatings, belts, dampers, valves, valve seats, valve bodies, chemical resistant coating materials, laminating materials, lining materials, and the like.

While embodiments have been described above, it will be understood that various changes in form and detail can be made without departing from the gist and scope of the claims.

## EXAMPLES

Next, embodiments of the present disclosure will now be described by way of Examples, but the present disclosure is not limited only to the Examples.

Various numerical values in the Examples were measured by the following methods.

<Oxygen concentration in reactor>

Gas discharged from the discharge gas line of a reactor in a $N_2$ flow was measured and analyzed using a lowconcentration oxygen analyzer (trade name "PS-820-L", manufactured by Iijima Electronics Corporation) to thus determine the oxygen concentration in the reactor during polymerization.

<Concentration of polymer>

In a vacuum dryer, about 1 g of the aqueous solution of the polymer was dried at a condition of 60°C for 60 minutes, the mass of the non-volatile matter was measured, and the proportion of the mass of the non-volatile matter to the mass of the polymer aqueous solution (1 g) was expressed by percentage and taken as the concentration of the polymer.

<Method for measuring weight average molecular weight (Mw), number average molecular weight (Mn), and content of fractions with molecular weight of 3,000 or less>

The Mw and Mn of the polymer (I) were measured by gel permeation chromatography (GPC) using 1260 Infinity II manufactured by Agilent Technologies using coupled columns manufactured by Tosoh Corporation (one TSKgel G3000PW$_{XL}$ and one TSKgel GMPW$_{XL}$) while allowing a mixed solvent of Tris buffer and acetonitrile (Tris buffer : acetonitrile = 8 : 2 (v/v)) to flow at a flow rate of 0.5 ml/min as the solvent, and the molecular weights were calculated using monodisperse polyethylene oxide (PEO) and polyethylene glycol (PEG) as standards.

<Method for measuring weight average molecular weight (Mw), number average molecular weight (Mn), and content of fractions with molecular weight of 3,000 or less of copolymer of VdF and $CF_2$=$CFOCF_2CF_2SO_3Na$>

The Mw and Mn of the polymer (I) were measured by gel permeation chromatography (GPC) using the ACQUITY APC system manufactured by Waters using coupled columns manufactured by Tosoh Corporation (one TSKgel $\alpha$-M and one TSKgel $\alpha$-3000) while allowing dimethylformamide with 0.05 M lithium bromide to flow at a flow rate of 0.8 ml/min as the solvent at a column temperature of 40°C, and the molecular weights were calculated using monodisperse polystyrene as a standard.

(Alternating ratio of copolymer of VdF and $CF_2$=$CFOCF_2CF_2SO_3Na$)

The alternating ratio was obtained by performing $^{19}F$-NMR measurement on the fluoropolymer and calculating the alternating ratio from the respective total integrated values of two peaks (a peak appearing at -75 ppm to -80 ppmm and a peak appearing at -80 ppm to -84 ppm) derived from "$OCF_2$*" of $CF_2$=$CFOCF_2CF_2SO_3Na$ appearing in the NMR spectrum according to the following expression:

$$\text{Alternating ratio (\%)} \geq (b \times 2)/(a + b) \times 100$$

a: Total integrated value of peak in -75 ppm to -80 ppmm area
b: Total integrated value of peak in -80 ppm to -84 ppm area

The alternating ratio calculated above is the proportion of a polymerization unit adjacent to the polymerization unit derived from VdF among the polymerization unit derived from $CF_2$=$CFOCF_2CF_2SO_3Na$ in the fluoropolymer.

The ratio of the carbon atom (C*) in the polymerization unit derived from VdF (C*$H_2$=$CF_2$) bonded to the carbon atom (C*) in the polymerization unit derived from $CF_2$=C*$FOCF_2CF_2S0_3Na$ is determined by the following expression:

$$\text{Ratio (\%)} = (b \times 2)/(a + b) \times 100$$

The ratio of the carbon atoms (the carbon atom (C**) in the polymerization unit derived from C**$F_2$=C**$FOCF_2CF_2SO_3Na$ and the carbon atom (C**) in the polymerization unit derived from VdF ($CH_2$=C**$F_2$)), other than the carbon atom (C*) in the polymerization unit derived from VdF (C*$H_2$=$CF_2$), bonded to the carbon atom (C*) in the polymerization unit derived from $CF_2$=C*$FOCF_2CF_2SO_3Na$ is determined by the following expression:

$$\text{Ratio (\%)} = (a - b)/(a + b) \times 100$$

(Method for measuring content of dimer and trimer of monomer in polymer (I))

(1) Extraction from aqueous solution

The solid content of an aqueous solution of the polymer (I) was measured, and the amount of the aqueous solution corresponding to 0.2 g of the solid content of the fluoropolymer was weighed. Thereafter, water and methanol were added such that the volume ratio of water, including water contained in the aqueous solution, to methanol was 50/50 (% by volume) to obtain a mixed solution containing the fluoropolymer, water, and methanol. Thereafter, the resulting mixed solution was filtered using an ultrafiltration disc (a molecular weight cutoff of 3,000 Da), and a recovered solution containing the fluoropolymer was recovered.

The recovered solution was analyzed using a liquid chromatograph-mass spectrometer (Waters, LC-MS ACQUITY UPLC/TQD) to obtain a chromatogram of the recovered solution.

The content of a dimer and a trimer of the monomer contained in the recovered solution was obtained by converting the integrated values of peaks derived from the dimer and trimer of the monomer appearing in the chromatogram of the recovered solution into the content of the dimer and trimer of the monomer using the calibration curve of an analogous monomer.

(2) Calibration curve of monomer

Methanol standard solutions of the monomer with five known content levels of 1 ng/mL to 100 ng/mL were

prepared, and measurement was carried out using a liquid chromatograph mass spectrometer (Waters, LC-MS ACQUITY UPLC/TQD). The relationship between the respective monomer contents and the peak integrated values corresponding to those contents were plotted to prepare a calibration curve (first approximation) for each monomer. Next, the calibration curve (first approximation) for each monomer was used to prepare a calibration curve for the dimer and trimer of each monomer.

Measuring instrument configuration and LC-MS measurement conditions

[Table 1]

Table 1

| | | | | |
|---|---|---|---|---|
| LC unit | | | | |
| | Device | Acquity UPLC manufactured by Waters | | |
| | Column | Acquity UPLC BEH C18 1.7 μm (2.1 × 50 mm) manufactured by Waters | | |
| | Mobile phase | A $CH_3CN$ | | |
| | | B 20mM $CH_3COONH_4/H_2O$ | | |
| | | | 0 → 1.5 min | A:B = 10:90 |
| | | | 1.5 → 8.5 min | A:B = 10:90 → A:B = 90:10 Linear gradient |
| | | | 8.5 → 10 min | A:B = 90:10 |
| | Flow rate | | 0.4 mL/min | |
| | Column temperature | 40°C | | |
| | Sample injection volume | 5 μL | | |
| MS unit | | | | |
| | Device | TQ Detecter | | |
| | Measurement mode | MRM (Multiple Reaction Monitoring) | | |
| | Ionization method | Electrospray ionization SCAN | | |

The quantification limit in this measurement equipment configuration is 1 ng/mL.

<Mooney viscosity>

The Mooney viscosity was measured using a Mooney viscometer MV2000E manufactured by Alpha Technologies Inc. at 100°C in accordance with JIS K 6300-1:2013.

<Compositional features of fluorine-containing elastomer>

The compositional features were determined by NMR analysis.

<Polymer adhesion rate>

The ratio (adhesion rate to a polymerization tank) of the mass of polymer deposits adhering to the polymerization tank after the completion of polymerization to the total amount of a polymer (fluorine-containing elastomer) after the completion of polymerization was determined by the following expressions.

Polymer adhesion rate (% by mass) = Mass of polymer deposits / Mass of resulting polymer (including polymer deposits) × 100

Mass of resulting polymer = Mass of aqueous dispersion × Solid concentration (% by mass) of aqueous dispersion / 100 + Mass of polymer deposits

Polymer deposits include the polymer adhering to the inside of a polymerization tank such as the inner wall of a polymerization tank and a stirring blade after an aqueous dispersion is removed from the polymerization tank after the completion of polymerization, and the polymer that is freed from the aqueous dispersion due to aggregation and floats or precipitates without being dispersed in the aqueous dispersion. The mass of polymer deposits is the mass after water contained in the polymer deposits is dried and removed at 120°C.

<Solid concentration of aqueous dispersion containing fluorine-containing elastomer>

In an air dryer, 1 g of the aqueous dispersion containing the fluorine-containing elastomer was dried at a condition of 150°C for 180 minutes, the mass of the non-volatile matter was measured, and the proportion of the mass of the non-volatile matter to the mass of the aqueous dispersion (1 g) was determined (% by mass).

<Average particle size>

As for the average particle size (the cumulant average diameter) of fluorine-containing elastomer particles in the aqueous dispersion, measurement was carried out by dynamic light scattering using ELSZ-1000S (manufactured by Otsuka Electronics Co., Ltd.), and the average particle size was calculated by the cumulant method.

<Number of fluorine-containing elastomer particles in aqueous dispersion>

The number of fluorine-containing elastomer particles was calculated by the following expression:

$$\text{Number of polymer particles} = \left\{\frac{\text{Solid concentration of aqueous dispersion (mass\%)}}{100 - \textit{Solid concentration of aqueous dispersion (mass\%)}}\right\} / \left\{\frac{4}{3} \times 3.14 \times \left(\frac{\text{Average particle size (nm)}}{2} \times 10^{-9}\right)^3 \times \text{Specific gravity} \times 10^6\right\}$$

wherein the average particle size is a cumulant average size as calculated by the method described above, and the number of polymer particles (the number of fluorine-containing elastomer particles) is the number of particles per 1 cc of water, with the specific density of all fluorine-containing elastomers in the Examples and Comparative Examples being 1.8.

<Synthetic Example 1>

To a reactor, 6.8 g of sodium 1,1,2,2-tetrafluoro-2-((1,2,2-trifluorovinyl)oxy)ethane-1-sulfonate, 34 g of water, and ammonium persulfate (APS) in an amount corresponding to 1.5 mol% based on the amount of sodium 1,1,2,2-tetrafluoro-2-((1,2,2-trifluorovinyl)oxy)ethane-1-sulfonate were added, and after $N_2$ purge and degassing, 3.2 g of VdF was introduced and the mixture was stirred at 60°C for 2 hours in a sealed condition. The pressure inside the reactor increased to 0.30 MPaG after heating and decreased to 0.19 MPaG as the reaction proceeded.

The resulting fluoropolymer-containing aqueous solution was brought into contact with a dialysis membrane (a molecular weight cutoff of 3,500 Da, made of cellulose) at room temperature to perform filtration, and thus an aqueous

solution of a fluoropolymer (polymer (I-1) aqueous solution) was obtained. The concentration of the aqueous solution obtained by performing dialysis membrane purification was 2.65% by mass.

<Synthetic Example 2>

To a reactor, 10 g of sodium 1,1,2,2-tetrafluoro-2-((1,2,2-trifluorovinyl)oxy)ethane-1-sulfonate, 20 g of water, and ammonium persulfate (APS) in an amount corresponding to 2.0 mol% based on the amount of sodium 1,1,2,2-tetrafluoro-2-((1,2,2-trifluorovinyl)oxy)ethane-1-sulfonate were added, and the mixture was stirred at 40°C for 72 hours in a $N_2$ flow. The oxygen concentration in the reactor fluctuated in the range of 15 ppm by volume to 40 ppm by volume.

The resulting fluoropolymer-containing aqueous solution was brought into contact with a dialysis membrane (a molecular weight cutoff of 3,500 Da, made of cellulose) at room temperature to perform filtration, and thus an aqueous solution of a fluoropolymer (polymer (I-2) aqueous solution) was obtained. The concentration of the aqueous solution obtained by performing dialysis membrane purification was 1.76% by mass.

The aqueous solution obtained by performing dialysis membrane purification was analyzed. The resulting fluoropolymer had a weight average molecular weight (Mw) of $1.0 \times 10^4$ and a number average molecular weight (Mn) of $0.7 \times 10^4$. The content of the dimer and trimer in the aqueous solution obtained by performing dialysis membrane purification was 0.1% by mass or less based on the fluoropolymer. The content of the fractions with a molecular weight of 3,000 or less in the aqueous solution obtained by performing dialysis membrane purification was 0.5% or less. When the present aqueous solution was subjected to DLS analysis, the particle size could not be measured.

Example 1

1,500 g of deionized water, 0.75 g of a 10 mass% aqueous solution of $CH_2$=CF-$CF_2$OCF ($CF_3$) $COONH_4$, and 2.93 g of the polymer (I-1) aqueous solution (the content of the polymer (I-1) was 2.65% by mass) were added to a SUS polymerization tank having an internal volume of 3 L, the polymerization tank was hermetically sealed, and the system was purged with nitrogen to remove oxygen. The polymerization tank was heated to 80°C, and monomers (initial monomers) were introduced under pressure so as to attain a molar ratio of vinylidene fluoride [VDF]/tetrafluoroethylene [TFE]/hexafluoropropylene [HFP] (= 19/11/70 mol%) and an inner pressure of the polymerization tank of 2.03 MPaG while being stirred.

Then, a polymerization initiator aqueous solution prepared by dissolving 0.030 g of ammonium persulfate (APS) in deionized water was introduced under nitrogen gas pressure to initiate the polymerization. When the inner pressure dropped to 2.00 MPaG as the polymerization proceeded, mixed monomers of VDF/TFE/HFP (= 50/20/30 mol%) were introduced such that the inner pressure was constant at 2.03 MPaG.

When 12 g of the mixed monomers were added, 2.45 g of a diiodine compound $I(CF_2)_4I$ was introduced under nitrogen gas pressure.

Then, 3.0 hours after the initiation of polymerization, 0.030 g of a polymerization initiator aqueous solution of APS was introduced under nitrogen gas pressure.

When 500 g of the mixed monomers were added, stirring was stopped, and depressurization was carried out until the polymerization tank reached atmospheric pressure. The polymerization tank was cooled to give an aqueous dispersion. Table 2 shows the polymer adhesion rate, the solid concentration of the aqueous dispersion, the mass of the aqueous dispersion, the average particle size, and the number of particles.

An aqueous aluminum sulfate solution was added to the aqueous dispersion to carry out coagulation. The resulting coagulated product was washed with water and dried to give a fluorine-containing elastomer. The Mooney viscosity of the fluorine-containing elastomer was ML1 + 10 (100°C) = 53.2. The copolymer compositional features were determined by NMR analysis to be VDF/TFE/HFP = 50/20/30 (mol%).

Example 2

Polymerization was carried out in the same manner as in Example 1, except that the amount of deionized water was changed from 1,500 g to 1,496 g and the polymer (I-1) aqueous solution was changed to 4.311 g of the polymer (I-2) aqueous solution (the content of the polymer (I-2) was 1.76% by mass).

When 500 g of the mixed monomers were added, stirring was stopped, and depressurization was carried out until the polymerization tank reached atmospheric pressure. The polymerization tank was cooled to give an aqueous dispersion. Table 2 shows the polymer adhesion rate, the solid concentration of the aqueous dispersion, the mass of the aqueous dispersion, the average particle size, and the number of particles.

An aqueous aluminum sulfate solution was added to the aqueous dispersion to carry out coagulation. The resulting coagulated product was washed with water and dried to give a fluorine-containing elastomer. The Mooney viscosity of the fluorine-containing elastomer was ML1 + 10 (100°C) = 54.8. The copolymer compositional features were

determined by NMR analysis to be VDF/TFE/HFP = 50/20/30 (mol%).

Example 3

Polymerization was carried out in the same manner as in Example 2, except that the amount of deionized water was changed from 1,496 g to 1,483 g and the amount of the polymer (I-2) aqueous solution was changed from 4.311 g to 17.242 g.

When 500 g of the mixed monomers were added, stirring was stopped, and depressurization was carried out until the polymerization tank reached atmospheric pressure. The polymerization tank was cooled to give an aqueous dispersion. Table 2 shows the polymer adhesion rate, the solid concentration of the aqueous dispersion, the mass of the aqueous dispersion, the average particle size, and the number of particles.

An aqueous aluminum sulfate solution was added to the aqueous dispersion to carry out coagulation. The resulting coagulated product was washed with water and dried to give a fluorine-containing elastomer. The Mooney viscosity of the fluorine-containing elastomer was ML1 + 10 (100°C) = 52.8. The copolymer compositional features were determined by NMR analysis to be VDF/TFE/HFP = 50/20/30 (mol%).

Comparative Example 1

Polymerization was carried out in the same manner as in Example 1, except that the polymer (I-1) aqueous solution was not added.

When 500 g of the mixed monomers were added, stirring was stopped, and depressurization was carried out until the polymerization tank reached atmospheric pressure. The polymerization tank was cooled to give an aqueous dispersion. Table 2 shows the polymer adhesion rate, the solid concentration of the aqueous dispersion, the mass of the aqueous dispersion, the average particle size, and the number of particles.

An aqueous aluminum sulfate solution was added to the aqueous dispersion to carry out coagulation. The resulting coagulated product was washed with water and dried to give a fluorine-containing elastomer. The Mooney viscosity of the fluorine-containing elastomer was ML1 + 10 (100°C) = 53.1. The copolymer compositional features were determined by NMR analysis to be VDF/TFE/HFP = 50/20/30 (mol%).

Comparative Example 2

Polymerization was carried out in the same manner as in Example 2, except that the 10 mass% aqueous solution of $CH_2$=CF-$CF_2OCF(CF_3)COONH_4$ was not added and 0.030 g of the polymerization initiator aqueous solution of APS was introduced under nitrogen gas pressure at 3.0 hours and 6.0 hours after the initiation of polymerization.

When 500 g of the mixed monomers were added, stirring was stopped, and depressurization was carried out until the polymerization tank reached atmospheric pressure. The polymerization tank was cooled to give an aqueous dispersion. Table 2 shows the polymer adhesion rate, the solid concentration of the aqueous dispersion, the mass of the aqueous dispersion, the average particle size, and the number of particles.

An aqueous aluminum sulfate solution was added to the aqueous dispersion to carry out coagulation. The resulting coagulated product was washed with water and dried to give a fluorine-containing elastomer. The Mooney viscosity of the fluorine-containing elastomer was ML1 + 10 (100°C) = 51.5. The copolymer compositional features were determined by NMR analysis to be VDF/TFE/HFP = 50/20/30 (mol%).

[Table 2]

Table 2

| | | Example 1 | Example 2 | Example 3 | Comparative Example 1 | Comparative Example 2 |
|---|---|---|---|---|---|---|
| Polymer (I) | | Polymer (I-1) | Polymer (I-2) | Polymer (I-2) | - | Polymer (I-2) |
| Compound (A) | | Compound (A-1) | Compound (A-1) | Compound (A-1) | Compound (A-1) | - |
| Reaction time | min. | 285 | 282 | 283 | 271 | 510 |

(continued)

| | | Example 1 | Example 2 | Example 3 | Comparative Example 1 | Comparative Example 2 |
|---|---|---|---|---|---|---|
| Polymer adhesion rate | % by mass | 0.31 | 0.37 | 0.27 | 0.5 | 1.8 |
| Solid concentration | % by mass | 23.6 | 23.4 | 23.3 | 23.7 | 23.5 |
| Mass of aqueous dispersion | g | 1966 | 1983 | 1981 | 1957 | 1957 |
| Average particle size | nm | 158 | 155 | 156 | 137 | 260 |
| Number of particles | particles/cc | $8.32 \times 10^{13}$ | $8.65 \times 10^{13}$ | $8.41 \times 10^{13}$ | $1.29 \times 10^{14}$ | $1.85 \times 10^{13}$ |
| Polymer (I-1): copolymer of sodium 1,1.2.2-tetrafluoro-2-((1,2,2-trifluorovinyl)oxy)ethane-1-sulfonate and $CF_2=CH_2$ Polymer (I-2): homopolymer of sodium 1,1,2,2-tetrafluoro-2-((1,2,2-trifluorovinyl)oxy)ethane-1-sulfonate Compound (A-1): $CH_2=CF-CF_2OCF(CF_3)COONH_4$ | | | | | | |

<Crosslinking characteristics>

The obtained fluorine-containing elastomers were kneaded to have the formulations shown in Table 3 and Table 5 to give fluorine-containing elastomer compositions. Concerning the obtained fluorine-containing elastomer compositions, a crosslinking curve was determined using a rubber vulcanization tester MDRH2030 (manufactured by M&Co., Ltd.) at the time of press crosslinking, and the minimum viscosity (ML), the maximum torque level (MH), the induction time (T10), and the optimum vulcanization time (T90) were determined. Further, the fluorine-containing elastomer compositions were crosslinked by press crosslinking and oven crosslinking following the press crosslinking to give crosslinked formed article sheets.

Kneading method: Roll kneading
Press crosslinking: 160°C for 10 minutes
Oven crosslinking: 180°C for 4 hours

Materials shown in Table 3 and Table 5 are as follows.

MT carbon: Thermax N-990 manufactured by Cancarb Limited
TAIC: Triallyl isocyanurate, TAIC, manufactured by Nihon Kasei CO., LTD
Perhexa 25B: 2,5-Dimethyl-2,5-di(t-butylperoxy)hexane, manufactured by NOF CORPORATION

<Ordinary-state properties>

Using the crosslinked formed article sheets, test pieces having a dumbbell No. 6 shape were prepared in accordance with JIS K 6251, and the 100% modulus (M100), the tensile strength at break (TB), and the elongation at break (EB) of the prepared test pieces in ordinary state were measured.

<Hardness>

A test piece having a dumbbell No. 6 shape was prepared in the same manner as described above, and the hardness (Shore A) of the prepared test piece was measured in accordance with JIS K 6253 (a peak value, 1 sec, 3 sec).

<Permanent compression set>

Using the fluorine-containing elastomer compositions, press crosslinking and oven crosslinking were carried out under the above conditions to prepare O rings (P-24 size), and the permanent compression set of the prepared O

rings was measured in accordance with JIS K 6262 under conditions of 200°C, 72 hours, and a compressibility of 25%.
The results of the above measurements are shown in Table 3.

[Table 3]

Table 3

| | | | Example 1 | Example 2 | Example 3 | Comparative Example 1 | Comparative Example 2 |
|---|---|---|---|---|---|---|---|
| Formulation | Fluorine-containing elastomer | phr | 100 | 100 | 100 | 100 | 100 |
| | MT carbon | phr | 20 | 20 | 20 | 20 | 20 |
| | TAIC | phr | 4 | 4 | 4 | 4 | 4 |
| | Perhexa 258 | phr | 1.5 | 1.5 | 1.5 | 1.5 | 1.5 |
| Crosslinking characteristics 160°C | ML | dNm | 0.8 | 0.8 | 0.8 | 0.8 | 0.8 |
| | MH | dNm | 26.7 | 27.0 | 26.5 | 27.3 | 26.8 |
| | T10 | min | 1.1 | 1.2 | 1.2 | 1.2 | 1.2 |
| | T90 | min | 3.1 | 3.5 | 3.7 | 3.5 | 3.5 |
| Crosslinking conditions | Press crosslinking | | 160°C × 10 min | 160°C × 10 min | 160°C × 10 min | 160°C × 10 min | 160°C × 10 min |
| | Oven crosslinking | | 180°C × 4 h | 180°C × 4 h | 180°C × 4 h | 180°C × 4 h | 180°C × 4 h |
| Ordinary-state properties | M100 | MPa | 2.7 | 2.5 | 2.7 | 2.9 | 2.9 |
| | TB | MPa | 21.2 | 21.8 | 21.7 | 19.7 | 20.1 |
| | EB | % | 306 | 298 | 292 | 274 | 291 |
| Hardness | ShoreA peak | point | 67.5 | 66.6 | 66.8 | 67.7 | 67.0 |
| | ShoreA 1sec | point | 65.6 | 64.8 | 64.8 | 66.0 | 65.5 |
| | ShoreA 3sec | point | 64.7 | 63.9 | 63.8 | 65.2 | 646 |
| Permanent compression set | | % | 18.7 | 18.3 | 22.3 | 21.0 | 22.4 |

<Synthetic Exampe 3>

To a reactor, 100 g of 2,3,3,3-tetrafluoro-2((1,1,2-trifluoroallyloxy)propionic acid and 350 g of water were placed and heated to 85°C, to which was added a solution of ammonium persulfate (APS) in an amount corresponding to 20 mol% based on the amount of 2,3,3,3-tetrafluoro-2-((1,1,2-trifluoroallyloxy)propionic acid in 50 g of water, and then the mixture was stirred at 90°C for 3 hours.
The obtained fluoropolymer-containing aqueous solution was diluted by adding 482 g of water, and then subjected to ultrafiltration purification using an ultrafiltration membrane (a molecular weight cutoff of 6,000 Da, made of polysulfone) while pouring water as appropriate, thereby obtaining an aqueous solution of a fluoropolymer (polymer (I-3) solution) with a concentration of 7.5% by mass.
When the aqueous solution obtained by performing ultrafiltration was analyzed, the fluoropolymer had a weight average molecular weight (Mw) of $3.6 \times 10^4$ and a number average molecular weight (Mn) of $1.5 \times 10^4$. The content of the dimer and trimer in the aqueous solution obtained by performing ultrafiltration was 0.1% by mass or less based on the fluoropolymer. The content of the fractions with a molecular weight of 3,000 or less in the aqueous solution obtained by performing ultrafiltration was 0.1% by mass or less.

<Synthetic Example 4>

To a reactor, 150 g of $CF_2=CFOCF_2CF_2CO_2H$ and 300 g of water were added, and the liquid in the reactor was stirred at room temperature for 120 minutes with $N_2$ bubbling. While stirring at 52°C, ammonium persulfate (APS) in an amount corresponding to 4.0 mol% based on the amount of $CF_2=CFOCF_2CF_2CO_2H$ was added as appropriate to initiate the reaction. The reaction was terminated after stirring at 52°C for 96 hours and at room temperature for 74 hours in a $N_2$ flow. The oxygen concentration in the reactor fluctuated in the range of 30 ppm by volume to 80 ppm by volume.

Water was added to the resulting fluoropolymer-containing aqueous solution to regulate the fluoropolymer concentration to 3% by mass, and then the aqueous solution was brought into contact with an ultrafiltration membrane (a molecular weight cutoff of 6,000 Da, made of polysulfone) at 25°C at a water pressure of 0.1 MPa to perform ultrafiltration. While pouring water as appropriate, ultrafiltration was continued until a filtrate of water in an amount 4 times greater than the aqueous solution was eventually eluted, and thus an aqueous solution of a fluoropolymer (polymer (I-4) aqueous solution) was obtained. The concentration of the aqueous solution obtained by performing ultrafiltration was 1.6% by mass.

The aqueous solution obtained by performing ultrafiltration was analyzed. The resulting fluoropolymer had a weight average molecular weight (Mw) of $1.4 \times 10^4$ and a number average molecular weight (Mn) of $1.0 \times 10^4$. The content of the dimer and trimer in the aqueous solution obtained by performing ultrafiltration was 0.1% by mass or less based on the fluoropolymer. The content of the fractions with a molecular weight of 3,000 or less in the aqueous solution obtained by performing ultrafiltration was 0.6% by mass or less.

<Synthetic Example 5>

To a reactor, 170 g of $CF_2=CFOCF_2CF_2SO_3Na$ and 340 g of water were added, and the liquid in the reactor was stirred at room temperature for 120 minutes with $N_2$ bubbling. While stirring at 40°C, ammonium persulfate (APS) in an amount corresponding to 2.0 mol% based on the amount of $CF_2=CFOCF_2CF_2SO_3Na$ was added to initiate the reaction. The reaction was terminated after stirring at 40°C for 72 hours in a $N_2$ flow. The oxygen concentration in the reactor fluctuated in the range of 40 ppm by volume to 80 ppm by volume.

Water was added to the resulting fluoropolymer-containing aqueous solution to regulate the fluoropolymer concentration to 3.4% by mass, and then the aqueous solution was brought into contact with an ultrafiltration membrane (a molecular weight cutoff of 6,000 Da, made of polysulfone) at 25°C at a water pressure of 0.1 MPa to perform ultrafiltration. While pouring water as appropriate, ultrafiltration was continued until a filtrate of water in an amount 3 times greater than the aqueous solution was eventually eluted, and thus an aqueous solution of a fluoropolymer was obtained. The concentration of the aqueous solution obtained by performing ultrafiltration was 1.6% by mass.

The aqueous solution obtained by performing ultrafiltration was analyzed. The resulting fluoropolymer had a weight average molecular weight (Mw) of $1.0 \times 10^4$ and a number average molecular weight (Mn) of $0.8 \times 10^4$. The content of the dimer and trimer in the aqueous solution obtained by performing ultrafiltration was 0.1% by mass or less based on the fluoropolymer. The content of the fractions with a molecular weight of 3,000 or less in the aqueous solution obtained by performing ultrafiltration was 1.8% by mass or less.

230 ml of Amberlite (IR120B(H)-HG) was measured into a container, washed with water until there was no coloration, and then 500 ml of 1M-HCl was added and the mixture was stirred at room temperature for 1 hour. A column with a stopcock was filled with Amberlite and water was poured through it until the acidity of the effluent became neutral. The fluoropolymer-containing aqueous solution obtained in Synthetic Example 2 was fed into the column with a stopcock to initiate dropping. After the dropping was finished, water was poured until the dropping solution became neutral, and an aqueous solution of a fluoropolymer with $CF_2=CFOCF_2CF_2SO_3H$ as a repeating unit was obtained. The obtained aqueous solution had a concentration of 1.5% by mass. To this aqueous solution, a 1N ammonia water was added to adjust the pH to 6, and an aqueous solution of a fluoropolymer (polymer (I-5) aqueous solution) was obtained.

<Synthetic Example 6>

To a reactor, 6.32 g of sodium 1,1,2,2-tetrafluoro-2-((1,2,2-trifluorovinyl)oxy)ethane-1-sulfonate, 34 g of water, and ammonium persulfate (APS) in an amount corresponding to 1.5 mol% based on the amount of sodium 1,1,2,2-tetrafluoro-2-((1,2,2-trifluorovinyl)oxy)ethane-1-sulfonate were added, and after $N_2$ purge and degassing, 3.3 g of VdF was introduced and the mixture was stirred at 58°C for 3 hours in a sealed condition. The pressure inside the reactor increased to 0.35 MPaG after heating and decreased to 0.20 MPaG as the reaction proceeded.

The resulting fluoropolymer-containing aqueous solution was placed in a dialysis membrane (a molecular weight cutoff of 3,500 Da, made of cellulose) and brought into contact with water at room temperature to perform filtration, and thus an aqueous solution of a fluoropolymer (polymer (I-6) aqueous solution) was obtained. The concentration of the aqueous solution obtained by performing dialysis membrane purification was 2.5% by mass.

When the aqueous solution obtained by performing dialysis was analyzed by NMR to examine the polymer compositional features, the molar ratio of the polymerization unit derived from $CF_2$=$CFOCF_2CF_2SO_3Na$ to the polymerization unit derived from VdF contained in the polymer was 1.0/1.0 (mass ratio 82/18). The alternating ratio of the polymerization unit derived from $CF_2$=$CFOCF_2CF_2SO_3Na$ to the polymerization unit derived from VdF in the fluoropolymer was 66% or more. The resulting fluoropolymer had a weight average molecular weight (Mw) of $9.9 \times 10^4$ and a number average molecular weight (Mn) of $5.6 \times 10^4$. The content of the dimer and trimer in the aqueous solution obtained by performing dialysis was 0.1% by mass or less based on the fluoropolymer. The content of the fractions with a molecular weight of 3,000 or less in the aqueous solution obtained by performing dialysis was 0.1% by mass or less.

<Synthetic Example 7>

To a reactor, 6.14 g of sodium 1,1,2,2-tetrafluoro-2-((1,2,2-trifluorovinyl)oxy)ethane-1-sulfonate, 34 g of water, and ammonium persulfate (APS) in an amount corresponding to 5.0 mol% based on the amount of sodium 1,1,2,2-tetrafluoro-2-((1,2,2-trifluorovinyl)oxy)ethane-1-sulfonate were added, and after $N_2$ purge and degassing, 3.3 g of VdF was introduced and the mixture was stirred at 57°C for 1.7 hours in a sealed condition. The pressure inside the reactor increased to 0.35 MPaG after heating and decreased to 0.21 MPaG as the reaction proceeded.

The resulting fluoropolymer-containing aqueous solution was placed in a dialysis membrane (a molecular weight cutoff of 3,500 Da, made of cellulose) and brought into contact with water at room temperature to perform filtration, and thus an aqueous solution of a fluoropolymer (polymer (I-7) aqueous solution) was obtained. The concentration of the aqueous solution obtained by performing dialysis membrane purification was 2.4% by mass.

When the aqueous solution obtained by performing dialysis was analyzed by NMR to examine the polymer compositional features, the molar ratio of the polymerization unit derived from $CF_2$=$CFOCF_2CF_2SO_3Na$ to the polymerization unit derived from VdF contained in the polymer was 1.0/1.0 (mass ratio: 82/18). The alternating ratio of the polymerization unit derived from $CF_2$=$CFOCF_2CF_2SO_3Na$ to the polymerization unit derived from VdF in the fluoropolymer was 67% or more. The resulting fluoropolymer had a weight average molecular weight (Mw) of $8.0 \times 10^4$ and a number average molecular weight (Mn) of $4.5 \times 10^4$. The content of the dimer and trimer in the aqueous solution obtained by performing dialysis was 0.1% by mass or less based on the fluoropolymer. The content of the fractions with a molecular weight of 3,000 or less in the aqueous solution obtained by performing dialysis was 0.1% by mass or less.

<Synthetic Example 8>

To a reactor, 6.14 g of sodium 1,1,2,2-tetrafluoro-2-((1,2,2-trifluorovinyl)oxy)ethane-1-sulfonate, 34 g of water, and ammonium persulfate (APS) in an amount corresponding to 15 mol% based on the amount of sodium 1,1,2,2-tetrafluoro-2-((1,2,2-trifluorovinyl)oxy)ethane-1-sulfonate were added, and after $N_2$ purge and degassing, 3.1 g of VdF was introduced and the mixture was stirred at 61°C for 4.5 hours in a sealed condition. The pressure inside the reactor increased to 0.35 MPaG after heating and decreased to 0.30 MPaG as the reaction proceeded.

The resulting fluoropolymer-containing aqueous solution was placed in a dialysis membrane (a molecular weight cutoff of 3,500 Da, made of cellulose) and brought into contact with water at room temperature to perform filtration, and thus an aqueous solution of a fluoropolymer (polymer (I-8) aqueous solution) was obtained. The concentration of the aqueous solution obtained by performing dialysis membrane purification was 1.7% by mass.

When the aqueous solution obtained by performing dialysis was analyzed by NMR to examine the polymer compositional features, the molar ratio of the polymerization unit derived from $CF_2$=$CFOCF_2CF_2SO_3Na$ to the polymerization unit derived from VdF contained in the polymer was 1.0/0.5 (mass ratio: 90/10). The alternating ratio of the polymerization unit derived from $CF_2$=$CFOCF_2CF_2SO_3Na$ to the polymerization unit derived from VdF in the fluoropolymer was 47% or more. The resulting fluoropolymer had a weight average molecular weight (Mw) of $1.7 \times 10^4$ and a number average molecular weight (Mn) of $1.2 \times 10^4$. The content of the dimer and trimer in the aqueous solution obtained by performing dialysis was 0.1% by mass or less based on the fluoropolymer. The content of the fractions with a molecular weight of 3,000 or less in the aqueous solution obtained by performing dialysis was 0.1% by mass or less.

<Synthetic Example 9>

To a reactor, 2.56 g of sodium 1,1,2,2-tetrafluoro-2-((1,2,2-trifluorovinyl)oxy)ethane-1-sulfonate (a purity of 82.1%), 11.9 g of water, and ammonium persulfate (APS) in an amount corresponding to 5.0 mol% based on the amount of sodium 1,1,2,2-tetrafluoro-2-((1,2,2-trifluorovinyl)oxy) ethane-1-sulfonate were added, and after $N_2$ purge and degassing, 1.34 g of VdF was introduced and the mixture was stirred at 61°C for 7.5 hours in a sealed condition. The pressure inside the reactor increased to 0.35 MPaG after heating and decreased to 0.21 MPaG as the reaction proceeded.

The resulting fluoropolymer-containing aqueous solution was placed in a dialysis membrane (a molecular weight cutoff of 3,500 Da, made of cellulose) and brought into contact with water at room temperature to perform filtration, and

thus an aqueous solution of a fluoropolymer (polymer (I-9) aqueous solution) was obtained. The concentration of the aqueous solution obtained by performing dialysis membrane purification was 2.5% by mass.

When the aqueous solution obtained by performing dialysis was analyzed by NMR to examine the polymer compositional features, the molar ratio of the polymerization unit derived from $CF_2$=$CFOCF_2CF_2SO_3Na$ to the polymerization unit derived from VdF contained in the polymer was 1.0/0.9 (mass ratio: 84/16). The alternating ratio of the polymerization unit derived from $CF_2$=$CFOCF_2CF_2SO_3Na$ to the polymerization unit derived from VdF in the fluoropolymer was 59% or more. The resulting fluoropolymer had a weight average molecular weight (Mw) of $3.8 \times 10^4$ and a number average molecular weight (Mn) of $2.5 \times 10^4$. The content of the dimer and trimer in the aqueous solution obtained by performing dialysis was 0.1% by mass or less based on the fluoropolymer. The content of the fractions with a molecular weight of 3,000 or less in the aqueous solution obtained by performing dialysis was 0.1% by mass or less.

<Synthetic Example 10>

To a reactor, 6.32 g of $CF_2$=$CFOCF_2CF_2SO_3Na$, 34 g of water, and ammonium persulfate (APS) in an amount corresponding to 1.5 mol% based on the amount of $CF_2$=$CFOCF_2CF_2SO_3Na$ were added, 3.58 g of 1,2-difluoroethylene was introduced, and the mixture was stirred at 60°C for 7.5 hours in a sealed condition. The pressure inside the reactor decreased from 0.30 MPa to 0.23 MPa as the reaction proceeded.

The obtained aqueous solution containing a polymer (I-10) was placed in a dialysis membrane (a molecular weight cutoff of 3,500 Da, made of cellulose) and brought into contact with water at room temperature to perform dialysis, and thus an aqueous solution of the polymer (I-10) was obtained. The concentration of the polymer (I-10) in the aqueous solution obtained by performing dialysis membrane purification was 1.4% by mass.

When the aqueous solution obtained by performing dialysis was analyzed by NMR to examine the polymer compositional features, the molar ratio of the polymerization unit derived from $CF_2$=$CFOCF_2CF_2SO_3Na$ to the polymerization unit derived from 1,2-difluoroethylene contained in the polymer (I-10) was 1.0/1.1.

Also, the obtained polymer (I-10) had a weight average molecular weight (Mw) of $9.7 \times 10^4$ and a number average molecular weight (Mn) of $5.0 \times 10^4$. The content of the dimer and trimer of $CF_2$=$CFOCF_2CF_2SO_3Na$ in the aqueous solution obtained by performing dialysis was 0.1% or less based on the polymer (1-10). In addition, the content of the dimer and trimer constituted by $CF_2$=$CFOCF_2CF_2SO_3Na$ and CHF=CHF was 0.1% or less based on the fluoropolymer. The content of the fractions with a molecular weight of 3,000 or less in the aqueous solution obtained by performing dialysis was 0.1% by mass or less.

Moreover, as a result of TG-DTA analysis on a dried product of the obtained polymer (I-10), the initial decomposition temperature was 355°C.

Using the obtained polymer (I-10), several aqueous solutions with different content levels of the polymer (I-10) were prepared. The particle size was measured by dynamic light scattering (DLS) for each aqueous solution, and when the content of the polymer (I-10) was 8.2% by mass or less based on the aqueous solution, the particle size could not be measured, and when the content was 8.3% by mass or more, the particle size could be measured. Accordingly, the polymer (I-10) has high water solubility.

Example 4

1,490 g of deionized water, 0.93 g of a 10 mass% aqueous solution of $CH_2$=CF-$CF_2OCF$ ($CF_3$) $COONH_4$, and 10.0 g of the polymer (I-3) aqueous solution were added to a SUS polymerization tank having an internal volume of 3 L, the polymerization tank was hermetically sealed, and the system was purged with nitrogen to remove oxygen. The polymerization tank was heated to 80°C, and monomers (initial monomers) were introduced under pressure so as to attain a molar ratio of vinylidene fluoride [VDF]/tetrafluoroethylene [TFE]/hexafluoropropylene [HFP] (= 19/11/70 mol%) and an inner pressure of the polymerization tank of 1.47 MPaG while being stirred at 580 rpm, which is 1.45 times the stirring rotation speed of Example 1.

Then, a polymerization initiator aqueous solution prepared by dissolving 0.0255 g of ammonium persulfate (APS) in deionized water was introduced under nitrogen gas pressure to initiate the polymerization. When the inner pressure dropped to 1.44 MPaG as the polymerization proceeded, mixed monomers of VDF/TFE/HFP (= 50/20/30 mol%) were introduced such that the inner pressure was constant at 1.47 MPaG.

When 15 g of the mixed monomers were added, 2.19 g of a diiodine compound $I(CF_2)_4I$ was introduced under nitrogen gas pressure.

Then, 3.0 hours after the initiation of polymerization, 0.0255 g of a polymerization initiator aqueous solution of APS was introduced under nitrogen gas pressure.

When 477 g of the mixed monomers were added, stirring was stopped, and depressurization was carried out until the polymerization tank reached atmospheric pressure. The polymerization tank was cooled to give an aqueous dispersion. Table 4 shows the polymer adhesion rate, the solid concentration of the aqueous dispersion, the mass of

the aqueous dispersion, the average particle size, and the number of particles.

An aqueous aluminum sulfate solution was added to the aqueous dispersion to carry out coagulation. The resulting coagulated product was washed with water and dried to give a fluorine-containing elastomer. The Mooney viscosity of the fluorine-containing elastomer was ML1 + 10 (100°C) = 68.2. The copolymer compositional features were determined by NMR analysis to be VDF/TFE/HFP = 50/20/30 (mol%).

Example 5

Polymerization, coagulation, washing with water, and drying were carried out in the same manner as in Example 4, except that 1,490 g of deionized water was changed to 1,453.1 g of deionized water and 10.0 g of the polymer (I-3) aqueous solution was changed to 46.9 g of the polymer (I-4) aqueous solution, thereby obtaining a fluorine-containing elastomer. The Mooney viscosity of the fluorine-containing elastomer was ML1 + 10 (100°C) = 65.9. The copolymer compositional features were determined by NMR analysis to be VDF/TFE/HFP = 50/20/30 (mol%). Other results are shown in Table 4.

Example 6

Polymerization, coagulation, washing with water, and drying were carried out in the same manner as in Example 4, except that 1,490 g of deionized water was changed to 1,400 g of deionized water, 10.0 g of the polymer (I-3) aqueous solution was changed to 100.0 g of the polymer (I-5) aqueous solution, and 0.0255 g of the polymerization initiator aqueous solution of APS was introduced under nitrogen gas pressure at 6.0 hours after the initiation of polymerization, thereby obtaining a fluorine-containing elastomer. The Mooney viscosity of the fluorine-containing elastomer was ML1 + 10 (100°C) = 60.2. The copolymer compositional features were determined by NMR analysis to be VDF/TFE/HFP = 50/20/30 (mol%). Other results are shown in Table 4.

Example 7

Polymerization, coagulation, washing with water, and drying were carried out in the same manner as in Example 4, except that 1,490 g of deionized water was changed to 1,470.0 g of deionized water and 10.0 g of the polymer (I-3) aqueous solution was changed to 30.0 g of the polymer (I-6) aqueous solution, thereby obtaining a fluorine-containing elastomer. The Mooney viscosity of the fluorine-containing elastomer was ML1 + 10 (100°C) = 65.6. The copolymer compositional features were determined by NMR analysis to be VDF/TFE/HFP = 50/20/30 (mol%). Other results are shown in Table 4.

Example 8

Polymerization, coagulation, washing with water, and drying were carried out in the same manner as in Example 4, except that 1,490 g of deionized water was changed to 1,468.7 g of deionized water, 10.0 g of the polymer (I-3) aqueous solution was changed to 31.3 g of the polymer (I-7) aqueous solution, and 0.0255 g of the polymerization initiator aqueous solution of APS was introduced under nitrogen gas pressure at 6.0 hours after the initiation of polymerization, thereby obtaining a fluorine-containing elastomer. The Mooney viscosity of the fluorine-containing elastomer was ML1 + 10 (100°C) = 62.1. The copolymer compositional features were determined by NMR analysis to be VDF/TFE/HFP = 50/20/30 (mol%). Other results are shown in Table 4.

Example 9

Polymerization, coagulation, washing with water, and drying were carried out in the same manner as in Example 4, except that 1,490 g of deionized water was changed to 1,455.9 g of deionized water, 10.0 g of the polymer (I-3) aqueous solution was changed to 44.1 g of the polymer (I-8) aqueous solution, and 0.0255 g of the polymerization initiator aqueous solution of APS was introduced under nitrogen gas pressure at 6.0 hours after the initiation of polymerization, thereby obtaining a fluorine-containing elastomer. The Mooney viscosity of the fluorine-containing elastomer was ML1 + 10 (100°C) = 63.8. The copolymer compositional features were determined by NMR analysis to be VDF/TFE/HFP = 50/20/30 (mol%). Other results are shown in Table 4.

Example 10

Polymerization, coagulation, washing with water, and drying were carried out in the same manner as in Example 4, except that 1,490 g of deionized water was changed to 1,477.9 g of deionized water, 10.0 g of the polymer (I-3)

aqueous solution was changed to 22.1 g of the polymer (I-8) aqueous solution, and 0.0255 g of the polymerization initiator aqueous solution of APS was introduced under nitrogen gas pressure at 6.0 hours after the initiation of polymerization, thereby obtaining a fluorine-containing elastomer. The Mooney viscosity of the fluorine-containing elastomer was ML1 + 10 (100°C) = 63.7. The copolymer compositional features were determined by NMR analysis to be VDF/TFE/HFP = 50/20/30 (mol%). Other results are shown in Table 4.

Example 11

Polymerization, coagulation, washing with water, and drying were carried out in the same manner as in Example 4, except that 1,490 g of deionized water was changed to 1,470.0 g of deionized water, 10.0 g of the polymer (I-3) aqueous solution was changed to 30.0 g of the polymer (I-9) aqueous solution, and 0.0255 g of the polymerization initiator aqueous solution of APS was introduced under nitrogen gas pressure at 6.0 hours after the initiation of polymerization, thereby obtaining a fluorine-containing elastomer. The Mooney viscosity of the fluorine-containing elastomer was ML1 + 10 (100°C) = 63.0. The copolymer compositional features were determined by NMR analysis to be VDF/TFE/HFP = 50/20/30 (mol%). Other results are shown in Table 4.

Example 12

1,446 g of deionized water, 0.93 g of a 10 mass% aqueous solution of $CH_2=CF-CF_2OCF(CF_3)COONH_4$, and 53.57 g of the aqueous solution of the polymer (I-10) (the aqueous solution of the polymer (I-10) obtained by performing dialysis (the content of the polymer (I-10) was 1.4% by mass)) were added to a SUS polymerization tank having an internal volume of 3 L, the polymerization tank was hermetically sealed, and the system was purged with nitrogen to remove oxygen. The polymerization tank was heated to 80°C, and monomers (initial monomers) were introduced under pressure so as to attain a molar ratio of vinylidene fluoride [VDF]/tetrafluoroethylene [TFE]/hexafluoropropylene [HFP] (= 19/11/70 mol%) and an inner pressure of the polymerization tank of 1.47 MPaG while being stirred.

Then, a polymerization initiator aqueous solution prepared by dissolving 0.026 g of ammonium persulfate (APS) in deionized water was introduced under nitrogen gas pressure to initiate the polymerization. When the inner pressure dropped to 1.45 MPaG as the polymerization proceeded, mixed monomers of VDF/TFE/HFP (= 50/20/30 mol%) were introduced such that the inner pressure was constant at 1.47 MPaG.

When 14 g of the mixed monomers were added, 2.19 g of a diiodine compound $I(CF_2)_4I$ was introduced under nitrogen gas pressure.

Each time at 3.0 hours and 6.0 hours after the initiation of polymerization, 0.026 g of a polymerization initiator aqueous solution of APS was introduced under nitrogen gas pressure.

When 477 g of the mixed monomers were added, stirring was stopped, and depressurization was carried out until the polymerization tank reached atmospheric pressure. The polymerization tank was cooled to give an aqueous dispersion.

An aqueous aluminum sulfate solution was added to the aqueous dispersion to carry out coagulation. The resulting coagulated product was washed with water and dried to give a fluoroelastomer. The copolymer compositional features were determined by NMR analysis to be VDF/TFE/HFP = 50/20/30 (mol%). Other results are shown in Table 4.

Comparative Example 3

Polymerization, coagulation, washing with water, and drying were carried out in the same manner as in Example 5, except that 0.93 g of the 10 mass% aqueous solution of $CH_2=CF-CF_2OCF(CF_3)COONH_4$ was not added and 0.0255 g of the polymerization initiator aqueous solution of APS was introduced under nitrogen gas pressure at 6.0 hours and 9.0 hours after the initiation of polymerization, thereby obtaining a fluorine-containing elastomer. The Mooney viscosity of the fluorine-containing elastomer was ML1 + 10 (100°C) = 54.7. The copolymer compositional features were determined by NMR analysis to be VDF/TFE/HFP = 50/20/30 (mol%). Other results are shown in Table 4.

[Table 4]

**Table 4**

| | | Example 4 | Example 5 | Example 6 | Example 7 | Example 8 | Example 9 | Example 10 | Example 11 | Example 12 | Comparative Example 3 |
|---|---|---|---|---|---|---|---|---|---|---|---|
| **Polymer (I)** | | **Polymer (I-3)** | **Polymer (I-4)** | **Polymer (I-5)** | **Polymer (I-6)** | **Polymer (I-7)** | **Polymer (I-8)** | **Polymer (I-8)** | **Polymer (I-9)** | **Polymer (I-10)** | **Polymer (I-4)** |
| **Compound (A)** | | **Compound (A-1)** | **Compound (A-1)** | **Compound (A-1)** | **Compound (A-1)** | **Compound (A-1)** | **Compound (A-1)** | **Compound (A-1)** | **Compound (A-1)** | **Compound (A-1)** | - |
| **Reaction time** | mr | 314 | 325 | 393 | 378 | 402 | 390 | 372 | 387 | 378 | 706 |
| **Polymer adhesion rate** | % by mass | 0.70 | 0.53 | 1.34 | 0.62 | 0.55 | 0.36 | 0.77 | 0.70 | 0.51 | 1.43 |
| **Sold concentration** | % by mass | 23.0 | 23.2 | 22.9 | 22.5 | 22.8 | 23.0 | 22.9 | 22.8 | 22.7 | 22.8 |
| **Mass of aqueous dispersion** | g | 1937 | 1941 | 1938 | 1933 | 1940 | 1940 | 1936 | 1944 | 1944 | 1930 |
| **Average particle size** | nm | 137 | 142 | 142 | 134 | 137 | 139 | 132 | 136 | 132 | 232 |
| **Number of particles** | particles/cc | $1,22 \times 10^{14}$ | $1.11 \times 10^{14}$ | $1.09 \times 10^{14}$ | $1.29 \times 10^{14}$ | $1.21 \times 10^{14}$ | $1.18 \times 10^{14}$ | $1.35 \times 10^{14}$ | $1.23 \times 10^{14}$ | $13.4 \times 10^{14}$ | $2.48 \times 10^{13}$ |

**Polymer** (I-3): homopolymer of 2,3,3,3-tetrafluoro-2-((1,1,2-trifluroallyoxy)propionic acid
**Polymer** (I-4): homopolymer of $CF_2=CFOCF_2CO_2H$
**Polymer** (I-5) homopolymer of $CF_2=CFOCF_2CF_2SO_3NH_4$
**Polymer** (I-6) copolymer of VdF and $CF_2=CFOCF_2CF_2SO_3Na$
**Polymer** (I-7) copolymer of VdF and $CF_2=CFOCF_2\text{-}CF_2SO_3Na$
**Polymer** (I-8) copolymer of VdF and $CF_2=CFOCF_2CF_2SO_3Na$
**Polymer** (I-9) copolymer of VdF and $CF_2=CFOCF_2CF_2SO_3Na$
**Polymer** (I-10) copolymer of 1,2-difluoroethylene and $CF_2=CFOCF_2CF_2SO_3Na$
Compound (A-1): $CH_2=CF\text{-}CF_2OCF(CF_3)COONH_4$

The fluorine-containing elastomers obtained as described above were tested by the same method as in Example 1, and the crosslinking characteristics, ordinary-state properties, hardness, and permanent compression set were measured.

The results of the above measurements are shown in Table 5.

[Table 5]

**Table 5**

| | | | Example 4 | Example 5 | Example 6 | Example 7 | Example 8 | Example 9 | Example 10 | Example 11 | Example 12 | Comparative Example 3 |
|---|---|---|---|---|---|---|---|---|---|---|---|---|
| FormUaton | Fluorine-containing elasfomer | phr | 100 | 100 | 100 | 100 | 100 | 100 | 100 | 100 | 100 | 100 |
| | MT carbon | phr | 20 | 20 | 20 | 20 | 20 | 2C | 20 | 20 | 20 | 20 |
| | TAIC | phr | 4 | 4 | 4 | 4 | 4 | 4 | 4 | 4 | a | 4 |
| | Pemexa258 | phr | 1.5 | 1.5 | 1.5 | 1.5 | 1.5 | 1.5 | 1.5 | 1.5 | 15 | 1.5 |
| Crosslinking characteristics 160°C | ML | dNm | 1.2 | 1.0 | 1.0 | 1.0 | 1.0 | 1.1 | 1.0 | 1.0 | 0.9 | 0.8 |
| | MH | dNm | 26.5 | 28.0 | 25.0 | 25.4 | 23.9 | 25.0 | 25.2 | 23.5 | 10.5 | 25.7 |
| | T10 | min | 1.2 | 1.1 | 1.3 | 1.2 | 1.2 | 1.2 | 1.1 | 1.2 | 1.4 | 1.2 |
| | T90 | mn | 3.7 | 3.1 | 5.4 | 5.0 | 7.7 | 4.1 | 3.4 | 5.5 | 11.8 | 3.5 |
| Crosslinking conditions | Press crosslinking | | 160°C × 10 min | 160°C × 10 min | 160°C × 10min | 160°C × 10min | 160°C × 30min | 160°C × 10min | 160°C × 10min | 160°C × 10min | 160°C × 30min | 160°C × 10min |
| | Oven crosslinking | | 180°C × 4 h | 180°C × 4 h | 180°C × 4 h | 180°C × 4 h | 180°C × 4 h | 180°C × 4h | 180°C × 4 h | 180°C × 4 h | 180°C × 4 h | 180°C × 4 h |
| Ordinary-state properties | M100 | MPa | 2.8 | 3.0 | 2.8 | 2.9 | 2.7 | 2.8 | 2.8 | 2.8 | 2.6 | 3.0 |
| | TB | MPa | 19.8 | 21.9 | 25.6 | 22.4 | 22.5 | 22.6 | 21.5 | 21.2 | 18.7 | 23.6 |
| | EB | % | 294 | 283 | 359 | 324 | 366 | 331 | 298 | 306 | 406 | 325 |
| Hardness | ShoreA peak | point | 67.1 | 68.0 | 61.4 | 66.9 | 68.3 | 67.9 | 66.8 | 68.2 | 69.1 | 66.6 |
| | ShoreA 1sec | point | 65.4 | 66.3 | 65.6 | 66.8 | 66.6 | 66.4 | 64.9 | 66.3 | 67.0 | 66.8 |
| | ShoreA 3sec | point | 64.4 | 65.4 | 64.7 | 65.9 | 65.6 | 65.6 | 63.8 | 65.5 | 65.8 | 65.9 |
| Permanent compression set | | % | 20.0 | 21.7 | 23.2 | 24.2 | 31.0 | 25.8 | 22.7 | 28.8 | 39.2 | 23.2 |

## Claims

1. A method for producing a fluorine-containing elastomer aqueous dispersion, comprising polymerizing a fluorine-containing monomer in the presence of a compound (A) containing a functional group capable of reaction by radical polymerization and a hydrophilic group, a polymer (I) containing a polymerization unit (I) derived from a monomer (I) represented by general formula (I), and an aqueous medium, thereby producing an aqueous dispersion of a fluorine-containing elastomer containing methylene group in a main chain:

General formula (I) : $CX^1X^3=CX^2R(-CZ^2Z^2-A^0)$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

2. The production method according to claim 1, wherein the hydrophilic group of the compound (A) is $-NH_2$, $-P(O)(OM)_2$, $-OP(O)(OM)_2$, $-SO_3M$, $-OSO_3M$, -COOM, $-B(OM)_2$, or $-OB(OM)_2$, where M is H, a metal atom, $NR^7_4$, imidazolium optionally having a substituent, pyridinium optionally having a substituent, or phosphonium optionally having a substituent; and $R^7$ is H or an organic group and optionally the same or different, and any two are optionally bonded to each other to form a ring.

3. The production method according to claim 1 or 2, wherein the compound (A) is at least one compound selected from the group consisting of (A0) a fluorine-containing compound containing a functional group capable of reaction by radical polymerization and a hydrophilic group, (A1) a compound having a triple bond and a hydrophilic group, (A2) a fluorine-containing compound represented by general formula (A2), (A3) a fluorine-free compound represented by general formula (A3), (A4) a compound having an aromatic ring, a hydrophilic group, and an unsaturated double bond, and (A5) a fluorine-free compound represented by general formula (A5):

General formula (A2) : $CX^1X^2=CX^3-Z$

wherein $X^1$ to $X^3$ are each independently H, F, or a fluorine-containing alkyl group; when $X^1$ and $X^2$ are both H, $X^3$ is F or a fluorine-containing alkyl group; Z is a group represented by -COOM, $-SO_3M$, $-OSO_3M$, $-PO(OM)_2$, $-OPO(OM)_2$, $-BO(OM)_2$, or $-OBO(OM)_2$; M is H, a metal atom, $NR^1_4$, imidazolium optionally having a substituent, pyridinium optionally having a substituent, or phosphonium optionally having a substituent; and $R^1$ is independently H or an organic group, and any two $R^1$ are optionally bonded to each other to form a ring;

General formula (A3) : $CR^1X^1=CX^2-R^2-COOM$

wherein $R^1$ is H or an alkyl group that optionally contains an ether bond, an ester bond, or an amide bond; $R^2$ is a single bond or an alkylene group in which at least one hydrogen atom bonded to a carbon atom is optionally replaced with a group represented by $-R^3-COOM$ ($R^3$ is a single bond or an alkylene group) and which optionally contains an ether bond, an ester bond, an amide bond, an unsaturated bond, or a cyclic structure; $X^1$ and $X^2$ are each independently a group represented by $-R^1$ ($R^1$ is as described above) or $-R^2-COOM$ ($R^2$ is as described above); M is H, a metal atom, $NR^4_4$, imidazolium optionally having a substituent, pyridinium optionally having a substituent, or phosphonium optionally having a substituent; and $R^4$ is independently H or an organic group, and any two $R^4$ are optionally bonded to each other to form a ring;

General formula (A5) : $CX^1X^2=CX^3-R-Z$

wherein $X^1$, $X^2$, and $X^3$ are each independently H or an alkyl group; R is a single bond or an alkylene group; the total number of carbon atoms in $X^1$, $X^2$, X3, and R is 0 to 5; Z is $-SO_3M$, $-OSO_3M$, $-P(=O)(OM)_2$, $-OP(O)(OM)_2$, or $-B(OM)_2$; M is H, a metal atom, $NR^1_4$, imidazolium optionally having a substituent, pyridinium optionally having a substituent, or phosphonium optionally having a substituent; and $R^1$ is independently H or an organic group, and any two $R^1$ are optionally bonded to each other to form a ring.

4. The production method according to any one of claims 1 to 3, wherein the compound (A) is (A0) a fluorine-containing compound represented by general formula (A0):

General formula (A0) : $CX^iX^k=CX^jR^a-(CZ^1Z^2)_k-Y^3$

wherein $X^i$, $X^j$, and $X^k$ are each independently F, Cl, H, or $CF_3$; $Y^3$ is a hydrophilic group; $R^a$ is a linking group; $Z^1$ and $Z^2$ are each independently H, F, or $CF_3$; and k is 0 or 1, provided that at least one of $X^i$, $X^k$, $X^j$, $R^a$, $Z^1$, and $Z^2$ contains F, and provided that when k is 0, $R^a$ is a linking group other than a single bond.

5. The production method according to any one of claims 1 to 4, wherein an amount of the compound (A) is 3 to 5,000 ppm by mass based on the aqueous medium.

6. The production method according to any one of claims 1 to 5, wherein the polymer (I) is a polymer (2) containing a polymerization unit (2) derived from a monomer (2) represented by general formula (2):

$$CX_2=CY(-O-Rf-A) \qquad (2)$$

wherein X is the same or different and is -H or F; Y is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond or a keto group; and A is -COOM, $-SO_3M$, $-OSO_3M$, or $-C(CF_3)_2OM$, where M is -H, a metal atom, $-NR^7_4$, imidazolium optionally having a substituent, pyridinium optionally having a substituent, or phosphonium optionally having a substituent, and $R^7$ is H or an organic group.

7. The production method according to any one of claims 1 to 6, wherein the polymer (I) further contains a polymerization unit derived from a further monomer copolymerizable with the monomer (I).

8. The production method according to any one of claims 1 to 7, wherein an amount of the polymer (I) is 0.0001 to 2% by mass based on 100% by mass of the aqueous medium.

9. The production method according to any one of claims 1 to 8, wherein the fluorine-containing monomer is polymerized also in the presence of a chain transfer agent.

10. The production method according to any one of claims 1 to 9, wherein the fluorine-containing monomer is polymerized at 10 to 120°C.

11. The production method according to any one of claims 1 to 10, wherein the fluorine-containing monomer is polymerized at 0.5 to 10 MPaG.

12. The production method according to any one of claims 1 to 11, wherein the fluorine-containing monomer is polymerized substantially in the absence of a fluorine-containing surfactant not having a functional group capable of reaction by radical polymerization.

13. The production method according to any one of claims 1 to 12, wherein the fluorine-containing elastomer contains vinylidene fluoride unit.

14. The production method according to any one of claims 1 to 13, wherein the fluorine-containing elastomer contains 50 mol% or more of vinylidene fluoride unit based on all monomer units.

15. The production method according to any one of claims 1 to 14, wherein the fluorine-containing elastomer has a Mooney viscosity (ML1 + 10 (100°C)) of 10 to 130.

16. A composition comprising: a fluorine-containing elastomer containing methylene group in a main chain and further containing a monomer unit (A) derived from a compound (A) containing a functional group capable of reaction by radical polymerization and a hydrophilic group; and a polymer (I) containing a polymerization unit (I) derived from a monomer (I) represented by general formula (I):

$$\text{General formula (I)}: \qquad CX^1X^3=CX^2R(-CZ^1Z^2-A^0)_m$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

**17.** The composition according to claim 16, wherein the fluorine-containing elastomer contains vinylidene fluoride unit.

**18.** An aqueous dispersion comprising the composition according to claim 16 or 17 and an aqueous medium.

**INTERNATIONAL SEARCH REPORT**

International application No.
**PCT/JP2022/023337**

**A. CLASSIFICATION OF SUBJECT MATTER**

***C08F 259/08***(2006.01)i; ***C08F 2/44***(2006.01)i
FI: C08F259/08; C08F2/44 C

According to International Patent Classification (IPC) or to both national classification and IPC

**B. FIELDS SEARCHED**

Minimum documentation searched (classification system followed by classification symbols)

C08F259/08; C08F2/44

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY

**C. DOCUMENTS CONSIDERED TO BE RELEVANT**

| Category* | Citation of document, with indication, where appropriate, of the relevant passages | Relevant to claim No. |
|---|---|---|
| Y | WO 2019/168183 A1 (DAIKIN INDUSTRIES, LTD.) 06 September 2019 (2019-09-06) claims, paragraphs [0001]-[0201], [0384]-[0428], [0429]-[0443], [0501]-[0549] | 1-18 |
| Y | WO 2021/010443 A1 (DAIKIN INDUSTRIES, LTD.) 21 January 2021 (2021-01-21) claims, paragraphs [0063], [0110], [0112], [0499]-[0563] | 1-18 |
| Y | WO 2008/001895 A1 (DAIKIN INDUSTRIES, LTD.) 03 January 2008 (2008-01-03) claims, paragraphs [0009], [0011], [0020], [0055]-[0086] | 1-18 |
| A | JP 2-70706 A (ASAHI GLASS CO., LTD.) 09 March 1990 (1990-03-09) entire text | 1-18 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 August 2022** | **16 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/023337**

| Patent document cited in search report | Publication date (day/month/year) | Patent family member(s) | Publication date (day/month/year) |
|---|---|---|---|
| WO 2019/168183 A1 | 06 September 2019 | US 2020/0392266 A1<br>claims 1-14, paragraphs [0001]-[0384], [0673]-[0880], [0881]-[0977] | |
| WO 2021/010443 A1 | 21 January 2021 | JP 2021-46531 A<br>claims, paragraphs [0063], [0110], [0112], [0499]-[0563] | |
| WO 2008/001895 A1 | 03 January 2008 | US 2009/0234086 A1<br>claims 1-8, paragraphs [0013], [0015], [0020], [0111]-[0185] | |
| JP 2-70706 A | 09 March 1990 | US 5447982 A<br>entire text | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2019168183 A
- JP 2020510737 W
- JP 2020512447 W
- US 20070015864
- US 20070015865
- US 20070015866
- US 20070276103
- US 20070117914
- US 20070142541
- US 20080015319
- US 3250808 A
- US 3271341 A
- JP 2003119204 A
- WO 2005042593 A
- WO 2008060461 A
- WO 2007046377 A
- JP 2007119526 A
- WO 2007046482 A
- WO 2007046345 A
- US 20140228531
- WO 2013189824 A
- WO 2013189826 A
- JP 53003495 A
- JP 2011520020 W
- US 20070015937
- US 20070025902
- US 20070027251
- JP 11147891 A
- WO 2014099453 A
- WO 2010075497 A
- WO 2010075496 A
- WO 2011008381 A
- WO 2009055521 A
- WO 1987007619 A
- JP 61293476 A
- WO 2010075494 A
- WO 2010075359 A
- WO 2012082454 A
- WO 2006119224 A
- WO 2013085864 A
- WO 2012082707 A
- WO 2012082703 A
- WO 2012082451 A
- WO 2006135825 A
- WO 2004067588 A
- WO 2009068528 A
- JP 2004075978 A
- JP 2001226436 A
- WO 1992017635 A
- WO 2014069165 A
- JP 11181009 A
- JP 2013216915 A
- JP 2019094430 A

### Non-patent literature cited in the description

- **KOBUNSHI RONBUNSHU.** *Japanese Journal of Polymer Science and Technology,* October 1992, vol. 49 (10), 765-783